# EUROPÄISCHE PATENTANMELDUNG

(11) **EP 4 235 007 A1**
(43) Veröffentlichungstag der Anmeldung: **30.08.2023**
(21) Anmeldenummer: 23158472.3
(22) Anmeldetag: 24.02.2023
(51) Int. Cl.: F16L 37/38, F16K 25/00, F16K 27/02, F16L 59/18

(54) **VORRICHTUNG ZUM EINLEITEN EINES FLUIDS IN EINEN ANSCHLUSS**

(30) Priorität: 25.02.2022 DE 102022104644; 25.02.2022 DE 102022104642; 25.02.2022 DE 102022104643; 25.02.2022 DE 102022104635; 25.02.2022 DE 102022104636; 25.02.2022 DE 102022104637; 25.02.2022 DE 102022104638; 25.02.2022 DE 102022104639; 25.02.2022 DE 102022104641; 25.02.2022 DE 102022104640
(71) Anmelder: Cryotherm GmbH & Co. KG, 57548 Kirchen/Siegen (DE)
(72) Erfinder: Gottschlich, Bernd, 57518 Betzdorf (DE)
(74) Vertreter: Schwenderling, Jens

(57) **Zusammenfassung**

Vorrichtung (2) zum Einleiten eines Fluids in einen Anschluss (100), umfassend
- eine Fluidquelle (200),
- eine Abgabeleitung (201), und
- eine zumindest teilweise vakuumisolierte Anschlusseinrichtung (202) mit einem

Stutzen (208) zum Anschließen der Abgabeleitung (201) an den Anschluss (100), wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
wobei das Ventil (206) und der Ventilantrieb (207) auf einer Hauptachse (211) der Anschlusseinrichtung (202) voneinander beabstandet angeordnet sind und über eine entlang der Hauptachse (211) ausgebildete Stange (213) mechanisch miteinander gekoppelt sind, wobei die Stange (213) mehrere Stangenabschnitte (242,243,244,245) aufweist, wobei ein erster der Stangenabschnitte (242) näher an dem Ventil (206) angeordnet ist als ein zweiter der Stangenabschnitte (243), und wobei der erste Stangenabschnitt (242) eine höhere thermische Leitfähigkeit hat als der zweite der Stangenabschnitt (243).

## Beschreibung

Die Erfindung betrifft eine Vorrichtung zum Einleiten eines Fluids in einen Anschluss, eine Anordnung umfassend eine solche Vorrichtung, ein Verfahren zum Betanken eines Fahrzeugs sowie eine Anschlusseinrichtung. Die Erfindung kann insbesondere genutzt werden, um Fahrzeuge mit flüssigem Wasserstoff zu betanken.

Mit der Energiewende sollen konventionelle Energieträger wie fossile Brennstoffe zunehmend durch Alternativen ersetzt werden. In zahlreichen Anwendungen sind dafür verflüssigte Gase vielversprechend. Beispielsweise können Fahrzeuge mit flüssigem Wasserstoff angetrieben werden. Allerdings erfordern solche und zahlreiche andre Anwendungen tiefe Temperaturen und/oder hohe Drücke. Das erschwert die Handhabung. Beispielsweise das Betanken eines Fahrzeugs mit flüssigem Wasserstoff soll aber für einen Benutzer sicher, einfach und schnell sein. Das dabei eingesetzte Equipment der Tankstelle soll ebenso günstig und zuverlässig sein wie der entsprechende Anschluss am Fahrzeug. Entsprechendes gilt allgemein für viele Anwendungen, bei denen ein Fluid von einer Leitung in eine andere übergeben werden soll. Bekannte Lösungen dafür sind aber hinsichtlich der genannten Anforderungen unzureichend.

Aufgabe der vorliegenden Erfindung ist es, ausgehend vom beschriebenen Stand der Technik eine günstige und zuverlässige Vorrichtung vorzustellen, mit der ein Fluid sicher, einfach und schnell in einen Anschluss eingeleitet werden kann. Zudem soll eine entsprechende Anordnung vorgestellt werden. Weiterhin soll ein Verfahren vorgestellt werden, mit dem ein Fahrzeug sicher, einfach und schnell mit einem Fluid betankt werden kann. Außerdem soll eine günstige und zuverlässige Anschlusseinrichtung vorgestellt werden, mit welcher eine Leitung sicher, einfach und schnell an einen Anschluss angebunden werden kann.

Aufgabe der vorliegenden Erfindung ist es zudem, ausgehend vom beschriebenen Stand der Technik eine günstige und zuverlässige Anordnung mit einem Fluidtank und einem Anschluss vorzustellen, in welchen ein Fluid sicher, einfach und schnell eingeleitet werden kann. Zudem soll ein Verfahren vorgestellt werden, mit dem ein Fahrzeug sicher, einfach und schnell mit einem Fluid betankt werden kann. Außerdem soll ein günstiger und zuverlässiger Anschluss vorgestellt werden, an welchen eine Leitung sicher, einfach und schnell angebunden werden kann.

### Abschnitt 1 (10 2022 104 644.3)

Die zu lösenden Aufgaben werden gelöst mit der Vorrichtung, der Anordnung, dem Verfahren und der Anschlusseinrichtung gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei das Ventil und der Ventilantrieb auf einer Hauptachse der Anschlusseinrichtung voneinander beabstandet angeordnet sind und über eine entlang der Hauptachse ausgebildete Stange mechanisch miteinander gekoppelt sind, wobei die Stange mehrere Stangenabschnitte aufweist, wobei ein erster der Stangenabschnitte näher an dem Ventil angeordnet ist als ein zweiter der Stangenabschnitte, und wobei der erste Stangenabschnitt eine höhere thermische Leitfähigkeit hat als der zweite der Stangenabschnitt.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Das Ventil weist vorzugsweise einen Ventilstempel und eine Ventilöffnung auf. Ist das Ventil geschlossen, verschließt der Ventilstempel vorzugsweise die Ventilöffnung. Ist das Ventil geöffnet, gibt der Ventilstempel die Ventilöffnung vorzugsweise frei. In dem Fall kann das Fluid durch das Ventil strömen, indem das Fluid durch die Ventilöffnung strömt. Die Ventilöffnung kann insoweit auch als eine Öffnung des Innenraums der Anschlusseinrichtung aufgefasst werden. Die Ventilöffnung ist vorzugsweise an einer ersten Seite des Ventils angeordnet. Der Innenraum der Anschlusseinrichtung ist vorzugsweise an einer zweiten Seite des Ventils an das Ventil angebunden.

Der Ventilstempel ist vorzugsweise entlang einer Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des Ventilstempels und/oder mit der Hauptachse der Anschlusseinrichtung zusammen. Die Ventilöffnung ist vorzugsweise senkrecht zur Ventilachse ausgebildet. Ein Mittelpunkt der Ventilöffnung liegt vorzugsweise auf der Ventilachse. Vorzugsweise ist der Ventilstempel nicht über die erste Endposition hinaus und/oder nicht über die zweite Endposition hinaus beweglich. Das kann durch einen oder mehrere entsprechende Anschläge erreicht werden. Der Ventilstempel verschließt vorzugsweise in seiner zweiten Endposition die Ventilöffnung. Insoweit ist das Ventil verschlossen, wenn sich der Ventilstempel in seiner zweiten Endposition befindet. Ist der Ventilstempel in seiner ersten Endposition, gibt der Ventilstempel die Ventilöffnung vorzugsweise frei. Insoweit ist das Ventil geöffnet, wenn sich der Ventilstempel in seiner ersten Endposition befindet. Das Ventil ist allerdings vorzugsweise nicht nur dann geöffnet, wenn sich der Ventilstempel in seiner ersten Endposition befindet. Befindet sich der Ventilstempel zwischen seiner ersten Endposition und seiner zweiten Endposition, ist das Ventil vorzugsweise teilweise geöffnet.

Das Ventil und der Ventilantrieb sind auf einer Hauptachse der Anschlusseinrichtung voneinander beabstandet angeordnet. Die Anschlusseinrichtung ist vorzugsweise zumindest teilweise rotationssymmetrisch um die Hauptachse ausgebildet. Beispielsweise kann die Anschlusseinrichtung eine Begrenzung eines Innenraums aufweisen, welche als eine um die Hauptachse umlaufende Wand ausgebildet ist. Der Anschluss kann vorzugsweise in einer Richtung parallel zur Hauptachse mit der Anschlusseinrichtung verbunden werden.

Der Ventilantrieb und das Ventil sind über eine entlang der Hauptachse ausgebildete Stange mechanisch miteinander gekoppelt. Vorzugsweise sind der Ventilantrieb und das Ventil starr über die Stange miteinander gekoppelt. Eine Bewegung des Ventilantriebs bewirkt folglich eine Bewegung des Ventilstempels. Der Ventilantrieb kann beispielsweise einen Zylinder mit einem Kolben aufweisen, wobei der Kolben beispielsweise pneumatisch innerhalb des Zylinders beweglich ist. Dies ist eine robuste und einfache Ausgestaltung.

Fluide liegen oft bei tiefen Temperaturen vor. Um dem besonders gut standhalten zu können, ist die Stange insoweit mehrteilig ausgebildet, als dass die Stange mehrere Stangenabschnitte aufweist. Unter einem Stangenabschnitt ist ein Teil der Stange zu verstehen, der einen axialen Abschnitt der Stange bildet. Die Stange kann als axial in die Stangenabschnitte unterteilt angesehen werden, wobei sich benachbarte der Stangenabschnitte überlappen können. Letzteres ist insbesondere deshalb sinnvoll, weil die Stangenabschnitte so stabil aneinandergehalten sein können. Beispielsweise können benachbarte der Stangenabschnitte ineinandergesteckt und insoweit miteinander verbunden sein. Benachbarte der Stangenabschnitte müssen nicht durch eine klar erkennbare Bauteilgrenze voneinander abgegrenzt sein. Es genügt, dass die Stange für jeden der beschriebenen Stangenabschnitte jeweils einen Teil aufweist, der die jeweils beschriebenen Eigenschaften aufweist.

Aufgrund der Unterteilung der Stange in die beschriebenen Stangenabschnitte kann die Stange verschiedene Funktionen besonders gut erfüllen. Insbesondere kann die Stange den Ventilantrieb und das Ventil zuverlässig miteinander koppeln und zugleich zur thermischen Isolation der Anschlusseinrichtung beitragen. Dazu trägt insbesondere bei, dass die Stange einen ersten Stangenabschnitt und einen zweiten Stangenabschnitt aufweist. Der erste Stangenabschnitt ist näher an dem Ventil angeordnet als der zweite Stangenabschnitt. Der erste Stangenabschnitt hat eine höhere thermische Leitfähigkeit als der zweite der Stangenabschnitte. Der zweite Stangenabschnitt kann daher zu einer thermischen Isolation zwischen dem kalten Fluid und der Außenseite der Anschlusseinrichtung beitragen. Der zweite Stangenabschnitt ist vorzugsweise aus einem Kunststoff gebildet, insbesondere aus glasfaserverstärktem Kunststoff (GFK). Für den ersten Stangenabschnitt kann ein robusteres Material verwendet werden, welches den tiefen Temperaturen des Fluids besonders gut standhalten kann, beispielsweise Stahl, insbesondere aus Edelstahl. Der zweite Stangenabschnitt kann zudem dazu beitragen, dass das Fluid daran zu hindern, zum Ventilantrieb zu gelangen. Vorzugsweise wird der erste Stangenabschnitt vom Fluid umströmt, während der zweite Stangenabschnitt gar nicht oder nur an einem ersten Ende mit dem Fluid in Kontakt kommt.

Die Stange kann zwei oder mehr Stangenabschnitte haben. Im einfachsten Fall weist die Stange genau zwei Stangenabschnitte auf, welche unmittelbar miteinander verbunden sind, wobei der erste Stangenabschnitt am Ventil angebunden ist und der zweite Stangenabschnitt am Ventilantrieb angebunden ist. Die Stange kann aber auch weitere Stangenabschnitte zwischen dem Ventil und dem ersten Stangenabschnitt, zwischen dem ersten Stangenabschnitt und dem zweiten Stangenabschnitt und/oder zwischen dem zweiten Stangenabschnitt und dem Ventilantrieb aufweisen.

In einer bevorzugten Ausführungsform der Vorrichtung sind der erste Stangenabschnitt und der zweite Stangenabschnitt mittels einer Steckverbindung miteinander verbunden.

Durch die Steckverbindung können die beiden Stangenabschnitte stabil aneinandergehalten sein. Gleichzeitig kann die Steckverbindung bei der Montage leicht ausgebildet werden und zu Wartungszwecken leicht wieder gelöst werden. In dieser Ausführungsform überlappen sich der erste Stangenabschnitt und der zweite Stangenabschnitt. Die Steckverbindung muss nicht kraftschlüssig ausgebildet sein. Die Stangenabschnitte können in dem Fall leicht auseinander gezogen werden. Die Stange kann in dem Fall dennoch dadurch zusammengehalten werden, dass der Ventilstempel - was bevorzugt ist - in seine zweite Endposition vorgespannt ist, beispielsweise durch eine Feder. Die Steckverbindung kann aber auch kraftschlüssig sein. Der erste Stangenabschnitt und der zweite Stangenabschnitt stehen unmittelbar miteinander in Kontakt. Zwischen dem ersten Stangenabschnitt und dem zweiten Stangenabschnitt ist also kein weiterer Stangenabschnitt ausgebildet.

In einer weiteren bevorzugten Ausführungsform der Vorrichtung ist der zweite Stangenabschnitt hohl.

Der zweite Stangenabschnitt dient insbesondere der thermischen Isolation der Anschlusseinrichtung. In der vorliegenden Ausführungsform trägt dazu die hohle Ausgestaltung des zweiten Stangenabschnitts bei. Zudem kann die Steckverbindung zum ersten Stangenabschnitt durch die hohle Ausgestaltung besonders leicht ausgebildet werden. Im einfachsten Fall ist der erste Stangenabschnitt ein massiver zylinderförmiger Körper, welcher in einen entsprechend dimensionierten zylinderförmigen Hohlraum des zweiten Stangenabschnitts eingeführt werden kann. Damit der erste Stangenabschnitt nicht weiter in den zweiten Stangenabschnitt hineingelangen kann als gewünscht, weist der erste Stangenabschnitt vorzugsweise einen Flansch auf, welcher im montierten Zustand am zweiten Stangenabschnitt anliegt. Der Flansch dient also als Anschlag für eine Relativbewegung zwischen dem ersten Stangenabschnitt und dem zweiten Stangenabschnitt.

In einer weiteren bevorzugten Ausführungsform der Vorrichtung ist der erste Stangenabschnitt unmittelbar an das Ventil angebunden.

In dieser Ausführungsform gibt es zwischen dem Ventil und dem ersten Stangenabschnitt keinen weiteren Stangenabschnitt. In einer alternativen Ausgestaltung könnte das Ventil mittelbar über ein weiteres Element, insbesondere über einen weiteren Stangenabschnitt an den ersten Stangenabschnitt angebunden sein.

In einer weiteren bevorzugten Ausführungsform der Vorrichtung weist die Stange zwischen dem Ventilantrieb und dem zweiten Stangenabschnitt weiterhin einen dritten Stangenabschnitt auf, welcher einen Balg zur Abdichtung aufweist.

Der dritte Stangenabschnitt kann einerseits an dem zweiten Stangenabschnitt und andererseits an dem Ventilantrieb angebunden sein. Es können aber zwischen dem zweiten Stangenabschnitt und dem dritten Stangenabschnitt und/oder zwischen dem dritten Stangenabschnitt und dem Ventilantrieb auch weitere Stangenabschnitte vorgesehen sein.

Der dritte Stangenabschnitt dient der Abdichtung des Innenraums der Anschlusseinrichtung. Dazu weist der dritte Stangenabschnitt einen Balg auf. Unter einem Balg ist ein gewellter Teil der Stange oder ein gewelltes Element an der Stange zu verstehen. Der Balg kann auch als ein Wellenabschnitt oder als ein Wellenelement bezeichnet werden. Der Balg ist vorzugsweise aus einem Metall gebildet, insbesondere aus Stahl, beispielsweise aus Edelstahl.

Mit dem Balg kann der Innenraum der Anschlusseinrichtung nach Art einer Balgabdichtung abgedichtet werden. Dazu ist die Stange vorzugsweise zumindest in einem Teil des dritten Stangenabschnitts durch eine Durchgangsöffnung in der Begrenzung des Innenraums der Anschlusseinrichtung geführt. Die Durchgangsöffnung kann beispielsweise durch eine um die Hauptachse umlaufende Wand gebildet sein. Die Durchgangsöffnung ist vorzugsweise zylinderförmig. Der Balg kann einen verbleibenden Spalt zwischen der Stange und dem Rand der Durchgangsöffnung abdichten. Durch diese Art der Abdichtung kann die Stange entlang der Hauptachse der Anschlusseinrichtung bewegt werden, um das Ventil zu betätigen, ohne dass dadurch der Innenraum der Anschlusseinrichtung undicht würde. Insoweit kann der Balg dazu beitragen, dass das Ventil mit dem Ventilantrieb betätigt werden kann, ohne dass das Fluid aus dem Innenraum der Anschlusseinrichtung unkontrolliert in die Umgebung austritt.

In einer weiteren bevorzugten Ausführungsform der Vorrichtung weist die Stange zwischen dem Ventilantrieb und dem zweiten Stangenabschnitt weiterhin einen vierten Stangenabschnitt auf, welcher ein Justierelement zum Justieren einer Länge der Stange aufweist.

Der vierte Stangenabschnitt dient dazu, die Länge der Stange so einzustellen, dass ein Ventil des Anschlusses über das Ventil der Anschlusseinrichtung betätigt werden kann.

Das Justierelement kann insbesondere durch eine oder mehrere Schraubverbindungen realisiert sein. Beispielsweise kann der vierte Stangenabschnitt ein erstes inneres Element, ein zweites inneres Element und ein äußeres Element aufweisen. Das erste innere Element und das zweite innere Element können jeweils auf der Hauptachse der Anschlusseinrichtung axial voneinander beabstandet sein. Ein erstes Endes des vierten Stangenabschnitts kann an dem ersten inneren Element ausgebildet sein. Ein zweites Endes des vierten Stangenabschnitts kann an dem zweiten inneren Element ausgebildet sein. Das erste innere Element und das zweite innere Element können jeweils massiv und zylinderförmig sein. Das äußere Element ist vorzugsweise hohlzylinderförmig. Über das äußere Element können das erste innere Element und das zweite innere Element miteinander verbunden sein, insbesondere über eine jeweilige Schraubverbindung. Durch Rotieren des inneren Elements und/oder des äußeren Elements um die jeweilige Achse - welcher vorzugsweise mit der Hauptachse der Anschlusseinrichtung zusammenfällt - kann so der Abstand zwischen dem ersten inneren Element und dem zweiten inneren Element und insoweit die Länge des vierten Längenabschnitts verändert werden.

Weist die Stange auch einen dritten Stangenabschnitt auf, ist der vierte Stangenabschnitt vorzugsweise zwischen dem dritten Stangenabschnitt und dem Ventilantrieb angeordnet. Möglich ist aber auch, dass der vierte Stangenabschnitt zwischen dem zweiten Stangenabschnitt und dem dritten Stangenabschnitt angeordnet ist.

In einer weiteren bevorzugten Ausführungsform der Vorrichtung ist der Ventilantrieb durch eine Schraubverbindung an einem Gehäuse der Anschlusseinrichtung gehalten, wobei die Stange und das Ventil aus dem Gehäuse entnehmbar ist, wenn die Schraubverbindung gelöst ist.

Eine Achse der Schraubverbindung fällt vorzugsweise mit der Hauptachse der Anschlusseinrichtung zusammen. Der Ventilantrieb kann also von dem Gehäuse der Anschlusseinrichtung gelöst werden, indem der Ventilantrieb um die Hauptachse der Anschlusseinrichtung rotiert wird. Wird der Ventilantrieb so von dem Gehäuse der Anschlusseinrichtung losgeschraubt, kann der Ventilantrieb mit der Stange aus dem Gehäuse entnommen werden. Das ist insbesondere zu Wartungszwecken sinnvoll.

Die Stange ist vorzugsweise insoweit an das Ventil angebunden, als dass die Stange das Ventil berührt. Beispielsweise kann die Stange in ein Sackloch des Ventilstempels eingreifen, welches entlang der Hauptachse der Anschlusseinrichtung ausgebildet ist. Dabei kann die Stange in das Sackloch eingeklemmt und insoweit kraftschlüssig mit dem Ventilstempel verbunden sein. Eine solche kraftschlüssige Verbindung zwischen der Stange und dem Ventil ist allerdings nicht erforderlich. Ist der Ventilantrieb an das Gehäuse geschraubt, kann die Stange auch ohne eine solche fest Verbindung zuverlässig an dem Ventil gehalten sein. Das ist insbesondere in dem bevorzugten Fall gegeben, dass der Ventilstempel in seine zweite Endposition vorgespannt ist, beispielsweise durch eine Feder. Wird die Stange mit dem Ventilantrieb aus dem Gehäuse entnommen, muss die Verbindung der Stange zum Ventil daher nicht gesondert gelöst werden. Ist die Stange hingegen über eine Klemmverbindung mit dem Ventil verbunden, kann diese Klemmverbindung gelöst werden, indem die Stange mit einer entsprechenden Kraft aus dem Gehäuse herausgezogen wird.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei das Ventil und der Ventilantrieb auf einer Hauptachse der Anschlusseinrichtung voneinander beabstandet angeordnet sind und über eine entlang der Hauptachse ausgebildete Stange mechanisch miteinander gekoppelt sind, wobei die Stange mehrere Stangenabschnitte aufweist, wobei ein erster der Stangenabschnitte näher an dem Ventil angeordnet ist als ein zweiter der Stangenabschnitte, und wobei der erste Stangenabschnitt eine höhere thermische Leitfähigkeit hat als der zweite der Stangenabschnitt.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Abschnitt 2 (10 2022 104 635.4)

Die zu lösenden Aufgaben werden gelöst mit der Anordnung, dem Verfahren und dem Anschluss gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dieses Abschnitts dargestellten Merkmale sind in beliebiger, technologisch sinnvoller Weise miteinander kombinierbar.

Erfindungsgemäß wird eine Anordnung vorgestellt, welche einen Fluidtank und einen daran angebundenen Anschluss umfasst. Der Anschluss umfasst:
- einen Ventilraum, welcher umlaufend durch eine Mantelwand begrenzt ist, welcher an einer ersten Stirnseite eine erste Ventilöffnung aufweist und welcher an einer zweiten Stirnseite über eine Anschlussöffnung mit einem Innenraum des Fluidtanks verbunden ist,
- einen ersten Ventilstempel, welcher zumindest teilweise innerhalb des Ventilraums angeordnet ist, welcher entlang einer Ventilachse zwischen einer ersten Endposition und einer zweiten Endposition beweglich ist, und welcher in seiner ersten Endposition die erste Ventilöffnung verschließt,
- eine erste Kegelfeder, welche den ersten Ventilstempel in dessen erste Endposition vorspannt und welche einen Querschnitt hat, der sich in einer Richtung von der ersten Stirnseite zur zweiten Stirnseite des Ventilraums vergrößert.

Der Fluidtank der Anordnung kann über den Anschluss mit einem Fluid befüllt werden. Es kann also ein Fluid in den Anschluss eingeleitet werden. Die Anordnung kann beispielsweise Teil eines Fahrzeugs ein. Das Fahrzeug kann insbesondere ein Kraftfahrzeug oder ein Lastkraftwagen sein. Es kann sich aber auch beispielsweise um ein Schiff handeln. Der Fluidtank kann als Kraftstofftank für das Fahrzeug dienen. Über den Anschluss kann das Fahrzeug betankt werden. Insbesondere in dem Fall genügt es, wenn der Anschluss dazu verwendet wird, ein Fluid in den Fluidtank einzuleiten. Denkbar ist aber auch, ein Fluid aus dem Fluidtank über den Anschluss herauszuleiten. Allgemein kann die beschriebene Anordnung in allen Anwendungen eingesetzt werden, bei denen eine Leitung mit einem Anschluss so verbunden werden soll, dass ein Fluid aus der Leitung in den Anschluss eingeleitet und/oder aus dem Anschluss herausgeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Anordnung für ein Flüssiggases eingerichtet, ergeben sich daher entsprechende Anforderungen an die Anordnung und ihre Elemente, insbesondere hinsichtlich der verwendeten Materialien sowie hinsichtlich Isolation und Dichtigkeit.

Die beschriebene Anordnung kann mit jedem Fluid verwendet werden. Besonders geeignet ist die beschriebene Anordnung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Anordnung ist daher vorzugsweise für eine solche Temperatur und einen solchen Druck geeignet.

Der Anschluss ist mit einem Fluidtank verbunden. Darunter fällt auch eine Ausgestaltung, bei welcher der Anschluss in einer Berandung des Fluidtanks integriert ist und insoweit auch als Teil des Fluidtanks aufgefasst werden könnte. Der Anschluss kann im einfachsten Fall durch eine Öffnung und ein Ventil in einer Berandung des Fluidtanks realisiert sein. Das Ventil dient dazu, den Fluidtank zu verschließen, wenn dieser nicht über den Anschluss mit Fluid befüllt wird. Zudem kann der Anschluss über eine Leitung mit dem Fluidtank verbunden sein.

Der Fluidtank kann beispielsweise mit einer Vorrichtung zum Einleiten eines Fluids in den Anschluss mit dem Fluid befüllt werden. Die Vorrichtung weist vorzugsweise eine Fluidquelle auf sowie eine daran angebundene Abgabeleitung. Über eine Anschlusseinrichtung kann die Abgabeleitung mit dem Anschluss der Anordnung verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Die Anschlusseinrichtung weist vorzugsweise einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der Vorrichtung in den Anschluss eingeleitet, strömt das Fluid durch den Stutzen.

Die Anordnung ist vorzugsweise zumindest teilweise vakuumisoliert. Der Anschluss und/oder der Fluidtank sind vorzugsweise jeweils zumindest teilweise vakuumisoliert. Die Vakuumisolation trägt dazu bei, dass die Anordnung mit einem kalten Fluid verwendet werden kann. Ein Benutzer kann durch die Vakuumisolation vor Verletzungen geschützt werden. Zudem kann durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anordnung, die mit dem Fluid in Kontakt gelangen. Die Vakuumisolation kann beispielsweise dadurch realisiert sein, dass der Fluidtank einen Innenraum aufweist, der durch eine doppelwandige Begrenzung begrenzt ist.

Der Anschluss umfasst einen Ventilraum sowie einen oder mehrere darin angeordnete Ventilstempel. Der Ventilraum und der beziehungsweise die Ventilstempel bilden ein Ventil, über welches der Anschluss verschlossen sein kann. Beispielsweise kann der Anschluss grundsätzlich über das Ventil verschlossen sein und immer dann geöffnet werden, wenn Fluid in den Anschluss eingeleitet werden soll. Sind mehrere Ventilstempel in dem Ventilraum angeordnet, ist das Ventil redundant ausgebildet. Die Ventilstempel werden als Teil des gleichen Ventils aufgefasst. Das Ventil kann insoweit auch als eine Ventileinheit aufgefasst werden, welches entsprechend der Anzahl der Ventilstempel die Funktion mehrerer Einzelventile erfüllt.

Der Anschluss umfasst den Ventilraum, welcher umlaufend durch eine Mantelwand begrenzt ist. Die Mantelwand ist vorzugsweise vollständig umlaufend ausgebildet. Das bedeutet, dass die Mantelwand - von lokalen Öffnungen abgesehen - umfänglich geschlossen ist. Die Mantelwand ist vorzugsweise um die Ventilachse umlaufend ausgebildet. Der Ventilkörper kann insbesondere rotationssymmetrisch zur Ventilachse ausgebildet sein. Eine Abgabeleitung kann vorzugsweise in einer Richtung parallel zur Ventilachse an den Anschluss angebunden werden.

Der Ventilraum erstreckt sich axial entlang der Ventilachse zwischen einer ersten Stirnseite und einer zweiten Stirnseite. Im einfachsten Fall ist der Ventilkörper als ein Hohlzylinder ausgebildet. An seiner ersten Stirnseite weist der Ventilkörper eine erste Ventilöffnung auf. An seiner zweiten Stirnseite ist der Ventilkörper über eine Anschlussöffnung mit einem Innenraum des Fluidtanks verbunden. Der Fluidtank kann unmittelbar über die Anschlussöffnung an den Ventilraum angebunden sein. Alternativ kann zwischen dem Anschluss und dem Fluidtank eine Leitung ausgebildet sein. In dem Fall ist der Fluidtank mittelbar über die Leitung an der Anschlussöffnung angebunden. Strömt Fluid über den Anschluss in den Fluidtank, tritt es also durch die Ventilöffnung in den Innenraum des Ventilkörpers ein, tritt durch die Anschlussöffnung aus dem Ventilkörper aus und gelangt anschließend - unmittelbar oder nach Passieren einer Leitung - in den Fluidtank.

Der Anschluss umfasst mindestens einen Ventilstempel, welcher zumindest teilweise, vorzugsweise vollständig, innerhalb des Ventilraums angeordnet ist. In Abgrenzung von dem unten beschriebenen zweiten Ventilstempel wird der mindestens eine Ventilstempel hier bereits als erster Ventilstempel bezeichnet. Ist der erste Ventilstempel der einzige Ventilstempel des Ventils, kann dieser auch einfach als Ventilstempel bezeichnet werden.

Der erste Ventilstempel ist vorzugsweise vollständig innerhalb des Ventilraums angeordnet. Allerdings ist es alternativ beispielsweise möglich, dass der erste Ventilstempel teilweise aus dem Ventilraum herausragt, wenn das Ventil geöffnet ist.

Der erste Ventilstempel ist entlang der Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des ersten Ventilstempels zusammen. Die erste Ventilöffnung ist vorzugsweise senkrecht zur Ventilachse ausgebildet. Ein Mittelpunkt der ersten Ventilöffnung liegt vorzugsweise auf der Ventilachse. Vorzugsweise ist der erste Ventilstempel nicht über seine erste Endposition hinaus und/oder nicht über seine zweite Endposition hinaus beweglich. Das kann durch einen oder mehrere entsprechende Anschläge erreicht werden.

Der erste Ventilstempel verschließt in seiner ersten Endposition die erste Ventilöffnung. Insoweit ist das Ventil verschlossen, wenn sich der erste Ventilstempel in seiner ersten Endposition befindet. Ist der erste Ventilstempel in seiner zweiten Endposition, gibt der erste Ventilstempel die erste Ventilöffnung frei. Sofern kein weiterer Ventilstempel vorhanden ist, welcher eine weitere Ventilöffnung verschließt, ist das Ventil geöffnet, wenn sich der erste Ventilstempel in seiner zweiten Endposition befindet. Das Ventil ist allerdings vorzugsweise nicht nur dann geöffnet, wenn sich der erste Ventilstempel in seiner zweiten Endposition befindet. Befindet sich der erste Ventilstempel zwischen seiner ersten Endposition und seiner zweiten Endposition ist das Ventil vorzugsweise teilweise geöffnet, sofern kein weiterer Ventilstempel vorhanden ist, welcher eine weitere Ventilöffnung verschließt.

Sofern kein Fluid in den Anschluss eingeleitet wird oder von dem Anschluss abgegeben wird, sollte das Ventil verschlossen sein. Ansonsten könnte das Fluid unkontrolliert austreten. Bei der beschriebenen Anordnung trägt dazu bei, dass das Ventil eine erste Kegelfeder aufweist, welche den ersten Ventilstempel in dessen erste Endposition vorspannt. Die Kegelfeder spannt den ersten Ventilstempel also in die Position vor, in der der erste Ventilstempel das Ventil verschließt. Sofern keine externe Kraft auf den ersten Ventilstempel einwirkt, ist das Ventil also verschlossen. Dies kann auch als ein Grundzustand des Ventils bezeichnet werden. Dass das Ventil im Grundzustand verschlossen ist, trägt zur Sicherheit bei. Um das Ventil zu öffnen, kann der erste Ventilstempel entgegen der von der Kegelfeder auf den ersten Ventilstempel ausgeübten Kraft aus der ersten Endposition bewegt werden. Das kann beispielsweise über einen Ventilantrieb einer Anschlusseinrichtung erfolgen, mit welcher eine Abgabeleitung an den Anschluss angebunden wird. Die Anschlusseinrichtung kann einen Stößel haben, welcher durch den Ventilantrieb der Anschlusseinrichtung beweglich ist und welcher auf das Ventil des Anschlusses einwirken kann. Durch den Stößel kann der erste Ventilstempel entgegen der von der Kegelfeder auf den ersten Ventilstempel ausgeübten Kraft aus der ersten Endposition bewegt werden. Der Stößel der Anschlusseinrichtung kann durch einen Ventilstempel eines Ventils der Anschlusseinrichtung verwirklicht sein. Wird dieses Ventil geöffnet, kann durch die entsprechende Bewegung des Ventilstempels auch der erste Ventilstempel des Ventils des Antriebs bewegt werden.

Unter einer Kegelfeder ist eine Feder zu verstehen, deren Windungen auf einem Kegelmantel liegen. Ein Durchmesser der Kegelfeder verändert sich also entlang der Achse der Kegelfeder. Eine Kegelfeder kann daher grundsätzlich in zwei Richtungen eingebaut sein. Für den beschriebenen Anschlusses ist die Richtung gewählt, bei welcher sich ein Querschnitt der Kegelfeder in einer Richtung von der ersten Stirnseite zur zweiten Stirnseite des Ventilraums vergrößert. Strömt Fluid in den Anschluss hinein, strömt es also auf die Kegelspitze der Kegelfeder zu. Es hat sich herausgestellt, dass eine solche Ausgestaltung strömungstechnisch vorteilhaft ist. Insbesondere wird die Strömung durch die Kegelfeder vergleichsweise wenig beeinträchtigt, so dass das Fluid zügig in den Fluidtank eingeleitet werden kann.

Die erste Kegelfeder ist vorzugsweise einerseits an dem ersten Ventilstempel gehalten. Insoweit kann die erste Kegelfeder eine Kraft auf den ersten Ventilstempel ausüben. Andererseits ist die erste Kegelfeder vorzugsweise an der Mantelwand gehalten. Eine von der ersten Kegelfeder auf den ersten Ventilstempel ausgeübte Kraft hängt daher von der Position des ersten Ventilstempels relativ zur Mantelwand ab.

Durch die Ausgestaltung als Kegelfeder kann die erste Kegelfeder einerseits an ihrem Ende mit großem Querschnitt an der Mantelwand gehalten sein und andererseits an ihrem Ende mit kleinem Querschnitt radial weiter innenliegend an dem ersten Ventilstempel. Dies ermöglicht es, dass die erste Kegelfeder einerseits sicher gehalten sein kann und andererseits eine Strömung des Fluids durch das Ventil nur geringfügig beeinträchtigt.

Die erste Kegelfeder ist vorzugsweise so ausgestaltet und angeordnet, dass die erste Kegelfeder als eine Druckfeder wirkt. Die erste Kegelfeder ist also gegenüber ihrem kraftlosen Grundzustand zusammengedrückt. Das gilt sowohl, wenn sich der erste Ventilstempel in seiner ersten Endposition befindet als auch wenn sich der erste Ventilstempel in seiner zweiten Endposition befindet. Die beiden Enden der ersten Kegelfeder werden also durch die Federkraft auseinander gedrückt. Befindet sich der erste Ventilstempel in seiner zweiten Endposition, ist die erste Kegelfeder stärker zusammengedrückt als bei der ersten Endposition. Insoweit ist der erste Ventilstempel in seine erste Endposition vorgespannt.

Der erste Ventilstempel ist vorzugsweise zumindest teilweise innerhalb der ersten Kegelfeder angeordnet. Dies ist insbesondere in Kombination mit der bevorzugten Ausgestaltung günstig, in welcher die erste Kegelfeder an der Mantelwand gehalten ist. Dazu ist zu beachten, dass einerseits wünschenswert ist, dass die erste Kegelfeder sicher gehalten ist. Das erhöht die Zuverlässigkeit des Anschlusses und reduziert Kosten für Wartung und Reparatur. Ein sicherer Halt der ersten Kegelfeder erfordert eine entsprechend dimensionierte Befestigungsmöglichkeit. Andererseits ist es wünschenswert, dass das Fluid möglichst ungestört durch das Ventil strömen kann. Dadurch kann das Fluid schnell in den Anschluss geleitet werden. Insbesondere die Befestigungsmöglichkeiten für die erste Kegelfeder können die Strömung des Fluids beeinträchtigen. Insoweit können das Bedürfnis nach sicherem Halt der ersten Kegelfeder und nach störungsfreiem Strömen des Fluids einander im Allgemeinen entgegenstehen. Mit der beschriebenen Anordnung wird in dieser Hinsicht eine Lösung geboten, die beide Bedürfnisse besonders gut miteinander vereinbart. So kann das Fluid an einem zweiten Ende der ersten Kegelfeder radial innerhalb der ersten Kegelfeder strömen. Am zweiten Ende der ersten Kegelfeder ist der Bereich radial außerhalb der ersten Kegelfeder für das Fluid durch die Mantelwand blockiert. Dieser Bereich kann dadurch derart stabil ausgebildet sein, dass die erste Kegelfeder sicher gehalten wird. An einem ersten Ende der ersten Kegelfeder kann das Fluid radial außerhalb der ersten Kegelfeder an dem ersten Ventilstempel vorbei strömen. Am ersten Ende der ersten Kegelfeder kann der Bereich radial innerhalb der ersten Kegelfeder für das Fluid durch den ersten Ventilstempel blockiert sein. Der erste Ventilstempel kann dadurch derart stabil ausgebildet sein, dass die erste Kegelfeder sicher gehalten wird. Die erste Kegelfeder kann also an ihren beiden Enden stabil gehalten sein. Der gesamte Bereich radial außerhalb bzw. radial innerhalb der ersten Kegelfeder kann für die jeweilige Befestigungsmöglichkeit genutzt werden.

Für das Fluid ergibt sich dennoch ein vergleichsweise störungsfreier Strömungspfad durch das Ventil. Am zweiten Ende kann das Fluid radial innerhalb der ersten Kegelfeder strömen. Dafür steht der gesamte Bereich radial innerhalb der ersten Kegelfeder zur Verfügung. Eine Beeinträchtigung durch eine Befestigung der ersten Kegelfeder gibt es hier nicht. Am ersten Ende der ersten Kegelfeder kann das Fluid radial außerhalb der ersten Kegelfeder an dem ersten Ventilstempel vorbei strömen. Dafür steht der gesamte Bereich radial außerhalb der ersten Kegelfeder zur Verfügung. Eine Beeinträchtigung durch eine Befestigung der ersten Kegelfeder gibt es hier ebenfalls nicht.

Auf dem Weg in den Fluidtank kann das Fluid durch die erste Ventilöffnung in den Ventilraum eintreten, zunächst radial außerhalb der ersten Kegelfeder strömen, den Mantel der ersten Kegelfeder durchtreten, anschließend radial innerhalb der ersten Kegelfeder strömen und schließlich durch die Anschlussöffnung den Ventilraum verlassen. Das Fluid durchströmt also den Mantel der ersten Kegelfeder. Dadurch wird die Strömung des Fluids nur vergleichsweise wenig beeinträchtigt, weil der Mantel durch die Windungen der ersten Kegelfeder gebildet und insoweit nicht vollflächig geschlossen ist. Die Windungen sind voneinander beabstandet, damit die erste Kegelfeder ihre Federwirkung erzeugen kann.

In einer bevorzugten Ausführungsform der Anordnung weist der erste Ventilstempel einen Ventilteller und einen daran angebundenen Ventilschaft auf, wobei der erste Ventilstempel in seiner ersten Endposition die erste Ventilöffnung mit dem Ventilteller verschließt, und wobei der Ventilschaft innerhalb der ersten Kegelfeder angeordnet ist.

Der Ventilteller ist vorzugsweise größer als die erste Ventilöffnung. Somit kann der Ventilteller die erste Ventilöffnung verschließen, wenn sich der erste Ventilstempel in seiner ersten Endposition befindet. In dem Fall ist vorzugsweise zwischen einem Rand der ersten Ventilöffnung und dem Ventilteller eine Dichtung angeordnet. Die kann an dem Rand der ersten Ventilöffnung oder dem Ventilteller gehalten sein. Auch kann eine erste Dichtung an dem Rand der ersten Ventilöffnung und eine zweite Dichtung an dem Ventilteller gehalten sein.

Der erste Ventilstempel ist vorzugsweise zumindest teilweise innerhalb der ersten Kegelfeder angeordnet. Das ist in der vorliegenden Ausführungsform insoweit der Fall, als dass der Ventilschaft des ersten Ventilstempels innerhalb der ersten Kegelfeder angeordnet ist.

Die erste Kegelfeder ist an dem ersten Ventilstempel gehalten. Das kann in der vorliegenden Ausführungsform insoweit der Fall sein, als dass die erste Kegelfeder an einer von dem Ventilteller und dem Ventilschaft gebildeten Stufe gehalten ist. Der Ventilteller erfüllt in dem Fall die Funktion eines um die Ventilachse umlaufenden Flansches. Durch diese Ausgestaltung kann die erste Kegelfeder besonders gut eine axial gerichtete Kraft auf den ersten Ventilstempel ausüben.

In einer weiteren bevorzugten Ausführungsform der Anordnung ist ein Strömungspfad durch die erste Ventilöffnung in den Innenraum des Fluidtanks freigegeben, wenn sich der erste Ventilstempel außerhalb seiner ersten Endposition befindet.

Der Strömungspfad verläuft von außerhalb des Anschlusses durch die erste Ventilöffnung am ersten Ventilstempel vorbei, durch den Mantel der ersten Kegelfeder hindurch und radial innerhalb der ersten Kegelfeder bis zur Anschlussöffnung des Ventils.

In einer weiteren bevorzugten Ausführungsform der Anordnung ist die Mantelwand koaxial zum ersten Ventilstempel ausgebildet.

In dieser Ausführungsform ist der erste Ventilstempel zwischen seiner ersten Endposition und seiner zweiten Endposition parallel zur Mantelwand beweglich. Insoweit ist ein Abstand zwischen der Mantelwand und dem Ventilstempel konstant. Dadurch kann der erste Ventilstempel von der Mantelwand geführt werden.

In einer weiteren bevorzugten Ausführungsform der Anordnung weist der Anschluss weiterhin eine um zumindest einen Teil des Ventils umlaufende Wand auf, welche von dem Ventil zumindest in einem Abschnitt entlang der Ventilachse durch einen Ringspalt beabstandet ist.

Der Ringspalt kann als eine Aufnahme für einen Stutzen einer Anschlusseinrichtung aufgefasst werden. Wird die Anschlusseinrichtung an den Anschluss angeschlossen, kann der Stutzen der Anschlusseinrichtung zwischen dem Ventilkörper und der umlaufenden Wand, also in dem Ringspalt, aufgenommen werden. Der Ventilkörper befindet sich dann innerhalb des Stutzens und die umlaufende Wand befindet sich außerhalb des Stutzens. Vorzugsweise sind die Mantelwand des Ventilkörpers, der Stutzen und die umlaufende Wand koaxial zueinander, wenn der Stutzen in dem Ringspalt aufgenommen ist. Durch diese Ausgestaltung kann der Stutzen sicher und dicht an dem Anschluss gehalten sein.

An der zweiten Seite des Ventils ist der Ringspalt vorzugsweise verschlossen. Das trägt dazu bei, dass der Anschluss dicht mit der Anschlusseinrichtung verbunden werden kann.

Die umlaufende Wand erstreckt sich axial vorzugsweise über die erste Stirnseite des Ventilraums hinaus. Insbesondere in dem Fall kann die umlaufende Wand das Ventil schützen. Das gilt vor allem dann, wenn keine Anschlusseinrichtung an den Anschluss angebunden ist.

In einer weiteren bevorzugten Ausführungsform der Anordnung weist der erste Ventilstempel radial außen liegend mehrere Ausnehmungen auf, mit welchen zwischen dem ersten Ventilstempel und der Mantelwand jeweils ein Durchgang gebildet ist.

Durch die Durchgänge kann das Fluid axial am ersten Ventilstempel entlang von einer Seite des ersten Ventilstempels zur anderen Seite des ersten Ventilstempels strömen. Außerhalb der Ausnehmungen kann der erste Ventilstempel bis an die Mantelwand des Ventils heranreichen. Vorzugsweise verbleibt dort nur ein kleiner Spalt, so dass der erste Ventilstempel zwar leicht beweglich, aber dennoch in seiner Bewegung geführt ist. Dies erhöht die Zuverlässigkeit. Dafür kann in Kauf genommen werden, dass der für das Fluid zur Verfügung stehende Strömungsquerschnitt auf die Durchgänge eingeschränkt wird.

Die Ausnehmungen sind vorzugsweise am Ventilteller des ersten Ventilstempels ausgebildet.

In einer weiteren bevorzugten Ausführungsform der Anordnung ist der Ventilraum zwischen der ersten Stirnseite und der zweiten Stirnseite durch eine Zwischenwand unterteilt, wobei die Zwischenwand eine zweite Ventilöffnung aufweist, wobei der erste Ventilstempel und die erste Kegelfeder zwischen der Zwischenwand und der ersten Stirnseite des Ventilraums angeordnet sind, und wobei das Ventil weiterhin aufweist:
- einen zweiten Ventilstempel, welcher zumindest teilweise innerhalb des Ventilraums zwischen der zweiten Stirnseite des Ventilraums und der Zwischenwand angeordnet ist, welcher zwischen einer ersten Endposition und einer zweiten Endposition beweglich ist, und welcher in seiner ersten Endposition die zweite Ventilöffnung verschließt,
- eine zweite Kegelfeder, welche innerhalb des Ventilraums zwischen der zweiten Stirnseite des Ventilraums und der Zwischenwand angeordnet ist, welche den zweiten Ventilstempel in dessen erste Endposition vorspannt und welche einen Querschnitt hat, der sich in einer Richtung von der ersten Stirnseite zur zweiten Stirnseite des Ventilraums vergrößert.

In der vorliegenden Ausführungsform ist das Ventil insoweit redundant ausgebildet, als dass das Ventil zwei Ventilstempel und zwei Ventilöffnungen aufweist. Diese Redundanz erhöht die Sicherheit. Der Ventilraum ist durch eine Zwischenwand axial in zwei Teile unterteilt. Die Zwischenwand steht vorzugsweise senkrecht zur Ventilachse.

Für den zweiten Ventilstempel, die zweite Kegelfeder und die zweite Ventilöffnung gilt das zum ersten Ventilstempel, zur ersten Kegelfeder beziehungsweise zur ersten Ventilöffnung Gesagte entsprechend. Der zweite Ventilstempel ist vorzugsweise vollständig innerhalb des Ventilraums angeordnet.

Der erste Ventilstempel und der zweite Ventilstempel sind vorzugsweise beide jeweils auf der Ventilachse angeordnet. Befinden sich die beiden Ventilstempel außerhalb ihrer jeweiligen ersten Endposition, stehen die beiden Ventilstempel vorzugsweise axial miteinander in Kontakt. Das Ventil kann also geöffnet werden, indem der erste Ventilstempel axial aus seiner ersten Endposition heraus bewegt wird, wodurch auch der zweite Ventilstempel axial aus seiner ersten Endposition heraus bewegt wird. Beide Ventilstempel können also gemeinsam beispielsweise durch einen Stößel der Anschlusseinrichtung bewegt werden, um das Ventil zu öffnen. Befinden sich die beiden Ventilstempel in ihrer ersten Endposition, sind die beiden Ventilstempel vorzugsweise axial voneinander beabstandet. Es verbleibt also zumindest ein kleiner Spalt zwischen den beiden Ventilstempeln. Dadurch können beide Ventilstempel unabhängig voneinander die jeweilige Ventilöffnung verschließen. Insbesondere hindert der erste Ventilstempel den zweiten Ventilstempel nicht daran, die zweite Ventilöffnung zu verschließen.

Auf dem Weg in den Fluidtank kann das Fluid durch die erste Ventilöffnung in den Ventilraum eintreten, zunächst radial außerhalb der ersten Kegelfeder strömen, den Mantel der ersten Kegelfeder durchtreten, anschließend radial innerhalb der ersten Kegelfeder strömen, durch die zweite Ventilöffnung strömen, zunächst radial außerhalb der zweiten Kegelfeder strömen, den Mantel der zweiten Kegelfeder durchtreten, anschließend radial innerhalb der zweiten Kegelfeder strömen und schließlich durch die Anschlussöffnung den Ventilraum verlassen.

In einer weiteren bevorzugten Ausführungsform der Anordnung ist die erste Kegelfeder radial außerhalb der zweiten Ventilöffnung an der Mantelwand und/oder an der Zwischenwand gehalten. Der"und"-Fall ist bevorzugt.

Die zweite Kegelfeder kann insbesondere an einer Stufe gehalten sein, welche durch die Zwischenwand und die Mantelwand gebildet ist. So kann die erste Kegelfeder besonders sicher gehalten sein. Dadurch, dass die erste Kegelfeder radial außerhalb der zweiten Ventilöffnung gehalten ist, beeinträchtigt die erste Kegelfeder die Strömung des Fluids vergleichsweise wenig.

Ist die erste Kegelfeder die einzige Kegelfeder des Ventils, ist die erste Kegelfeder (welche in dem Fall auch einfach als Kegelfeder und nicht als erste Kegelfeder bezeichnet werden könnte) vorzugsweise radial außerhalb der Anschlussöffnung an der Mantelwand und/oder an der zweiten Stirnseite des Ventilkörpers gehalten. Für die Funktion der ersten Kegelfeder ergibt sich insoweit kein Unterschied, ob das Ventil auch eine weitere Kegelfeder aufweist.

In einer weiteren bevorzugten Ausführungsform der Anordnung ist die zweite Kegelfeder radial außerhalb der Anschlussöffnung an der Mantelwand und/oder an der zweiten Stirnseite des Ventilraums gehalten. Der"und"-Fall ist bevorzugt.

In dieser Ausführungsform ist die zweite Kegelfeder analog zur ersten Kegelfeder gehalten.

Als ein weiterer Aspekt der Erfindung wird ein Verfahren zum Betanken eines Fahrzeugs mit einer wie beschrieben ausgestalteten Anordnung mit einem Fluid vorgestellt, wobei das Verfahren die folgenden Schritte umfasst, welche in der angegebenen Reihenfolge durchgeführt werden:
a) Anschließen einer Abgabeleitung an den Anschluss sowie Öffnen des Ventils,
b) Befüllen des Innenraums des Fluidtanks über den Anschluss mit Fluid aus der Abgabeleitung,
c) Schließen des Ventils und Abnehmen der Abgabeleitung von dem Anschluss.

Die beschriebenen Vorteile und Merkmale Anordnung sind auf das Verfahren anwendbar und übertragbar, und umgekehrt. Die Anordnung ist vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss sowie des Öffnens des Ventils des Anschlusses. Die beiden Teilschritte können gleichzeitig oder nacheinander durchgeführt werden.

Schritt c) beinhaltet die beiden Teilschritte des Schließens des Ventils des Anschlusses sowie des Abnehmen der Abgabeleitung von dem Anschluss. Die beiden Teilschritte können gleichzeitig oder nacheinander durchgeführt werden.

Als ein weiterer Aspekt der Erfindung wird ein Anschluss zur Aufnahme einer Leitung vorgestellt. Der Anschluss umfasst:
- einen Ventilraum, welcher umlaufend durch eine Mantelwand begrenzt ist, welcher an einer ersten Stirnseite eine erste Ventilöffnung aufweist und welcher an einer zweiten Stirnseite eine Anschlussöffnung aufweist,
- einen ersten Ventilstempel, welcher zumindest teilweise innerhalb des Ventilraums angeordnet ist, welcher entlang einer Ventilachse zwischen einer ersten Endposition und einer zweiten Endposition beweglich ist, und welcher in seiner ersten Endposition die erste Ventilöffnung verschließt,
- eine erste Kegelfeder, welche den ersten Ventilstempel in dessen erste Endposition vorspannt und welche einen Querschnitt hat, der sich in einer Richtung von der ersten Stirnseite zur zweiten Stirnseite des Ventilraums vergrößert.

Die beschriebenen Vorteile und Merkmale der Anordnung und des Verfahrens sind auf den Anschluss anwendbar und übertragbar, und umgekehrt. Der Anschluss ist vorzugsweise wie der Anschluss der beschriebenen Anordnung ausgebildet.

Die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich der beschriebene Anschluss immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über den beschriebenen Anschluss aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit dem beschriebenen Anschluss können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 2

Nachfolgend werden Ausführungsformen der Erfindung beschrieben. Die Ausführungsformen haben zwar die Struktur von Patentansprüchen, stellen aber keine Patentansprüche dar.
1. Anordnung (3) umfassend einen Fluidtank (1) und einen daran angebundenen Anschluss (100), wobei der Anschluss (100) umfasst:
   - einen Ventilraum (102), welcher umlaufend durch eine Mantelwand (103) begrenzt ist, welcher an einer ersten Stirnseite (104) eine erste Ventilöffnung (106) aufweist und welcher an einer zweiten Stirnseite (105) über eine Anschlussöffnung (108) mit einem Innenraum (109) des Fluidtanks (1) verbunden ist,
   - einen ersten Ventilstempel (110), welcher zumindest teilweise innerhalb des Ventilraums (102) angeordnet ist, welcher entlang einer Ventilachse (118) zwischen einer ersten Endposition (112) und einer zweiten Endposition (113) beweglich ist, und welcher in seiner ersten Endposition (112) die erste Ventilöffnung (106) verschließt,
   - eine erste Kegelfeder (114), welche den ersten Ventilstempel (110) in dessen erste Endposition (112) vorspannt und welche einen Querschnitt hat, der sich in einer Richtung von der ersten Stirnseite (104) zur zweiten Stirnseite (105) des Ventilraums (102) vergrößert.
2. Anordnung (3) nach Ausführungsform 1, wobei ein Strömungspfad (116) durch die erste Ventilöffnung (106) in den Innenraum (109) des Fluidtanks (1) freigegeben ist, wenn sich der erste Ventilstempel (110) außerhalb seiner ersten Endposition (112) befindet.
3. Anordnung (3) nach einer der vorstehenden Ausführungsformen, wobei die Mantelwand (103) koaxial zum ersten Ventilstempel (110) ausgebildet ist.
4. Anordnung (3) nach einer der vorstehenden Ausführungsformen, wobei der Anschluss (100) weiterhin eine um zumindest einen Teil des Ventils (101) umlaufende Wand (117) aufweist, welche von dem Ventil (101) zumindest in einem Abschnitt entlang der Ventilachse (118) durch einen Ringspalt (119) beabstandet ist.
5. Anordnung (3) nach einer der vorstehenden Ausführungsformen, wobei der erste Ventilstempel (110) radial außen liegend mehrere Ausnehmungen (120) aufweist, mit welchen zwischen dem ersten Ventilstempel (110) und der Mantelwand (103) jeweils ein Durchgang (121) gebildet ist.
6. Anordnung (3) nach einer der vorstehenden Ausführungsformen, wobei der Ventilraum (102) zwischen der ersten Stirnseite (104) und der zweiten Stirnseite (105) durch eine Zwischenwand (122) unterteilt ist, wobei die Zwischenwand (122) eine zweite Ventilöffnung (107) aufweist, wobei der erste Ventilstempel (110) und die erste Kegelfeder (114) zwischen der Zwischenwand (122) und der ersten Stirnseite (104) des Ventilraums (102) angeordnet sind, und wobei das Ventil (101) weiterhin aufweist:
   - einen zweiten Ventilstempel (111), welcher zumindest teilweise innerhalb des Ventilraums (102) zwischen der zweiten Stirnseite (105) des Ventilraums (102) und der Zwischenwand (122) angeordnet ist, welcher zwischen einer ersten Endposition (112) und einer zweiten Endposition (113) beweglich ist, und welcher in seiner ersten Endposition (112) die zweite Ventilöffnung (107) verschließt,
   - eine zweite Kegelfeder (115), welche innerhalb des Ventilraums (102) zwischen der zweiten Stirnseite (105) des Ventilraums (102) und der Zwischenwand (122) angeordnet ist, welche den zweiten Ventilstempel (111) in dessen erste Endposition (112) vorspannt und welche einen Querschnitt hat, der sich in einer Richtung von der ersten Stirnseite (104) zur zweiten Stirnseite (105) des Ventilraums (102) vergrößert.
7. Anordnung (3) nach Ausführungsform 6, wobei die erste Kegelfeder (114) radial außerhalb der zweiten Ventilöffnung (107) an der Mantelwand (103) und/oder an der Zwischenwand (122) gehalten ist.
8. Anordnung (3) nach Ausführungsform 6 oder 7, wobei die zweite Kegelfeder (115) radial außerhalb der Anschlussöffnung (108) an der Mantelwand (103) und/oder an der zweiten Stirnseite (105) des Ventilraums (102) gehalten ist.
9. Verfahren zum Betanken eines Fahrzeugs (4) mit einer Anordnung (3) nach einer der vorstehenden Ausführungsformen mit einem Fluid, umfassend die folgenden Schritte, welche in der angegebenen Reihenfolge durchgeführt werden:
   a) Anschließen einer Abgabeleitung (201) an den Anschluss (100) sowie Öffnen des Ventils (101),
   b) Befüllen des Innenraums (109) des Fluidtanks (1) über den Anschluss (100) mit Fluid aus der Abgabeleitung (201),
   c) Schließen des Ventils (101) und Abnehmen der Abgabeleitung (201) von dem Anschluss (100).
10. Anschluss (100) zur Aufnahme einer Leitung (201), umfassend:
   - einen Ventilraum (102), welcher umlaufend durch eine Mantelwand (103) begrenzt ist, welcher an einer ersten Stirnseite (104) eine erste Ventilöffnung (106) aufweist und welcher an einer zweiten Stirnseite (105) eine Anschlussöffnung (108) aufweist,
   - einen ersten Ventilstempel (110), welcher zumindest teilweise innerhalb des Ventilraums (102) angeordnet ist, welcher entlang einer Ventilachse (118) zwischen einer ersten Endposition (112) und einer zweiten Endposition (113) beweglich ist, und welcher in seiner ersten Endposition (112) die erste Ventilöffnung (106) verschließt,
   - eine erste Kegelfeder (114), welche den ersten Ventilstempel (110) in dessen erste Endposition (112) vorspannt und welche einen Querschnitt hat, der sich in einer Richtung von der ersten Stirnseite (104) zur zweiten Stirnseite (105) des Ventilraums (102) vergrößert.

### Abschnitt 3 (10 2022 104 636.2)

Die zu lösenden Aufgaben werden gelöst mit der Anordnung, dem Set, dem Verfahren und dem Anschluss gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Anordnung vorgestellt, umfassend einen Fluidtank und einen daran angebundenen Anschluss, wobei der Anschluss ein Ventil umfasst mit einem ersten Ventilkörper, welcher um eine Ventilachse umlaufend ausgebildet ist und welcher in einem montierten Zustand durch eine erste Schraubverbindung gehalten ist, welche koaxial zur Ventilachse ausgebildet ist, wobei der erste Ventilkörper einen um die Ventilachse umlaufenden Flansch aufweist, in welchem mehrere Eingriffe für ein jeweiliges Eingriffselement eines Schraubwerkzeugs vorgesehen sind, so dass die erste Schraubverbindung ausgebildet und gelöst werden kann, indem das Schraubwerkzeug um die Ventilachse rotiert wird, während die Eingriffselemente des Schraubwerkzeugs in die entsprechenden Eingriffe des ersten Ventilkörpers eingreifen.

Der Fluidtank der Anordnung kann über den Anschluss mit einem Fluid befüllt werden. Es kann also ein Fluid in den Anschluss eingeleitet werden. Die Anordnung kann beispielsweise Teil eines Fahrzeugs ein. Das Fahrzeug kann insbesondere ein Kraftfahrzeug oder ein Lastkraftwagen sein. Es kann sich aber auch beispielsweise um ein Schiff handeln. Der Fluidtank kann als Kraftstofftank für das Fahrzeug dienen. Über den Anschluss kann das Fahrzeug betankt werden. Insbesondere in dem Fall genügt es, wenn der Anschluss dazu verwendet wird, ein Fluid in den Fluidtank einzuleiten. Denkbar ist aber auch, ein Fluid aus dem Fluidtank über den Anschluss herauszuleiten. Allgemein kann die beschriebene Anordnung in allen Anwendungen eingesetzt werden, bei denen eine Leitung mit einem Anschluss so verbunden werden soll, dass ein Fluid aus der Leitung in den Anschluss eingeleitet und/oder aus dem Anschluss herausgeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Anordnung für ein Flüssiggases eingerichtet, ergeben sich daher entsprechende Anforderungen an die Anordnung und ihre Elemente, insbesondere hinsichtlich der verwendeten Materialien sowie hinsichtlich Isolation und Dichtigkeit.

Die beschriebene Anordnung kann mit jedem Fluid verwendet werden. Besonders geeignet ist die beschriebene Anordnung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Anordnung ist daher vorzugsweise für eine solche Temperatur und einen solchen Druck geeignet.

Der Anschluss ist mit einem Fluidtank verbunden. Darunter fällt auch eine Ausgestaltung, bei welcher der Anschluss in einer Berandung des Fluidtanks integriert ist und insoweit auch als Teil des Fluidtanks aufgefasst werden könnte. Der Anschluss kann im einfachsten Fall durch eine Öffnung und ein Ventil in einer Berandung des Fluidtanks realisiert sein. Das Ventil dient dazu, den Fluidtank zu verschließen, wenn dieser nicht über den Anschluss mit Fluid befüllt wird. Zudem kann der Anschluss über eine Leitung mit dem Fluidtank verbunden sein.

Der Fluidtank kann beispielsweise mit einer Vorrichtung zum Einleiten eines Fluids in den Anschluss mit dem Fluid befüllt werden. Die Vorrichtung weist vorzugsweise eine Fluidquelle auf sowie eine daran angebundene Abgabeleitung. Über eine Anschlusseinrichtung kann die Abgabeleitung mit dem Anschluss der Anordnung verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Die Anschlusseinrichtung weist vorzugsweise einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der Vorrichtung in den Anschluss eingeleitet, strömt das Fluid durch den Stutzen.

Die Anordnung ist vorzugsweise zumindest teilweise vakuumisoliert. Der Anschluss und/oder der Fluidtank sind vorzugsweise jeweils zumindest teilweise vakuumisoliert. Die Vakuumisolation trägt dazu bei, dass die Anordnung mit einem kalten Fluid verwendet werden kann. Ein Benutzer kann durch die Vakuumisolation vor Verletzungen geschützt werden. Zudem kann durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anordnung, die mit dem Fluid in Kontakt gelangen. Die Vakuumisolation kann beispielsweise dadurch realisiert sein, dass der Fluidtank einen Innenraum aufweist, der durch eine doppelwandige Begrenzung begrenzt ist.

Der Anschluss umfasst vorzugsweise einen Ventilraum, welcher umlaufend durch eine Mantelwand begrenzt ist. Die Mantelwand ist vorzugsweise vollständig umlaufend ausgebildet. Das bedeutet, dass die Mantelwand - von lokalen Öffnungen abgesehen - umfänglich geschlossen ist. Die Mantelwand ist vorzugsweise um die Ventilachse umlaufend ausgebildet. Der Ventilraum kann insbesondere rotationssymmetrisch zur Ventilachse ausgebildet sein. Eine Abgabeleitung kann vorzugsweise in einer Richtung parallel zur Ventilachse an den Anschluss angebunden werden.

Das Ventil erstreckt sich vorzugsweise axial entlang der Ventilachse zwischen einer ersten Stirnseite und einer zweiten Stirnseite. Im einfachsten Fall ist der Ventilraum durch einen Hohlzylinder ausgebildet. An seiner ersten Stirnseite weist der Ventilraum vorzugsweise eine erste Ventilöffnung auf. An seiner zweiten Stirnseite ist der Ventilraum vorzugsweise über eine Anschlussöffnung mit einem Innenraum des Fluidtanks verbunden. Der Fluidtank kann unmittelbar über die Anschlussöffnung an den Ventilraum angebunden sein. Alternativ kann zwischen dem Anschluss und dem Fluidtank eine Leitung ausgebildet sein. In dem Fall ist der Fluidtank mittelbar über die Leitung an der Anschlussöffnung angebunden. Strömt Fluid über den Anschluss in den Fluidtank, tritt es also durch die Ventilöffnung in den Ventilraum ein, tritt durch die Anschlussöffnung aus dem Ventilraum aus und gelangt anschließend - unmittelbar oder nach Passieren einer Leitung - in den Fluidtank.

Das Ventil umfasst mindestens einen Ventilstempel, welcher zumindest teilweise, vorzugsweise vollständig, innerhalb des Ventilraums angeordnet ist. In Abgrenzung von möglichen weiteren Ventilstempeln wird der mindestens eine Ventilstempel hier bereits als erster Ventilstempel bezeichnet. Ist der erste Ventilstempel der einzige Ventilstempel des Ventils, kann dieser auch einfach als Ventilstempel bezeichnet werden. Bevorzugt ist jedoch, dass das Ventil weiterhin einen zweiten Ventilstempel aufweist und insoweit redundant ausgebildet ist.

Der erste Ventilstempel ist vorzugsweise vollständig innerhalb des Ventilraums angeordnet. Allerdings ist es alternativ beispielsweise möglich, dass der erste Ventilstempel teilweise aus dem Ventilraum herausragt, wenn das Ventil geöffnet ist.

Der erste Ventilstempel ist entlang der Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des ersten Ventilstempels zusammen. Die erste Ventilöffnung ist vorzugsweise senkrecht zur Ventilachse ausgebildet. Ein Mittelpunkt der ersten Ventilöffnung liegt vorzugsweise auf der Ventilachse. Vorzugsweise ist der erste Ventilstempel nicht über seine erste Endposition hinaus und/oder nicht über seine zweite Endposition hinaus beweglich. Das kann durch einen oder mehrere entsprechende Anschläge erreicht werden.

Der erste Ventilstempel verschließt in seiner ersten Endposition die erste Ventilöffnung. Insoweit ist das Ventil verschlossen, wenn sich der erste Ventilstempel in seiner ersten Endposition befindet. Ist der erste Ventilstempel in seiner zweiten Endposition, gibt der erste Ventilstempel die erste Ventilöffnung frei. Sofern kein weiterer Ventilstempel vorhanden ist, welcher eine weitere Ventilöffnung verschließt, ist das Ventil geöffnet, wenn sich der erste Ventilstempel in seiner zweiten Endposition befindet. Das Ventil ist allerdings vorzugsweise nicht nur dann geöffnet, wenn sich der erste Ventilstempel in seiner zweiten Endposition befindet. Befindet sich der erste Ventilstempel zwischen seiner ersten Endposition und seiner zweiten Endposition ist das Ventil vorzugsweise teilweise geöffnet, sofern kein weiterer Ventilstempel vorhanden ist, welcher eine weitere Ventilöffnung verschließt.

Sofern kein Fluid in den Anschluss eingeleitet wird oder von dem Anschluss abgegeben wird, sollte das Ventil verschlossen sein. Ansonsten könnte das Fluid unkontrolliert austreten. Dazu ist es bevorzugt, dass der erste Ventilstempel in seine erste Endposition vorgespannt ist, beispielsweise durch eine Kegelfeder.

Das Ventil umfasst einen ersten Ventilkörper. Es genügt, dass das Ventil einen einzigen Ventilköper aufweist. In dem Fall kann der erste Ventilkörper auch einfach als Ventilkörper bezeichnet werden. Der Ventilraum ist zumindest teilweise innerhalb des ersten Ventilkörpers ausgebildet. Der erste Ventilkörper ist um die Ventilachse umlaufend ausgebildet. Vorzugsweise ist der erste Ventilkörper vollständig um die Ventilachse umlaufend ausgebildet. Das bedeutet, dass der erste Ventilkörper - von lokalen Öffnungen abgesehen - umfänglich geschlossen ist.

In einem montierten Zustand ist der erste Ventilkörper durch eine erste Schraubverbindung gehalten. Der erste Ventilkörper befindet sich im üblichen Betrieb vorzugsweise in seinem montierten Zustand. Unter einer Schraubverbindung ist eine Verbindung zu verstehen, die durch zwei aufeinander abgestimmte Gewinde gebildet ist. Vorzugsweise ist ein erstes Gewinde der ersten Schraubverbindung an dem ersten Ventilkörper ausgebildet. Ein zweite Gewinde der ersten Schraubverbindung kann am Rand einer Aufnahme des Anschlusses ausgebildet sein.

Die erste Schraubverbindung ist koaxial zur Ventilachse ausgebildet. Das bedeutet, dass die an der ersten Schraubverbindung beteiligten Gewinde jeweils um die Ventilachse umlaufend ausgebildet sind. Die erste Schraubverbindung kann also ausgebildet und gelöst werden, indem der erste Ventilkörper um seine Achse rotiert wird.

Das kann bei dem beschriebenen Anschluss mit einem auf den Anschluss abgestimmten Schraubwerkzeug erfolgen. Das Schraubwerkzeug weist vorzugsweise einen hohlen Zylinderkörper auf, welcher an einer ersten Stirnseite Eingriffselemente aufweist. Die Eingriffselemente sind vorzugsweise Vorsprünge, welche in einer Richtung parallel zu einer Achse des Zylinderkörpers über die erste Stirnseite des Zylinderkörpers hinausstehen. Die Vorsprünge können auch als Zapfen bezeichnet werden. Im einfachsten Fall ist das Schraubwerkzeug also durch ein Rohr gebildet, welches an einer Seite Vorsprünge aufweist, die axial über das übrige Rohr hervorstehen.

Das Schraubwerkzeug weist vorzugsweise pro Eingriff am Flansch des ersten Ventilkörpers genau ein Eingriffselement auf. Möglich ist aber auch, dass der erste Ventilkörper mehr Eingriffe aufweist als das Schraubwerkezug Eingriffselemente hat. In dem Fall ist es leichter, das Schraubwerkzeug mit dem ersten Ventilkörper in Eingriff zu bringen. Bevorzugt weist der erste Ventilkörper 1,5- bis 3-mal so viele Eingriffe auf wie das Schraubwerkezug Eingriffselemente hat. Vorzugsweise weist der erste Ventilkörper 2 bis 10 Eingriffe auf, insbesondere 4 bis 6. Die Eingriffe sind vorzugsweise umfänglich gleichmäßig verteilt.

Die Eingriffselemente des Schraubwerkzeugs können in Eingriffe am ersten Ventilkörper eingreifen. So können der erste Ventilkörper und das Schraubwerkzeug temporär drehfest ineinandergreifen. In dem Fall sind das Schraubwerkzeug und der erste Ventilkörper vorzugsweise koaxial zueinander ausgebildet. Wird das Schraubwerkzeug um seine Achse rotiert - welche mit der Ventilachse zusammenfällt - wird der erste Ventilkörper um seine Achse rotiert.

Der erste Ventilkörper weist einen um die Ventilachse umlaufenden Flansch auf, in welchem die Eingriffe für die Eingriffselemente des Schraubwerkzeugs vorgesehen sind. Der Flansch steht vorzugsweise radial über den übrigen ersten Ventilkörper hervor. Sind die Eingriffselemente des Schraubwerkzeugs mit den Eingriffen des ersten Ventilkörpers in Eingriff gebracht, liegt der Flansch axial an dem Schraubwerkzeug an und der übrige erste Ventilkörper ist innerhalb des hohlen Zylinderköpers der aufgenommen.

Durch diese Ausgestaltung kann die erste Schraubverbindung einfach und schnell ausgebildet und gelöst werden. Dafür ist das wie beschrieben einfach ausgestaltete Schraubwerkzeug ausreichend. Der erste Ventilkörper kann insbesondere zu Wartungszecken leicht abgeschraubt werden. Das ist beispielsweise sinnvoll, um Dichtungen auszutauschen. Das ist besonders dann vorteilhaft, wenn die Dichtungen mit Fluid bei tiefen Temperaturen in Kontakt gelangen.

Die erste Schraubverbindung kann zudem mit vergleichsweise großen Gewinden ausgebildet sein. Insoweit kann die erste Schraubverbindung besonders haltbar sein. Ein erstes Gewinde der ersten Schraubverbindung kann sich insbesondere umfänglich über den gesamten ersten Ventilkörper erstrecken. Ein zweites Gewinde der ersten Schraubverbindung kann sich beispielsweise umfänglich über einen gesamten Rand der Aufnahme erstrecken.

In einer bevorzugten Ausführungsform der Anordnung sind die Eingriffe des ersten Ventilkörpers jeweils als ein Durchgangsloch oder Sackloch mit einer parallel zur Ventilachse ausgerichteten Achse ausgebildet.

Das Sackloch ist axial an der Seite offen, von welcher das Schraubwerkzeug zum Flansch des ersten Ventilkörpers geführt werden kann. Das Durchgangsloch ist axial an beiden Seiten offen. So kann in beiden Fällen das jeweilige Eingriffselement des Schraubwerkzeugs in den entsprechenden Eingriff geführt werden.

In einer weiteren bevorzugten Ausführungsform der Anordnung weist der Anschluss weiterhin eine um zumindest einen Teil des Ventils umlaufende Wand auf, welche von dem Ventil zumindest in einem Abschnitt entlang der Ventilachse durch einen Ringspalt beabstandet ist, über welchen die Eingriffe des ersten Ventilkörpers für das Schraubwerkzeug zugänglich sind.

Der Ringspalt kann als eine Aufnahme für einen Stutzen einer Anschlusseinrichtung aufgefasst werden. Wird die Anschlusseinrichtung an den Anschluss angeschlossen, kann der Stutzen der Anschlusseinrichtung zwischen dem Ventil und der umlaufenden Wand, also in dem Ringspalt, aufgenommen werden. Das Ventil befindet sich dann innerhalb des Stutzens und die umlaufende Wand befindet sich außerhalb des Stutzens. Vorzugsweise sind die Mantelwand des Ventils, der Stutzen und die umlaufende Wand koaxial zueinander angeordnet, wenn der Stutzen in dem Ringspalt aufgenommen ist. Durch diese Ausgestaltung kann der Stutzen sicher und dicht an dem Anschluss gehalten sein.

An der zweiten Seite des Ventils ist der Ringspalt vorzugsweise verschlossen. Das trägt dazu bei, dass der Anschluss dicht mit der Anschlusseinrichtung verbunden werden kann.

Die umlaufende Wand erstreckt sich axial vorzugsweise über die erste Stirnseite des Ventilraums hinaus. Insbesondere in dem Fall kann die umlaufende Wand das Ventil schützen. Das gilt vor allem dann, wenn keine Anschlusseinrichtung an den Anschluss angebunden ist.

Der Ringspalt, welcher im üblichen Betrieb wie beschrieben dazu genutzt wird, den Stutzen der Anschlusseinrichtung aufzunehmen, kann im Falle einer Wartung auch dazu genutzt werden, die Eingriffe des ersten Ventilkörpers mit dem Schraubwerkzeug zu erreichen.

In einer weiteren bevorzugten Ausführungsform der Anordnung weist das Ventil weiterhin einen zweiten Ventilkörper auf, welcher um die Ventilachse umlaufend ausgebildet ist, an welchem der erste Ventilkörper in dem montierten Zustand über die erste Schraubverbindung gehalten ist und welcher über eine zweite Schraubverbindung gehalten ist, wobei der zweite Ventilkörper mehrere Eingriffe für ein jeweiliges Eingriffselement eines Schraubwerkzeugs aufweist, so dass die zweite Schraubverbindung ausgebildet und gelöst werden kann, indem das Schraubwerkzeug um die Ventilachse rotiert wird, während die Eingriffselemente des Schraubwerkzeugs in die entsprechenden Eingriffe des zweiten Ventilkörpers eingreifen.

Der Ventilraum ist in der vorliegenden Ausführungsform vorzugsweise zumindest teilweise innerhalb des ersten Ventilkörpers und zumindest teilweise innerhalb des zweiten Ventilkörpers ausgebildet. Der zweite Ventilkörper ist um die Ventilachse umlaufend ausgebildet. Vorzugsweise ist der zweite Ventilkörper vollständig um die Ventilachse umlaufend ausgebildet. Das bedeutet, dass der zweite Ventilkörper - von lokalen Öffnungen abgesehen - umfänglich geschlossen ist.

In einem montierten Zustand ist der erste Ventilkörper durch eine erste Schraubverbindung gehalten. Das ist in der vorliegenden Ausführungsform insoweit der Fall, als dass der erste Ventilkörper über die erste Schraubverbindung an dem zweiten Ventilkörper gehalten ist. Vorzugsweise ist ein erstes Gewinde der ersten Schraubverbindung an dem ersten Ventilkörper ausgebildet. Ein zweites Gewinde der ersten Schraubverbindung ist vorzugsweise an dem zweiten Ventilkörper ausgebildet.

In einem montierten Zustand ist der zweite Ventilkörper durch eine zweite Schraubverbindung gehalten. Der Anschluss weist vorzugsweise eine Aufnahme auf, in welcher der zweite Ventilkörper in dem montierten Zustand über die zweite Schraubverbindung gehalten ist. Der zweite Ventilkörper befindet sich im üblichen Betrieb vorzugsweise in seinem montierten Zustand.

Vorzugsweise ist ein erstes Gewinde der zweiten Schraubverbindung an dem zweiten Ventilkörper ausgebildet. Ein zweites Gewinde der zweiten Schraubverbindung kann an einem Rand der Aufnahme des Anschlusses ausgebildet sein.

Die erste Schraubverbindung und die zweite Schraubverbindung sind vorzugsweise axial voneinander beabstandet. Die zweite Schraubverbindung ist koaxial zur Ventilachse ausgebildet. Das bedeutet, dass die an der zweiten Schraubverbindung beteiligten Gewinde jeweils um die Ventilachse umlaufend ausgebildet sind. Die zweite Schraubverbindung kann also ausgebildet und gelöst werden, indem der zweite Ventilkörper um seine Achse rotiert wird. Das ist insbesondere dann möglich, wenn der erste Ventilkörper bereits abgeschraubt ist. Ausgehend von dem montierten Zustand kann also zuerst die erste Schraubverbindung gelöst werden, so dass der erste Ventilkörper entfernt werden kann. Anschließend ist der zweite Ventilkörper zugänglich, so dass die zweite Schraubverbindung gelöst werden kann.

Das kann wie bei der ersten Schraubverbindung mit einem Schraubwerkzeug erfolgen. Vorzugsweise kann das gleiche Schraubwerkzeug für die erste Schraubverbindung und für die zweite Schraubverbindung verwendet werden. Es ist daher bevorzugt, dass der zweite Ventilkörper mehrere Eingriffe für ein jeweiliges der Eingriffselemente des zuvor beschriebenen Schraubwerkzeugs aufweist. Denkbar ist aber auch, dass ein erstes Schraubwerkzeug für die erste Schraubverbindung und ein zweites Schraubwerkzeug für die zweite Schraubverbindung vorgesehen sind.

Das Schraubwerkzeug weist vorzugsweise pro Eingriff des zweiten Ventilkörpers genau ein Eingriffselement auf. Möglich ist aber auch, dass der zweite Ventilkörper mehr Eingriffe aufweist als das Schraubwerkezug Eingriffselemente hat. In dem Fall ist es leichter, das Schraubwerkzeug mit dem zweiten Ventilkörper in Eingriff zu bringen. Bevorzugt weist der zweite Ventilkörper 1,5- bis 3-mal so viele Eingriffe auf wie das Schraubwerkezug Eingriffselemente hat. Besonders bevorzugt hat der erste Ventilkörper genau so viele Eingriffe wie der zweite Ventilkörper. Vorzugsweise weist der zweite Ventilkörper 2 bis 10 Eingriffe auf, insbesondere 4 bis 6. Die Eingriffe sind vorzugsweise umfänglich gleichmäßig verteilt.

Die Eingriffselemente des Schraubwerkzeugs können in Eingriffe am zweiten Ventilkörper eingreifen. So können der zweite Ventilkörper und das Schraubwerkzeug temporär drehfest ineinandergreifen. Wird das Schraubwerkzeug um seine Achse rotiert - welche mit der Ventilachse zusammenfällt - wird der zweite Ventilkörper um seine Achse rotiert.

In einer weiteren bevorzugten Ausführungsform der Anordnung weist der zweite Ventilkörper einen um die Ventilachse umlaufenden Flansch auf, in welchem die Eingriffe des zweiten Ventilkörpers ausgebildet sind.

Der Flansch steht vorzugsweise radial über den übrigen zweiten Ventilkörper hervor. Sind die Eingriffselemente des Schraubwerkzeugs mit den Eingriffen des zweiten Ventilkörpers in Eingriff gebracht, liegt der Flansch des zweiten Ventilkörpers axial an dem Schraubwerkzeug an und der übrige zweite Ventilkörper ist innerhalb des hohlen Zylinderköpers aufgenommen. Die zweite Schraubverbindung kann also ausgebildet und gelöst werden, indem das Schraubwerkzeug um die Ventilachse rotiert wird, während die Eingriffselemente des Schraubwerkzeugs in die entsprechenden Eingriffe des zweiten Ventilkörpers eingreifen.

Durch diese Ausgestaltung kann die zweite Schraubverbindung ebenso einfach und schnell ausgebildet und gelöst werden, wie die erste Schraubverbindung. Dafür ist lediglich das einfach ausgestaltete Schraubwerkzeug erforderlich. Der zweite Ventilkörper kann insbesondere zu Wartungszecken leicht abgeschraubt werden. Das ist beispielsweise sinnvoll, um Dichtungen auszutauschen. Das ist besonders dann vorteilhaft, wenn die Dichtungen mit Fluid bei tiefen Temperaturen in Kontakt gelangen.

Die zweite Schraubverbindung kann zudem durch vergleichsweise große Gewinde ausgebildet sein. Das erste Gewinde der zweiten Schraubverbindung kann sich insbesondere umfänglich über den gesamten zweiten Ventilkörper erstrecken. Das zweite Gewinde der zweiten Schraubverbindung kann sich beispielsweise umfänglich über einen gesamten Rand der Aufnahme erstrecken. Insoweit kann die zweite Schraubverbindung besonders haltbar sein. Entsprechendes gilt für die erste Schraubverbindung. In der vorliegenden Ausführungsform kann sich das zweite Gewinde der ersten Schraubverbindung umfänglich über den gesamten zweiten Ventilkörper erstrecken.

Der Flansch des ersten Ventilkörpers liegt im montierten Zustand vorzugsweise am Flansch des zweiten Ventilkörpers an.

In einer weiteren bevorzugten Ausführungsform der Anordnung ist an einer ersten Seite und/oder an einer zweiten Seite des Flansches des zweiten Ventilkörpers jeweils eine um die Ventilachse umlaufende Dichtung angeordnet.

Durch die Dichtungen kann verhindert werden, dass das Fluid an dem Ventil vorbei strömt. Die Dichtung an der ersten Seite des Flansches des zweiten Ventilkörpers ist vorzugsweise zwischen dem Flansch des ersten Ventilkörpers und dem Flansch des zweiten Ventilkörpers angeordnet. Insoweit kann diese Dichtung den ersten Ventilkörper und den zweiten Ventilkörper gegeneinander abdichten. Die Dichtung an der zweiten Seite des Flansches des zweiten Ventilkörpers ist vorzugsweise zwischen dem Flansch des zweiten Ventilkörpers und dem Rand der Aufnahme angeordnet. Insoweit kann diese Dichtung den zweiten Ventilkörper und den Rand der Aufnahme gegeneinander abdichten.

Als ein weiterer Aspekt der Erfindung wird ein Set vorgestellt, umfassend eine wie beschrieben ausgebildete Anordnung sowie das Schraubwerkzeug, wobei das Schraubwerkzeug einen hohlen Zylinderkörper aufweist, welcher an einer ersten Stirnseite die Eingriffselemente aufweist.

Die beschriebenen Vorteile und Merkmale Anordnung sind auf das Set anwendbar und übertragbar, und umgekehrt.

In einer bevorzugten Ausführungsform des Sets sind die Eingriffselemente Vorsprünge, welche in einer Richtung parallel zu einer Achse des Zylinderkörpers über die erste Stirnseite des Zylinderkörpers hinausstehen.

Als ein weiterer Aspekt der Erfindung wird ein Verfahren zum Betanken eines Fahrzeugs mit einer wie beschrieben ausgestalteten Anordnung mit einem Fluid vorgestellt, wobei das Verfahren die folgenden Schritte umfasst, welche in der angegebenen Reihenfolge durchgeführt werden:
a) Anschließen einer Abgabeleitung an den Anschluss sowie Öffnen des Ventils,
b) Befüllen des Innenraums des Fluidtanks über den Anschluss mit Fluid aus der Abgabeleitung,
c) Schließen des Ventils und Abnehmen der Abgabeleitung von dem Anschluss.

Die beschriebenen Vorteile und Merkmale Anordnung und des Sets sind auf das Verfahren anwendbar und übertragbar, und umgekehrt. Die Anordnung ist vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss sowie des Öffnens des Ventils des Anschlusses. Die beiden Teilschritte können gleichzeitig oder nacheinander durchgeführt werden.

Schritt c) beinhaltet die beiden Teilschritte des Schließens des Ventils des Anschlusses sowie des Abnehmen der Abgabeleitung von dem Anschluss. Die beiden Teilschritte können gleichzeitig oder nacheinander durchgeführt werden.

Als ein weiterer Aspekt der Erfindung wird ein Anschluss zur Aufnahme einer Leitung vorgestellt, wobei der Anschluss ein Ventil umfasst mit einem ersten Ventilkörper, welcher um eine Ventilachse umlaufend ausgebildet ist und welcher in einem montierten Zustand durch eine erste Schraubverbindung gehalten ist, welche koaxial zur Ventilachse ausgebildet ist, wobei der erste Ventilkörper einen um die Ventilachse umlaufenden Flansch aufweist, in welchem mehrere Eingriffe für ein jeweiliges Eingriffselement eines Schraubwerkzeugs vorgesehen sind, so dass die erste Schraubverbindung ausgebildet und gelöst werden kann, indem das Schraubwerkzeug um die Ventilachse rotiert wird, während die Eingriffselemente des Schraubwerkzeugs in die entsprechenden Eingriffe des ersten Ventilkörpers eingreifen.

Die beschriebenen Vorteile und Merkmale der Anordnung, des Sets und des Verfahrens sind auf den Anschluss anwendbar und übertragbar, und umgekehrt. Der Anschluss ist vorzugsweise wie der Anschluss der beschriebenen Anordnung ausgebildet.

Die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich der beschriebene Anschluss immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über den beschriebenen Anschluss aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit dem beschriebenen Anschluss können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 3

Nachfolgend werden Ausführungsformen der Erfindung beschrieben. Die Ausführungsformen haben zwar die Struktur von Patentansprüchen, stellen aber keine Patentansprüche dar.
1. Anordnung (3) umfassend einen Fluidtank (1) und einen daran angebundenen Anschluss (100), wobei der Anschluss (100) ein Ventil (101) umfasst mit einem ersten Ventilkörper (123), welcher um eine Ventilachse (118) umlaufend ausgebildet ist und welcher in einem montierten Zustand durch eine erste Schraubverbindung (125) gehalten ist, welche koaxial zur Ventilachse (118) ausgebildet ist, wobei der erste Ventilkörper (123) einen um die Ventilachse (118) umlaufenden Flansch (127) aufweist, in welchem mehrere Eingriffe (128) für ein jeweiliges Eingriffselement (600) eines Schraubwerkzeugs (6) vorgesehen sind, so dass die erste Schraubverbindung (125) ausgebildet und gelöst werden kann, indem das Schraubwerkzeug (6) um die Ventilachse (118) rotiert wird, während die Eingriffselemente (600) des Schraubwerkzeugs (6) in die entsprechenden Eingriffe (128) des ersten Ventilkörpers (123) eingreifen.
2. Anordnung (3) nach Ausführungsform 1, wobei die Eingriffe (128) des ersten Ventilkörpers (123) jeweils als ein Durchgangsloch (129) oder Sackloch mit einer parallelzur Ventilachse (118) ausgerichteten Achse (130) ausgebildet sind.
3. Anordnung (3) nach einer der vorstehenden Ausführungsformen, wobei der Anschluss (100) weiterhin eine um zumindest einen Teil des Ventils (101) umlaufende Wand (117) aufweist, welche von dem Ventil (101) zumindest in einem Abschnitt entlang der Ventilachse (118) durch einen Ringspalt (119) beabstandet ist, über welchen die Eingriffe (128) des ersten Ventilkörpers (123) für das Schraubwerkzeug (6) zugänglich sind.
4. Anordnung (3) nach einer der vorstehenden Ausführungsformen, wobei das Ventil (101) weiterhin einen zweiten Ventilkörper (124) aufweist, welcher um die Ventilachse (118) umlaufend ausgebildet ist, an welchem der erste Ventilkörper (123) in dem montierten Zustand über die erste Schraubverbindung (125) gehalten ist und welcher über eine zweite Schraubverbindung (126) gehalten ist, wobei der zweite Ventilkörper (124) mehrere Eingriffe (128) für ein jeweiliges Eingriffselement (600) eines Schraubwerkzeugs (6) aufweist, so dass die zweite Schraubverbindung (126) ausgebildet und gelöst werden kann, indem das Schraubwerkzeug (6) um die Ventilachse (118) rotiert wird, während die Eingriffselemente (600) des Schraubwerkzeugs (6) in die entsprechenden Eingriffe (128) des zweiten Ventilkörpers (124) eingreifen.
5. Anordnung (3) nach Ausführungsform 4, wobei der zweite Ventilkörper (124) einen um die Ventilachse (118) umlaufenden Flansch (127) aufweist, in welchem die Eingriffe (128) des zweiten Ventilkörpers (124) ausgebildet sind.
6. Anordnung (3) nach Ausführungsform 5, wobei an einer ersten Seite (131) und/oder an einer zweiten Seite (132) des Flansches (127) des zweiten Ventilkörpers (124) jeweils eine um die Ventilachse (118) umlaufende Dichtung (133) angeordnet ist.
7. Set (5) umfassend eine Anordnung (3) nach einer der vorstehenden Ausführungsformen sowie das Schraubwerkzeug (6), wobei das Schraubwerkzeug (6) einen hohlen Zylinderkörper (601) aufweist, welcher an einer ersten Stirnseite (602) die Eingriffselemente (600) aufweist.
8. Set (5) nach Ausführungsform 7, wobei die Eingriffselemente (600) Vorsprünge sind, welche in einer Richtung parallel zu einer Achse (604) des Zylinderkörpers (601) über die erste Stirnseite (602) des Zylinderkörpers (601) hinausstehen.
9. Verfahren zum Betanken eines Fahrzeugs (4) mit einer Anordnung (3) nach einer der vorstehenden Ausführungsformen mit einem Fluid, umfassend die folgenden Schritte, welche in der angegebenen Reihenfolge durchgeführt werden:
   a) Anschließen einer Abgabeleitung (201) an den Anschluss (100) sowie Öffnen des Ventils (101),
   b) Befüllen des Innenraums (109) des Fluidtanks (1) über den Anschluss (100) mit Fluid aus der Abgabeleitung (201),
   c) Schließen des Ventils (101) und Abnehmen der Abgabeleitung (201) von dem Anschluss (100).
10. Anschluss (100) zur Aufnahme einer Leitung (201), wobei der Anschluss (100) ein Ventil (101) umfasst mit einem ersten Ventilkörper (123), welcher um eine Ventilachse (118) umlaufend ausgebildet ist und welcher in einem montierten Zustand durch eine erste Schraubverbindung (125) gehalten ist, welche koaxial zur Ventilachse (118) ausgebildet ist, wobei der erste Ventilkörper (123) einen um die Ventilachse (118) umlaufenden Flansch (127) aufweist, in welchem mehrere Eingriffe (128) für ein jeweiliges Eingriffselement (600) eines Schraubwerkzeugs (6) vorgesehen sind, so dass die erste Schraubverbindung (125) ausgebildet und gelöst werden kann, indem das Schraubwerkzeug (6) um die Ventilachse (118) rotiert wird, während die Eingriffselemente (600) des Schraubwerkzeugs (6) in die entsprechenden Eingriffe (128) des ersten Ventilkörpers (123) eingreifen.

### Abschnitt 4 (10 2022 104 637.0)

Die zu lösenden Aufgaben werden gelöst mit der Vorrichtung, der Anordnung, dem Verfahren und der Anschlusseinrichtung gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei die Anschlusseinrichtung eine um eine Hauptachse der Anschlusseinrichtung umlaufende Außenwand aufweist, wobei die Anschlusseinrichtung weiterhin eine erste Hülse und eine zweite Hülse aufweist, welche jeweils um die Außenwand umlaufend ausgebildet sind und welche gemeinsam an einer jeweiligen dem Stutzen zugewandten ersten Seite mit der Außenwand eine um die Hauptachse umlaufende Aufnahme für ein Anschlussende des Anschlusses begrenzen, wobei die zweite Hülse zumindest teilweise radial außerhalb der ersten Hülse angeordnet ist, wobei zwischen der ersten Hülse und der zweiten Hülse ein zweiter Ringspalt ausgebildet ist, welcher mit der Aufnahme für das Anschlussende des Anschlusses und mit einer Messeinrichtung zur Detektion des Fluids verbunden ist.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Die Anschlusseinrichtung weist eine um eine Hauptachse der Anschlusseinrichtung umlaufende Außenwand auf. Der Innenraum der Anschlusseinrichtung ist innerhalb der Außenwand angeordnet. Der Innenraum der Anschlusseinrichtung kann unmittelbar von der Außenwand begrenzt sein. Alternativ können zwischen der Außenwand und dem Innenraum weitere Elemente angeordnet sein, insbesondere eine oder mehrere weitere umlaufende Wände. Insbesondere kann die Außenwand auch als eine Doppelwand ausgebildet sein. In einem Spalt zwischen den beiden Teilen der Doppelwand herrscht vorzugsweise ein Vakuum, so dass der Innenraum der Anschlusseinrichtung vakuumisoliert ist. Die Außenwand ist vorzugsweise vollständig um die Hauptachse der Anschlusseinrichtung umlaufend ausgebildet. Insbesondere ist die Außenwand vorzugsweise bis auf lokale Öffnungen umfänglich geschlossen. Als eine lokale Öffnung kommt beispielsweise eine Mündung der Abgabeleitung in den Innenraum der Anschlusseinrichtung in Betracht.

Die Hauptachse der Anschlusseinrichtung fällt vorzugsweise mit einer Ventilachse des Ventils zusammen. Das Ventil und der Ventilantrieb liegen vorzugsweise auf der Hauptachse der Anschlusseinrichtung. Das Ventil und der Ventilantrieb sind vorzugsweise über eine Stange mechanische miteinander gekoppelt, welche entlang der Hauptachse der Anschlusseinrichtung ausgebildet ist. Die Anschlusseinrichtung wird vorzugsweise in einer Richtung mit dem Anschluss verbunden, welche entlang der Hauptachse der Anschlusseinrichtung orientiert ist.

Die Anschlusseinrichtung weist weiterhin eine erste Hülse und eine zweite Hülse auf, welche jeweils um die Außenwand umlaufend ausgebildet sind. Vorzugsweise sind die erste Hülse und/oder die zweite Hülse vollständig um die Hauptachse der Anschlusseinrichtung umlaufend ausgebildet. Die erste Hülse und die zweite Hülse können jeweils die Form eines Zylindermantels haben.

Die erste Hülse und die zweite Hülse dienen in Kombination miteinander dazu, die Anschlusseinrichtung sicher mit dem Anschluss zu verbinden. Dazu begrenzen die erste Hülse und die zweite Hülse gemeinsam an einer jeweiligen dem Stutzen zugewandten ersten Seite mit der Außenwand eine um die Hauptachse umlaufende Aufnahme für ein Anschlussende des Anschlusses. Die Aufnahme für das Anschlussende des Anschlusses wird also von der Außenwand, der ersten Hülse und der zweiten Hülse jeweils teilweise begrenzt. Damit das Anschlussende in die Aufnahme eingeführt werden kann, ist die Aufnahme nicht zu allen Seiten begrenzt. Insbesondere weist die Aufnahme eine Öffnung auf, über welche das Anschlussende in die Aufnahme eingeführt werden kann. Die Aufnahme ist vorzugsweise so ausgebildet, dass das Anschlussende in einer Richtung entlang der Hauptachse der Anschlusseinrichtung in die Aufnahme eingeführt werden kann. Dabei kann das Anschlussende an der Außenwand entlang geführt werden. Der Anschluss wird vorzugsweise axial in die Aufnahme eingeführt.

Die zweite Hülse ist zumindest teilweise radial außerhalb der ersten Hülse angeordnet. Vorzugsweise überlappen die erste Hülse und die zweite Hülse axial zumindest teilweise. Es gibt daher zumindest einen axialen Abschnitt, in welchem die erste Hülse zwischen der Außenwand und der zweiten Hülse angeordnet ist. Auch wenn dies möglich ist, sind vorzugsweise zwischen der Außenwand und der ersten Hülse keine weiteren Elemente angeordnet. Auch wenn dies möglich ist, sind vorzugsweise zwischen der ersten Hülse und der zweiten Hülse keine weiteren Elemente angeordnet.

Die zweite Hülse ragt vorzugsweise an ihrer ersten Seite axial über die erste Hülse hinaus. Das erste Ende der zweiten Hülse ist also näher am Stutzen angeordnet als das erste Ende der ersten Hülse. In dem Fall kann die Aufnahme einen ersten Abschnitt haben, in welchem die Aufnahme radial nach innen durch die Außenwand begrenzt ist und radial nach außen durch die zweite Hülse begrenzt ist. Axial ist der erste Abschnitt der Aufnahme vorzugsweise an einer ersten Seite offen, so dass das Anschlussende des Anschlusses in die Aufnahme eingeführt werden kann. An einer zweiten Seite kann der erste Abschnitt axial in einen zweiten Abschnitt der Aufnahme übergehen. Im zweiten Abschnitt kann die Aufnahme radial nach innen durch die Außenwand begrenzt sein und radial nach außen durch die erste Hülse begrenzt sein. Axial kann die Hülse an einem zweiten Ende des zweiten Abschnitts durch die erste Hülse begrenzt sein. Der erste Abschnitt und der zweite Abschnitt zusammen ergeben also eine Aufnahme in Form eines Ringspaltes, welcher an einer dem Stutzen zugewandten Seite axial offen ist, um das Anschlussende des Anschlusses aufnehmen zu können, und welcher na einer zweiten Seite axial verschlossen ist.

Zwischen der Außenwand und der ersten Hülse ist vorzugsweise ein erster Ringspalt ausgebildet. Der erste Ringspalt ist radial vorzugsweise einerseits durch die Außenwand und andererseits durch die erste Hülse begrenzt. Alternativ ist denkbar, dass die Außenwand und die erste Hülse dicht aneinander anliegen.

Zwischen der ersten Hülse und der zweiten Hülse ist ein zweiter Ringspalt ausgebildet. Der zweite Ringspalt ist radial vorzugsweise einerseits durch die erste Hülse und andererseits durch die zweite Hülse begrenzt.

Der zweite Ringspalt ist mit der Aufnahme für das Anschlussende des Anschlusses und mit einer Messeinrichtung zur Detektion des Fluids verbunden. Durch diese Ausgestaltung kann die Verbindung zwischen der Anschlusseinrichtung und dem Anschluss auf Dichtigkeit überprüft werden, insbesondere während das Fluid in den Anschluss eingeleitet wird. Liegt der Stutzen nicht dicht an dem Anschluss an, kann Fluid in den zweiten Ringspalt gelangen. Über den zweiten Ringspalt kann das Fluid gesammelt werden und zu der Messeinrichtung gelangen, wo es detektiert werden kann. Ist das der Fall, können beispielsweise eine Warnung an einen Benutzer ausgegeben werden und/oder ein Fehler protokolliert werden. Auch kann das Einleiten des Fluids in den Anschluss automatisiert gestoppt werden, wenn eine Undichtigkeit detektiert wird.

Im einfachsten Fall ist die Messeinrichtung dazu eingerichtet, zwischen Vorliegen und Nichtvorliegen des Fluids in dem zweiten Ringspalt zu unterscheiden. Das kann beispielsweise über einen Grenzwert für die Fluidkonzentration realisiert sein. Vorzugsweise ist die Messeinrichtung aber auch dazu eingerichtet, die Fluidmenge zu quantifizieren.

Die Messeinrichtung ist vorzugsweise über eine Messleitung mit dem zweiten Ringspalt verbunden. Denkbar ist aber auch, dass die Messeinrichtung unmittelbar mit dem zweiten Ringspalt verbunden ist.

Die Messleitung ist vorzugsweise axial von der Aufnahme für das Anschlussende beabstandet mit dem zweiten Ringspalt verbunden. Vorzugsweise ist die Messleitung mindestens 5 cm, insbesondere mindestens 10 cm axial von der Aufnahme für das Anschlussende beabstandet mit dem zweiten Ringspalt verbunden. Die Messleitung kann also an einer Stelle an den zweiten Ringspalt angebunden sein, welche nicht in unmittelbarer Nähe der Aufnahme für das Anschlussende ist. Das ist insoweit günstig, als dass im Bereich der Aufnahme Bauraum knapp ist. Das gilt insbesondere in dem bevorzugten Fall, dass die Anschlusseinrichtung ein Verrastelement aufweist, um die Anschlusseinrichtung an dem Anschluss zu arretieren. Durch den zweiten Ringspalt kann insbesondere auf eine Bohrung verzichtet werden, über welche bei Undichtigkeit austretendes Fluid alternativ gesammelt werden könnte.

In einer bevorzugten Ausführungsform der Vorrichtung ist die zweite Hülse derart lokal mit der ersten Hülse verbunden, dass der zweite Ringspalt zu einer zweiten Seite der zweiten Hülse hin verschlossen ist.

Sollte Fluid in den zweiten Ringspalt gelangen, kann es in dieser Ausführungsform den zweiten Ringspalt nicht an der zweiten Seite der zweiten Hülse verlassen. Vorzugsweise kann das Fluid den zweiten Ringspalt nur durch die Messleitung verlassen. Das Fluid kann in dem Fall nicht an der Messeinrichtung vorbei aus dem zweiten Ringspalt austreten.

Die erste Hülse und die zweite Hülse können beispielsweise über eine um die Hauptachse der Anschlusseinrichtung umlaufende Verbindung miteinander verbunden sein, insbesondere über eine um die Hauptachse der Anschlusseinrichtung umlaufende Schweißnaht. Die Verbindung ist vorzugsweise vollständig um die Hauptachse der Anschlusseinrichtung umlaufend ausgebildet. Die Verbindung ist vorzugsweise axial von der Aufnahme für das Anschlussende beabstandet. Besonders bevorzugt ist die Verbindung mindestens 6 cm, insbesondere mindestens 12 cm von der Aufnahme für das Anschlussende beabstandet. Die Messleitung ist vorzugsweise zwischen der Verbindung und der Aufnahme mit dem zweiten Ringspalt verbunden.

In einer weiteren bevorzugten Ausführungsform der Vorrichtung ist die zweite Hülse zur Fixierung des Anschlusses an der Anschlusseinrichtung eingerichtet.

Wird das Fluid in den Anschluss eingeleitet, sollte die Anschlusseinrichtung möglichst sicher mit dem Anschluss verbunden sein. In der vorliegenden Ausführungsform trägt dazu die zweite Hülse bei. Die zweite Hülse kann so ausgestaltet sein, dass die zweite Hülse mit einem Gegenstück des Anschlusses zusammenwirkt. Vorzugsweise weist die Anschlusseinrichtung ein Verrastelement auf. Mit dem Verrastelement kann der Anschluss an der Anschlusseinrichtung und insbesondere an der zweiten Hülse arretieret werden.

In einer weiteren bevorzugten Ausführungsform der Vorrichtung ist zwischen der Außenwand und der ersten Hülse ein erster Ringspalt ausgebildet, welcher mit der Aufnahme für das Anschlussende des Anschlusses und mit einer Spüleinrichtung der Vorrichtung verbunden ist.

Wird das Fluid in den Anschluss eingeleitet, sollte die Anschlusseinrichtung möglichst sicher mit dem Anschluss verbunden sein. Das dient dazu, Austreten des Fluids in die Umgebung zu verhindern. Darüber hinaus kann eine Undichtigkeit aber auch dazu führen, dass Umgebungsluft in den Anschluss gelangt. Auch das wird vorzugsweise verhindert, insbesondere bei kaltem Fluid. Wird beispielsweise ein Fahrzeug mit flüssigem Wasserstoff betankt, kann Luft im Wasserstofftank des Fahrzeugs zu einem Feststoff werden. Feste Luft im Wasserstofftank kann zu Schäden oder Störungen im Prozess führen und sollte daher soweit wie möglich verhindert werden.

Das Eintreten von Umgebungsluft in den Anschluss kann in der vorliegenden Ausführungsform dadurch besonders gut verhindert werden, dass die Vorrichtung eine Spüleinrichtung aufweist, welche an den ersten Ringspalt angebunden ist. Die Spüleinrichtung ist vorzugsweise dazu eingerichtet, den ersten Ringspalt mit einem Spülmedium zu spülen. Im einfachsten Fall ist die Spüleinrichtung eine Quelle, welche das Spülmedium unter Druck abgibt. Das Spülmedium kann flüssig oder gasförmig sein. Vorzugsweise ist das Spülmedium ein gasförmiges Inertgas, beispielsweise Stickstoff.

Umgebungsluft kann insbesondere über den ersten Ringspalt und an diesen angebundene Bereiche in den Anschluss gelangen. Wird der erste Ringspalt mit einem Inertgas gespült, wird die Umgebungsluft aus diesen Bereichen verdrängt. Sofern ein Gas aus der Umgebung in den Anschluss gerät, ist dies daher eher das Inertgas als Umgebungsluft. Sollte ein Inertgas in den Anschluss gelangen, ist dies im Allgemeinen weniger problematisch als wenn Luft in den Anschluss gelangt. Das liegt insbesondere an dem Sauerstoff-Anteil in der Luft.

Die Spüleinrichtung ist vorzugsweise über eine Spülleitung mit dem ersten Ringspalt verbunden. Denkbar ist aber auch, dass die Spüleinrichtung unmittelbar mit dem ersten Ringspalt verbunden ist.

Die Spüleinrichtung ist vorzugsweise axial von der Aufnahme für das Anschlussende beabstandet mit dem ersten Ringspalt verbunden. Vorzugsweise ist die Spülleitung mindestens 5 cm, insbesondere mindestens 10 cm axial von der Aufnahme für das Anschlussende beabstandet mit dem ersten Ringspalt verbunden. Die Spülleitung kann also an einer Stelle an den ersten Ringspalt angebunden sein, welche nicht in unmittelbarer Nähe der Aufnahme für das Anschlussende ist. Das ist insoweit günstig, als dass im Bereich der Aufnahme Bauraum knapp ist. Das gilt insbesondere in dem bevorzugten Fall, dass die Anschlusseinrichtung ein Verrastelement aufweist, um die Anschlusseinrichtung an dem Anschluss zu arretieren.

Die Spülleitung und die Messleitung sind vorzugsweise umfänglich voneinander beabstandet an der Anschlusseinrichtung angeordnet. So können die Spülleitung und die Messleitung axial an der gleichen Stelle oder axial nah beieinander an den ersten Ringspalt beziehungsweise an den zweiten Ringspalt angebunden sein, ohne dass die Spülleitung und die Messleitung einander beeinträchtigen.

Der erste Ringspalt und der zweite Ringspalt sind vorzugsweise miteinander verbunden, insbesondere am ersten Ende der ersten Hülse. So kann das Spülmedium über die Spülleitung am zweiten Ende der ersten Hülse in den ersten Ringspalt gelangen, durch den ersten Ringspalt zur ersten Seite der ersten Hülse gelangen und über den zweiten Ringspalt und die Messleitung entweichen. Insoweit kann über die Spüleinrichtung auch der zweite Ringspalt mit dem Spülmedium gespült werden. Dass das Spülmedium dadurch auch in die Messeinrichtung gelangt, ist unproblematisch. Der erste Ringspalt wird vorzugsweise gespült, bevor das Fluid in den Anschluss eingeleitet wird. Das Spülmedium gelangt in dem Fall zu einem Zeitpunkt in die Messeinrichtung, zu welchem austretendes Fluid noch nicht zu dieser gelangen kann.

In einer weiteren bevorzugten Ausführungsform der Vorrichtung weist die Anschlusseinrichtung weiterhin eine erste Dichtung auf, welche um die Hauptachse der Anschlusseinrichtung umlaufend ausgebildet ist und welche zwischen der Aufnahme für das Anschlussende des Anschlusses und der ersten Hülse angeordnet ist.

Die erste Dichtung ist an der Begrenzung der Aufnahme beteiligt. Die erste Dichtung ist vorzugsweise in einer um die Hauptachse der Anschlusseinrichtung umlaufenden Ausnehmung der ersten Hülse gehalten. Vorzugsweise steht die erste Dichtung radial nach innen über eine Innenseite der ersten Hülse hervor. Ist das Anschlussende des Anschlusses in die Aufnahme aufgenommen, liegt der Anschluss vorzugsweise an der ersten Dichtung an. Insoweit kann die erste Dichtung dazu beitragen, dass die Anschlusseinrichtung dicht an dem Anschluss gehalten ist, während das Fluid in den Anschluss eingeleitet wird. Die erste Dichtung ist vorzugsweise als ein Dichtungsring ausgebildet, insbesondere als ein O-Ring. Die erste Dichtung ist vorzugsweise aus Kunststoff gebildet.

In einer weiteren bevorzugten Ausführungsform der Vorrichtung weist die Anschlusseinrichtung weiterhin eine zweite Dichtung auf, welche um die Hauptachse der Anschlusseinrichtung umlaufend ausgebildet ist und welche zwischen der Aufnahme für das Anschlussende des Anschlusses und der zweiten Hülse angeordnet ist.

Die zweite Dichtung ist an der Begrenzung der Aufnahme beteiligt. Die zweite Dichtung ist vorzugsweise in einer um die Hauptachse der Anschlusseinrichtung umlaufenden Ausnehmung der zweiten Hülse gehalten. Vorzugsweise steht die zweite Dichtung radial nach innen über eine Innenseite der zweiten Hülse hervor. Ist das Anschlussende des Anschlusses in die Aufnahme aufgenommen, liegt der Anschluss vorzugsweise an der zweiten Dichtung an. Insoweit kann die zweite Dichtung dazu beitragen, dass die Anschlusseinrichtung dicht an dem Anschluss gehalten ist, während das Fluid in den Anschluss eingeleitet wird. Die zweite Dichtung ist vorzugsweise als ein Dichtungsring ausgebildet, insbesondere als ein O-Ring. Die zweite Dichtung ist vorzugsweise aus Kunststoff gebildet.

Die erste Dichtung und die zweite Dichtung sind vorzugsweise axial voneinander beabstandet angeordnet. Die zweite Dichtung ist vorzugsweise näher an dem Stutzen angeordnet als die erste Dichtung. Radial können die erste Dichtung und die zweite Dichtung im gleichen Abstand zur Hauptachse der Anschlusseinrichtung gehalten sein. Das ist insbesondere in dem auch allgemein bevorzugten Fall möglich, in dem das erste Ende der zweiten Hülse axial über die erste Hülse hinausragt und die zweite Hülse in einem axialen Abschnitt außerhalb der ersten Hülse an der Außenwand der Anschlusseinrichtung gehalten ist. In dem Fall kann die zweite Hülse derart stufenartig ausgebildet sein, dass die zweite Hülse mit der Außenwand der Anschlusseinrichtung eine Aufnahme für die erste Hülse ausbildet.

Der erste Ringspalt und der zweite Ringspalt sind vorzugsweise zwischen der ersten Dichtung und der zweiten Dichtung miteinander verbunden. Ist die Anschlusseinrichtung nicht dicht an dem Anschluss gehalten, kann das austretende Fluid im Bereich zwischen der ersten Dichtung und der zweiten Dichtung in den zweiten Ringspalt gelangen und über diesen zur Messeinrichtung. Insoweit hat es sich als vorteilhaft herausgestellt, zwei Hülsen mit jeweils einer Dichtung vorzusehen.

In einer bevorzugten Ausführungsform der Vorrichtung ist die erste Hülse derart lokal mit der Außenwand der Anschlusseinrichtung verbunden, dass der erste Ringspalt zu einer zweiten Seite der ersten Hülse hin verschlossen ist.

Beim Spülen des ersten Ringspalts kann das Spülmedium in dieser Ausführungsform den ersten Ringspalt nicht an der zweiten Seite der ersten Hülse verlassen. insoweit kann das Spülmedium nur zur Aufnahme strömen. Sollte beim Einleiten des Fluids in den Anschluss Fluid in den ersten Ringspalt gelangen, kann es in dieser Ausführungsform den ersten Ringspalt nicht an der zweiten Seite der ersten Hülse verlassen.

Die erste Hülse und die Außenwand der Anschlusseinrichtung können beispielsweise über eine um die Hauptachse der Anschlusseinrichtung umlaufende Verbindung miteinander verbunden sein, insbesondere über eine um die Hauptachse der Anschlusseinrichtung umlaufende Schweißnaht. Die Verbindung ist vorzugsweise vollständig um die Hauptachse der Anschlusseinrichtung umlaufend ausgebildet. Die Verbindung ist vorzugsweise axial von der Aufnahme für das Anschlussende beabstandet. Besonders bevorzugt ist die Verbindung mindestens 6 cm, insbesondere mindestens 12 cm von der Aufnahme für das Anschlussende beabstandet. Die Spülleitung ist vorzugsweise zwischen der Verbindung und der Aufnahme mit dem ersten Ringspalt verbunden.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

In Schritt a) wird die Abgabeleitung vorzugsweise zuerst über die Anschlusseinrichtung an den Anschluss des Fahrzeugs angeschlossen. Anschließend wird vorzugsweise der erste Ringspalt mittels der Spüleinrichtung mit einem Spülmedium gespült. Anschließend wird vorzugsweise das Ventil der Anschlusseinrichtung geöffnet. So kann das Fluid in den Anschluss eingeleitet werden, nachdem der erste Ringspalt mit dem Spülmedium gespült worden ist.

In Schritt b) wird vorzugsweise das Auftreten von Fluid in dem zweiten Ringspalt mit der Messeinrichtung überwacht.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei die Anschlusseinrichtung eine um eine Hauptachse der Anschlusseinrichtung umlaufende Außenwand aufweist, wobei die Anschlusseinrichtung weiterhin eine erste Hülse und eine zweite Hülse aufweist, welche jeweils um die Außenwand umlaufend ausgebildet sind und welche jeweils an einer jeweiligen dem Stutzen zugewandten ersten Seite mit der Außenwand eine um die Hauptachse umlaufende Aufnahme für ein Anschlussende des Anschlusses begrenzen, wobei die zweite Hülse zumindest teilweise radial außerhalb der ersten Hülse angeordnet ist, wobei zwischen der ersten Hülse und der zweiten Hülse ein zweiter Ringspalt ausgebildet ist, welcher mit der Aufnahme für das Anschlussende des Anschlusses und mit einer Messeinrichtung zur Detektion des Fluids verbunden ist.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 4

Nachfolgend werden Ausführungsformen der Erfindung beschrieben. Die Ausführungsformen haben zwar die Struktur von Patentansprüchen, stellen aber keine Patentansprüche dar.
1. Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei die Anschlusseinrichtung (202) eine um eine Hauptachse (211) der Anschlusseinrichtung (202) umlaufende Außenwand (260) aufweist, wobei die Anschlusseinrichtung (202) weiterhin eine erste Hülse (261) und eine zweite Hülse (264) aufweist, welche jeweils um die Außenwand (260) umlaufend ausgebildet sind und welche gemeinsam an einer jeweiligen dem Stutzen (208) zugewandten ersten Seite (262,265) mit der Außenwand (260) eine um die Hauptachse (211) umlaufende Aufnahme (269) für ein Anschlussende (135) des Anschlusses (100) begrenzen, wobei die zweite Hülse (264) zumindest teilweise radial außerhalb der ersten Hülse (211) angeordnet ist, wobei zwischen der ersten Hülse (261) und der zweiten Hülse (264) ein zweiter Ringspalt (268) ausgebildet ist, welcher mit der Aufnahme (269) für das Anschlussende (135) des Anschlusses (100) und mit einer Messeinrichtung (273) zur Detektion des Fluids verbunden ist.
2. Vorrichtung (2) nach Ausführungsform 1, wobei die zweite Hülse (264) derart lokal mit der ersten Hülse (261) verbunden ist, dass der zweite Ringspalt (267) zu einer zweiten Seite (266) der zweiten Hülse (264) hin verschlossen ist.
3. Vorrichtung (2) nach einer der vorstehenden Ausführungsformen, wobei die zweite Hülse (264) zur Fixierung des Anschlusses (100) an der Anschlusseinrichtung (202) eingerichtet ist.
4. Vorrichtung nach einer der vorstehenden Ausführungsformen, wobei zwischen der Außenwand (260) und der ersten Hülse (261) ein erster Ringspalt (267) ausgebildet ist, welcher mit der Aufnahme (269) für das Anschlussende (135) des Anschlusses (100) und mit einer Spüleinrichtung (270) der Vorrichtung (2) verbunden ist.
5. Vorrichtung (2) nach einer der vorstehenden Ausführungsformen, wobei die Anschlusseinrichtung (202) weiterhin eine erste Dichtung (271) aufweist, welche um die Hauptachse (211) der Anschlusseinrichtung (202) umlaufend ausgebildet ist und welche zwischen der Aufnahme (269) für das Anschlussende (135) des Anschlusses (100) und der ersten Hülse (261) angeordnet ist.
6. Vorrichtung (2) nach einer der vorstehenden Ausführungsformen, wobei die Anschlusseinrichtung (202) weiterhin eine zweite Dichtung (272) aufweist, welche um die Hauptachse (211) der Anschlusseinrichtung (202) umlaufend ausgebildet ist und welche zwischen der Aufnahme (269) für das Anschlussende (135) des Anschlusses (100) und der zweiten Hülse (264) angeordnet ist.
7. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
8. Verfahren zum Betanken eines Fahrzeugs (4) mit einem Fluid mit einer Vorrichtung (2) nach einer der Ausführungsformen 1 bis 6, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
9. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei die Anschlusseinrichtung (202) eine um eine Hauptachse (211) der Anschlusseinrichtung (202) umlaufende Außenwand (260) aufweist, wobei die Anschlusseinrichtung (202) weiterhin eine erste Hülse (261) und eine zweite Hülse (264) aufweist, welche jeweils um die Außenwand (260) umlaufend ausgebildet sind und welche gemeinsam an einer jeweiligen dem Stutzen (208) zugewandten ersten Seite (262,265) mit der Außenwand (260) eine um die Hauptachse (211) umlaufende Aufnahme (269) für ein Anschlussende (135) des Anschlusses (100) begrenzen, wobei die zweite Hülse (264) zumindest teilweise radial außerhalb der ersten Hülse (211) angeordnet ist, wobei zwischen der ersten Hülse (261) und der zweiten Hülse (264) ein zweiter Ringspalt (268) ausgebildet ist, welcher mit der Aufnahme (269) für das Anschlussende (135) des Anschlusses (100) und mit einer Messeinrichtung (273) zur Detektion des Fluids verbunden ist.

### Abschnitt 5 (10 2022 104 638.9)

Die zu lösenden Aufgaben werden gelöst mit der Vorrichtung, der Anordnung, dem Verfahren und der Anschlusseinrichtung gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei die Anschlusseinrichtung eine um eine Hauptachse der Anschlusseinrichtung umlaufende Außenwand aufweist, wobei die Anschlusseinrichtung weiterhin eine erste Hülse aufweist, welche um die Außenwand umlaufend ausgebildet ist und welche an einer dem Stutzen zugewandten ersten Seite mit der Außenwand eine um die Hauptachse umlaufende Aufnahme für das Anschlussende des Anschlusses begrenzt, und wobei zwischen der Außenwand und der ersten Hülse ein erster Ringspalt ausgebildet ist, welcher mit der Aufnahme für ein Anschlussende des Anschlusses und mit einer Spüleinrichtung der Vorrichtung verbunden ist.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Die Anschlusseinrichtung weist eine um eine Hauptachse der Anschlusseinrichtung umlaufende Außenwand auf. Der Innenraum der Anschlusseinrichtung ist innerhalb der Außenwand angeordnet. Der Innenraum der Anschlusseinrichtung kann unmittelbar von der Außenwand begrenzt sein. Alternativ können zwischen der Außenwand und dem Innenraum weitere Elemente angeordnet sein, insbesondere eine oder mehrere weitere umlaufende Wände. Insbesondere kann die Außenwand auch als eine Doppelwand ausgebildet sein. In einem Spalt zwischen den beiden Teilen der Doppelwand herrscht vorzugsweise ein Vakuum, so dass der Innenraum der Anschlusseinrichtung vakuumisoliert ist. Die Außenwand ist vorzugsweise vollständig um die Hauptachse der Anschlusseinrichtung umlaufend ausgebildet. Insbesondere ist die Außenwand vorzugsweise bis auf lokale Öffnungen umfänglich geschlossen. Als eine lokale Öffnung kommt beispielsweise eine Mündung der Abgabeleitung in den Innenraum der Anschlusseinrichtung in Betracht.

Die Hauptachse der Anschlusseinrichtung fällt vorzugsweise mit einer Ventilachse des Ventils zusammen. Das Ventil und der Ventilantrieb liegen vorzugsweise auf der Hauptachse der Anschlusseinrichtung. Das Ventil und der Ventilantrieb sind vorzugsweise über eine Stange mechanische miteinander gekoppelt, welche entlang der Hauptachse der Anschlusseinrichtung ausgebildet ist. Die Anschlusseinrichtung wird vorzugsweise in einer Richtung mit dem Anschluss verbunden, welche entlang der Hauptachse der Anschlusseinrichtung orientiert ist.

Die Anschlusseinrichtung weist weiterhin eine erste Hülse auf, welche um die Außenwand umlaufend ausgebildet ist. Vorzugsweise ist die erste Hülse vollständig um die Hauptachse der Anschlusseinrichtung umlaufend ausgebildet. Die erste Hülse kann die Form eines Zylindermantels haben. Die erste Hülse kann dazu beitragen, die Anschlusseinrichtung sicher mit dem Anschluss zu verbinden. Dazu begrenzt die erste Hülse an ihrer dem Stutzen zugewandten ersten Seite gemeinsam mit der Außenwand eine um die Hauptachse umlaufende Aufnahme für ein Anschlussende des Anschlusses. Die Aufnahme für das Anschlussende des Anschlusses wird also von der Außenwand und der ersten Hülse jeweils teilweise begrenzt. Damit das Anschlussende in die Aufnahme eingeführt werden kann, ist die Aufnahme nicht zu allen Seiten begrenzt. Insbesondere weist die Aufnahme eine Öffnung auf, über welche das Anschlussende in die Aufnahme eingeführt werden kann. Die Aufnahme ist vorzugsweise so ausgebildet, dass das Anschlussende in einer Richtung entlang der Hauptachse der Anschlusseinrichtung in die Aufnahme eingeführt werden kann. Dabei kann das Anschlussende an der Außenwand entlang geführt werden. Der Anschluss wird vorzugsweise axial in die Aufnahme eingeführt.

Zwischen der Außenwand und der ersten Hülse ist ein erster Ringspalt ausgebildet, welcher mit der Aufnahme für das Anschlussende des Anschlusses und mit einer Spüleinrichtung der Vorrichtung verbunden ist.

Wird das Fluid in den Anschluss eingeleitet, sollte die Anschlusseinrichtung möglichst sicher mit dem Anschluss verbunden sein. Das dient dazu, Austreten des Fluids in die Umgebung zu verhindern. Darüber hinaus kann eine Undichtigkeit aber auch dazu führen, dass Umgebungsluft in den Anschluss gelangt. Auch das wird vorzugsweise verhindert, insbesondere bei kaltem Fluid. Wird beispielsweise ein Fahrzeug mit flüssigem Wasserstoff betankt, kann Luft im Wasserstofftank des Fahrzeugs zu einem Feststoff werden. Feste Luft im Wasserstofftank kann zu Schäden oder Störungen im Prozess führen und sollte daher soweit wie möglich verhindert werden.

Das Eintreten von Umgebungsluft in den Anschluss kann bei der beschriebenen Vorrichtung dadurch besonders gut verhindert werden, dass die Vorrichtung eine Spüleinrichtung aufweist, welche an den ersten Ringspalt angebunden ist. Die Spüleinrichtung ist vorzugsweise dazu eingerichtet, den ersten Ringspalt mit einem Spülmedium zu spülen. Im einfachsten Fall ist die Spüleinrichtung eine Quelle, welche das Spülmedium unter Druck abgibt. Das Spülmedium kann flüssig oder gasförmig sein. Vorzugsweise ist das Spülmedium ein gasförmiges Inertgas, beispielsweise Stickstoff.

Umgebungsluft kann insbesondere über den ersten Ringspalt und an diesen angebundene Bereiche in den Anschluss gelangen. Wird der erste Ringspalt mit einem Inertgas gespült, wird die Umgebungsluft aus diesen Bereichen verdrängt. Sofern ein Gas aus der Umgebung in den Anschluss gerät, ist dies daher eher das Inertgas als Umgebungsluft. Sollte ein Inertgas in den Anschluss gelangen, ist dies im Allgemeinen weniger problematisch als wenn Luft in den Anschluss gelangt. Das liegt insbesondere an dem Sauerstoff-Anteil in der Luft.

Die Spüleinrichtung ist vorzugsweise über eine Spülleitung mit dem ersten Ringspalt verbunden. Denkbar ist aber auch, dass die Spüleinrichtung unmittelbar mit dem ersten Ringspalt verbunden ist.

Die Spüleinrichtung ist vorzugsweise axial von der Aufnahme für das Anschlussende beabstandet mit dem ersten Ringspalt verbunden. Vorzugsweise ist die Spülleitung mindestens 5 cm, insbesondere mindestens 10 cm axial von der Aufnahme für das Anschlussende beabstandet mit dem ersten Ringspalt verbunden. Die Spülleitung kann also an einer Stelle an den ersten Ringspalt angebunden sein, welche nicht in unmittelbarer Nähe der Aufnahme für das Anschlussende ist. Das ist insoweit günstig, als dass im Bereich der Aufnahme Bauraum knapp ist. Das gilt insbesondere in dem bevorzugten Fall, dass die Anschlusseinrichtung ein Verrastelement aufweist, um die Anschlusseinrichtung an dem Anschluss zu arretieren.

In einer bevorzugten Ausführungsform der Vorrichtung ist die erste Hülse derart lokal mit der Außenwand der Anschlusseinrichtung verbunden, dass der erste Ringspalt zu einer zweiten Seite der ersten Hülse hin verschlossen ist.

Beim Spülen des ersten Ringspalts kann das Spülmedium in dieser Ausführungsform den ersten Ringspalt nicht an der zweiten Seite der ersten Hülse verlassen. insoweit kann das Spülmedium nur zur Aufnahme strömen. Sollte beim Einleiten des Fluids in den Anschluss Fluid in den ersten Ringspalt gelangen, kann es in dieser Ausführungsform den ersten Ringspalt nicht an der zweiten Seite der ersten Hülse verlassen.

Die erste Hülse und die Außenwand der Anschlusseinrichtung können beispielsweise über eine um die Hauptachse der Anschlusseinrichtung umlaufende Verbindung miteinander verbunden sein, insbesondere über eine um die Hauptachse der Anschlusseinrichtung umlaufende Schweißnaht. Die Verbindung ist vorzugsweise vollständig um die Hauptachse der Anschlusseinrichtung umlaufend ausgebildet. Die Verbindung ist vorzugsweise axial von der Aufnahme für das Anschlussende beabstandet. Besonders bevorzugt ist die Verbindung mindestens 6 cm, insbesondere mindestens 12 cm von der Aufnahme für das Anschlussende beabstandet. Die Spülleitung ist vorzugsweise zwischen der Verbindung und der Aufnahme mit dem ersten Ringspalt verbunden.

In einer weiteren bevorzugten Ausführungsform der Vorrichtung weist die Anschlusseinrichtung weiterhin eine erste Dichtung auf, welche um die Hauptachse der Anschlusseinrichtung umlaufend ausgebildet ist und welche zwischen der Aufnahme für das Anschlussende des Anschlusses und der ersten Hülse angeordnet ist.

Die erste Dichtung ist an der Begrenzung der Aufnahme beteiligt. Die erste Dichtung ist vorzugsweise in einer um die Hauptachse der Anschlusseinrichtung umlaufenden Ausnehmung der ersten Hülse gehalten. Vorzugsweise steht die erste Dichtung radial nach innen über eine Innenseite der ersten Hülse hervor. Ist das Anschlussende des Anschlusses in die Aufnahme aufgenommen, liegt der Anschluss vorzugsweise an der ersten Dichtung an. Insoweit kann die erste Dichtung dazu beitragen, dass die Anschlusseinrichtung dicht an dem Anschluss gehalten ist, während das Fluid in den Anschluss eingeleitet wird. Die erste Dichtung ist vorzugsweise als ein Dichtungsring ausgebildet, insbesondere als ein O-Ring. Die erste Dichtung ist vorzugsweise aus Kunststoff gebildet.

In einer weiteren bevorzugten Ausführungsform weist die Anschlusseinrichtung weiterhin eine zweite Hülse auf, welche um die Hauptachse der Anschlusseinrichtung umlaufend ausgebildet ist, welche zumindest teilweise radial außerhalb der ersten Hülse angeordnet ist und welche an einer dem Stutzen zugewandten ersten Seite mit der Außenwand die Aufnahme für das Anschlussende des Anschlusses begrenzt.

Vorzugsweise ist die zweite Hülse vollständig um die Hauptachse der Anschlusseinrichtung umlaufend ausgebildet. Die zweite Hülse kann die Form eines Zylindermantels haben.

In dieser Ausführungsform dienen die erste Hülse und die zweite Hülse in Kombination dazu, die Anschlusseinrichtung sicher mit dem Anschluss zu verbinden. Dazu begrenzen die erste Hülse und die zweite Hülse vorzugsweise gemeinsam an einer jeweiligen dem Stutzen zugewandten ersten Seite mit der Außenwand eine um die Hauptachse umlaufende Aufnahme für ein Anschlussende des Anschlusses. Die Aufnahme für das Anschlussende des Anschlusses wird also von der Außenwand, der ersten Hülse und der zweiten Hülse jeweils teilweise begrenzt.

Die zweite Hülse ist zumindest teilweise radial außerhalb der ersten Hülse angeordnet. Vorzugsweise überlappen die erste Hülse und die zweite Hülse axial zumindest teilweise. Es gibt daher zumindest einen axialen Abschnitt, in welchem die erste Hülse zwischen der Außenwand und der zweiten Hülse angeordnet ist. Auch wenn dies möglich ist, sind vorzugsweise zwischen der Außenwand und der ersten Hülse keine weiteren Elemente angeordnet. Auch wenn dies möglich ist, sind vorzugsweise zwischen der ersten Hülse und der zweiten Hülse keine weiteren Elemente angeordnet.

Die zweite Hülse ragt vorzugsweise an ihrer ersten Seite axial über die erste Hülse hinaus. Das erste Ende der zweiten Hülse ist also näher am Stutzen angeordnet als das erste Ende der ersten Hülse. In dem Fall kann die Aufnahme einen ersten Abschnitt haben, in welchem die Aufnahme radial nach innen durch die Außenwand begrenzt ist und radial nach außen durch die zweite Hülse begrenzt ist. Axial ist der erste Abschnitt der Aufnahme vorzugsweise an einer ersten Seite offen, so dass das Anschlussende des Anschlusses in die Aufnahme eingeführt werden kann. An einer zweiten Seite kann der erste Abschnitt axial in einen zweiten Abschnitt der Aufnahme übergehen. Im zweiten Abschnitt kann die Aufnahme radial nach innen durch die Außenwand begrenzt sein und radial nach außen durch die erste Hülse begrenzt sein. Axial kann die Hülse an einem zweiten Ende des zweiten Abschnitts durch die erste Hülse begrenzt sein. Der erste Abschnitt und der zweite Abschnitt zusammen ergeben also eine Aufnahme in Form eines Ringspaltes, welcher an einer dem Stutzen zugewandten Seite axial offen ist, um das Anschlussende des Anschlusses aufnehmen zu können, und welcher na einer zweiten Seite axial verschlossen ist.

In einer weiteren bevorzugten Ausführungsform der Vorrichtung ist zwischen der ersten Hülse und der zweiten Hülse ist ein zweiter Ringspalt ausgebildet, welcher mit der Aufnahme für das Anschlussende des Anschlusses verbunden ist.

Der zweite Ringspalt ist radial vorzugsweise einerseits durch die erste Hülse und andererseits durch die zweite Hülse begrenzt. Als eine alternative Ausführungsform ist denkbar, dass die erste Hülse und die zweite Hülse dicht aneinander anliegen.

In einer weiteren bevorzugten Ausführungsform der Vorrichtung ist der zweite Ringspalt mit einer Messeinrichtung verbunden, welche zur Detektion des Fluids eingerichtet ist.

Der zweite Ringspalt ist mit der Aufnahme für das Anschlussende des Anschlusses und mit einer Messeinrichtung zur Detektion des Fluids verbunden. Durch diese Ausgestaltung kann die Verbindung zwischen der Anschlusseinrichtung und dem Anschluss auf Dichtigkeit überprüft werden, insbesondere während das Fluid in den Anschluss eingeleitet wird. Liegt der Stutzen nicht dicht an dem Anschluss an, kann Fluid in den zweiten Ringspalt gelangen. Über den zweiten Ringspalt kann das Fluid gesammelt werden und zu der Messeinrichtung gelangen, wo es detektiert werden kann. Ist das der Fall, können beispielsweise eine Warnung an einen Benutzer ausgegeben werden und/oder ein Fehler protokolliert werden. Auch kann das Einleiten des Fluids in den Anschluss automatisiert gestoppt werden, wenn eine Undichtigkeit detektiert wird.

Im einfachsten Fall ist die Messeinrichtung dazu eingerichtet, zwischen Vorliegen und Nichtvorliegen des Fluids in dem zweiten Ringspalt zu unterscheiden. Das kann beispielsweise über einen Grenzwert für die Fluidkonzentration realisiert sein. Vorzugsweise ist die Messeinrichtung aber auch dazu eingerichtet, die Fluidmenge zu quantifizieren.

Die Messeinrichtung ist vorzugsweise über eine Messleitung mit dem zweiten Ringspalt verbunden. Denkbar ist aber auch, dass die Messeinrichtung unmittelbar mit dem zweiten Ringspalt verbunden ist.

Die Messleitung ist vorzugsweise axial von der Aufnahme für das Anschlussende beabstandet mit dem zweiten Ringspalt verbunden. Vorzugsweise ist die Messleitung mindestens 5 cm, insbesondere mindestens 10 cm axial von der Aufnahme für das Anschlussende beabstandet mit dem zweiten Ringspalt verbunden. Die Messleitung kann also an einer Stelle an den zweiten Ringspalt angebunden sein, welche nicht in unmittelbarer Nähe der Aufnahme für das Anschlussende ist. Das ist insoweit günstig, als dass im Bereich der Aufnahme Bauraum knapp ist. Das gilt insbesondere in dem bevorzugten Fall, dass die Anschlusseinrichtung ein Verrastelement aufweist, um die Anschlusseinrichtung an dem Anschluss zu arretieren. Durch den zweiten Ringspalt kann insbesondere auf eine Bohrung verzichtet werden, über welche bei Undichtigkeit austretendes Fluid alternativ gesammelt werden könnte.

Die Spülleitung und die Messleitung sind vorzugsweise umfänglich voneinander beabstandet an der Anschlusseinrichtung angeordnet. So können die Spülleitung und die Messleitung axial an der gleichen Stelle oder axial nah beieinander an den ersten Ringspalt beziehungsweise an den zweiten Ringspalt angebunden sein, ohne dass die Spülleitung und die Messleitung einander beeinträchtigen.

Der erste Ringspalt und der zweite Ringspalt sind vorzugsweise miteinander verbunden, insbesondere am ersten Ende der ersten Hülse. So kann das Spülmedium über die Spülleitung am zweiten Ende der ersten Hülse in den ersten Ringspalt gelangen, durch den ersten Ringspalt zur ersten Seite der ersten Hülse gelangen und über den zweiten Ringspalt und die Messleitung entweichen. Insoweit kann über die Spüleinrichtung auch der zweite Ringspalt mit dem Spülmedium gespült werden. Dass das Spülmedium dadurch auch in die Messeinrichtung gelangt, ist unproblematisch. Der erste Ringspalt wird vorzugsweise gespült, bevor das Fluid in den Anschluss eingeleitet wird. Das Spülmedium gelangt in dem Fall zu einem Zeitpunkt in die Messeinrichtung, zu welchem austretendes Fluid noch nicht zu dieser gelangen kann.

In einer weiteren bevorzugten Ausführungsform der Vorrichtung ist die zweite Hülse derart lokal mit der ersten Hülse verbunden, dass der zweite Ringspalt zu einer zweiten Seite der zweiten Hülse hin verschlossen ist.

Sollte Fluid in den zweiten Ringspalt gelangen, kann es in dieser Ausführungsform den zweiten Ringspalt nicht an der zweiten Seite der zweiten Hülse verlassen. Vorzugsweise kann das Fluid den zweiten Ringspalt nur durch die Messleitung verlassen. Das Fluid kann in dem Fall nicht an der Messeinrichtung vorbei aus dem zweiten Ringspalt austreten.

Die erste Hülse und die zweite Hülse können beispielsweise über eine um die Hauptachse der Anschlusseinrichtung umlaufende Verbindung miteinander verbunden sein, insbesondere über eine um die Hauptachse der Anschlusseinrichtung umlaufende Schweißnaht. Die Verbindung ist vorzugsweise vollständig um die Hauptachse der Anschlusseinrichtung umlaufend ausgebildet. Die Verbindung ist vorzugsweise axial von der Aufnahme für das Anschlussende beabstandet. Besonders bevorzugt ist die Verbindung mindestens 6 cm, insbesondere mindestens 12 cm von der Aufnahme für das Anschlussende beabstandet. Die Messleitung ist vorzugsweise zwischen der Verbindung und der Aufnahme mit dem zweiten Ringspalt verbunden.

In einer weiteren bevorzugten Ausführungsform der Vorrichtung ist die zweite Hülse zur Fixierung des Anschlusses an der Anschlusseinrichtung eingerichtet.

Wird das Fluid in den Anschluss eingeleitet, sollte die Anschlusseinrichtung möglichst sicher mit dem Anschluss verbunden sein. In der vorliegenden Ausführungsform trägt dazu die zweite Hülse bei. Die zweite Hülse kann so ausgestaltet sein, dass die zweite Hülse mit einem Gegenstück des Anschlusses zusammenwirkt. Vorzugsweise weist die Anschlusseinrichtung ein Verrastelement auf. Mit dem Verrastelement kann der Anschluss an der Anschlusseinrichtung und insbesondere an der zweiten Hülse arretieret werden.

In einer weiteren bevorzugten Ausführungsform der Vorrichtung weist die Anschlusseinrichtung weiterhin eine zweite Dichtung auf, welche um die Hauptachse der Anschlusseinrichtung umlaufend ausgebildet ist und welche zwischen der Aufnahme für das Anschlussende des Anschlusses und der zweiten Hülse angeordnet ist.

Die zweite Dichtung ist an der Begrenzung der Aufnahme beteiligt. Die zweite Dichtung ist vorzugsweise in einer um die Hauptachse der Anschlusseinrichtung umlaufenden Ausnehmung der zweiten Hülse gehalten. Vorzugsweise steht die zweite Dichtung radial nach innen über eine Innenseite der zweiten Hülse hervor. Ist das Anschlussende des Anschlusses in die Aufnahme aufgenommen, liegt der Anschluss vorzugsweise an der zweiten Dichtung an. Insoweit kann die zweite Dichtung dazu beitragen, dass die Anschlusseinrichtung dicht an dem Anschluss gehalten ist, während das Fluid in den Anschluss eingeleitet wird. Die zweite Dichtung ist vorzugsweise als ein Dichtungsring ausgebildet, insbesondere als ein O-Ring. Die zweite Dichtung ist vorzugsweise aus Kunststoff gebildet.

Die erste Dichtung und die zweite Dichtung sind vorzugsweise axial voneinander beabstandet angeordnet. Die zweite Dichtung ist vorzugsweise näher an dem Stutzen angeordnet als die erste Dichtung. Radial können die erste Dichtung und die zweite Dichtung im gleichen Abstand zur Hauptachse der Anschlusseinrichtung gehalten sein. Das ist insbesondere in dem auch allgemein bevorzugten Fall möglich, in dem das erste Ende der zweiten Hülse axial über die erste Hülse hinausragt und die zweite Hülse in einem axialen Abschnitt außerhalb der ersten Hülse an der Außenwand der Anschlusseinrichtung gehalten ist. In dem Fall kann die zweite Hülse derart stufenartig ausgebildet sein, dass die zweite Hülse mit der Außenwand der Anschlusseinrichtung eine Aufnahme für die erste Hülse ausbildet.

Der erste Ringspalt und der zweite Ringspalt sind vorzugsweise zwischen der ersten Dichtung und der zweiten Dichtung miteinander verbunden. Ist die Anschlusseinrichtung nicht dicht an dem Anschluss gehalten, kann das austretende Fluid im Bereich zwischen der ersten Dichtung und der zweiten Dichtung in den zweiten Ringspalt gelangen und über diesen zur Messeinrichtung. Insoweit hat es sich als vorteilhaft herausgestellt, zwei Hülsen mit jeweils einer Dichtung vorzusehen.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

In Schritt a) wird die Abgabeleitung vorzugsweise zuerst über die Anschlusseinrichtung an den Anschluss des Fahrzeugs angeschlossen. Anschließend wird vorzugsweise der erste Ringspalt mittels der Spüleinrichtung mit einem Spülmedium gespült. Anschließend wird vorzugsweise das Ventil der Anschlusseinrichtung geöffnet. So kann das Fluid in den Anschluss eingeleitet werden, nachdem der erste Ringspalt mit dem Spülmedium gespült worden ist.

In Schritt b) wird vorzugsweise das Auftreten von Fluid in dem zweiten Ringspalt mit der Messeinrichtung überwacht.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei die Anschlusseinrichtung eine um eine Hauptachse der Anschlusseinrichtung umlaufende Außenwand aufweist, wobei die Anschlusseinrichtung weiterhin eine erste Hülse aufweist, welche um die Außenwand umlaufend ausgebildet ist und welche an einer dem Stutzen zugewandten ersten Seite mit der Außenwand eine um die Hauptachse umlaufende Aufnahme für das Anschlussende des Anschlusses begrenzt, und wobei zwischen der Außenwand und der ersten Hülse ein erster Ringspalt ausgebildet ist, welcher mit der Aufnahme für ein Anschlussende des Anschlusses und mit einer Spüleinrichtung der Vorrichtung verbunden ist.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

### Ausführungsformen Abschnitt 5

Nachfolgend werden Ausführungsformen der Erfindung beschrieben. Die Ausführungsformen haben zwar die Struktur von Patentansprüchen, stellen aber keine Patentansprüche dar.
**1.** Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei die Anschlusseinrichtung (202) eine um eine Hauptachse (211) der Anschlusseinrichtung (202) umlaufende Außenwand (260) aufweist, wobei die Anschlusseinrichtung (202) weiterhin eine erste Hülse (261) aufweist, welche um die Außenwand (260) umlaufend ausgebildet ist und welche an einer dem Stutzen (208) zugewandten ersten Seite (262) mit der Außenwand (260) eine um die Hauptachse (211) umlaufende Aufnahme (269) für das Anschlussende (135) des Anschlusses (100) begrenzt, und wobei zwischen der Außenwand (260) und der ersten Hülse (261) ein erster Ringspalt (267) ausgebildet ist, welcher mit der Aufnahme (269) für ein Anschlussende (135) des Anschlusses (100) und mit einer Spüleinrichtung (270) der Vorrichtung (2) verbunden ist.
2. Vorrichtung (2) nach Ausführungsform 1, wobei die erste Hülse (261) derart lokal mit der Außenwand (260) verbunden ist, dass der erste Ringspalt (267) zu einer zweiten Seite (263) der ersten Hülse (261) hin verschlossen ist.
3. Vorrichtung (2) nach einer der vorstehenden Ausführungsformen, wobei die Anschlusseinrichtung (202) weiterhin eine erste Dichtung (271) aufweist, welche um die Hauptachse (211) der Anschlusseinrichtung (202) umlaufend ausgebildet ist und welche zwischen der Aufnahme (269) und der ersten Hülse (261) angeordnet ist.
4. Vorrichtung (2) nach einer der vorstehenden Ausführungsformen, wobei die Anschlusseinrichtung (202) weiterhin eine zweite Hülse (264) aufweist, welche um die Hauptachse (211) der Anschlusseinrichtung (202) umlaufend ausgebildet ist, welche zumindest teilweise radial außerhalb der ersten Hülse (211) angeordnet ist und welche an einer dem Stutzen (208) zugewandten ersten Seite (265) mit der Außenwand (260) die Aufnahme (269) für das Anschlussende (135) des Anschlusses (100) begrenzt.
5. Vorrichtung (2) nach Ausführungsform 4, wobei zwischen der ersten Hülse (261) und der zweiten Hülse (264) ein zweiter Ringspalt (268) ausgebildet ist, welcher mit der Aufnahme (269) für das Anschlussende (135) des Anschlusses (100) verbunden ist.
6. Vorrichtung (2) nach Ausführungsform 5, wobei der zweite Ringspalt (268) mit einer Messeinrichtung (273) verbunden ist, welche zur Detektion des Fluids eingerichtet ist.
7. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
8. Verfahren zum Betanken eines Fahrzeugs (4) mit einem Fluid mit einer Vorrichtung (2) nach einer der Ausführungsformen 1 bis 6, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
9. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei die Anschlusseinrichtung (202) eine um eine Hauptachse (211) der Anschlusseinrichtung (202) umlaufende Außenwand (260) aufweist, wobei die Anschlusseinrichtung (202) weiterhin eine erste Hülse (261) aufweist, welche um die Außenwand (260) umlaufend ausgebildet ist und welche an einer dem Stutzen (208) zugewandten ersten Seite (262) mit der Außenwand (260) eine um die Hauptachse (211) umlaufende Aufnahme (269) für das Anschlussende (135) des Anschlusses (100) begrenzt, und wobei zwischen der Außenwand (260) und der ersten Hülse (261) ein erster Ringspalt (267) ausgebildet ist, welcher mit der Aufnahme (269) für ein Anschlussende (135) des Anschlusses (100) und mit einer Spüleinrichtung (270) der Vorrichtung (2) verbunden ist.

### Abschnitt 6 (10 2022 104 639.7)

Die zu lösenden Aufgaben werden gelöst mit der Vorrichtung, der Anordnung, dem Verfahren und der Anschlusseinrichtung gemäß den unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist, wobei das Ventil einen Ventilstempel und eine Ventilöffnung aufweist, wobei der Ventilstempel entlang einer Ventilachse zwischen einer ersten Endposition und einer zweiten Endposition beweglich ist, wobei der Ventilstempel in seiner zweiten Endposition die Ventilöffnung verschließt, wobei das Ventil weiterhin eine Zylinderfeder aufweist, welche derart einerseits an dem Ventilstempel und andererseits radial außerhalb der Ventilöffnung an einer Begrenzung des Innenraums der Anschlusseinrichtung gehalten ist, dass die Zylinderfeder den Ventilstempel in dessen zweite Endposition vorspannt.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Das Ventil weist einen Ventilstempel und eine Ventilöffnung auf. Ist das Ventil geschlossen, verschließt der Ventilstempel die Ventilöffnung. Ist das Ventil geöffnet, gibt der Ventilstempel die Ventilöffnung frei. In dem Fall kann das Fluid durch das Ventil strömen, indem das Fluid durch die Ventilöffnung strömt. Die Ventilöffnung kann insoweit auch als eine Öffnung des Innenraums der Anschlusseinrichtung aufgefasst werden. Die Ventilöffnung ist vorzugsweise an einer ersten Seite des Ventils angeordnet. Der Innenraum der Anschlusseinrichtung ist vorzugsweise an einer zweiten Seite des Ventils an das Ventil angebunden.

Der Ventilstempel ist entlang einer Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des Ventilstempels zusammen. Die Ventilöffnung ist vorzugsweise senkrecht zur Ventilachse ausgebildet. Ein Mittelpunkt der Ventilöffnung liegt vorzugsweise auf der Ventilachse. Vorzugsweise ist der Ventilstempel nicht über die erste Endposition hinaus und/oder nicht über die zweite Endposition hinaus beweglich. Das kann durch einen oder mehrere entsprechende Anschläge erreicht werden. Der Ventilstempel verschließt in seiner zweiten Endposition die Ventilöffnung. Insoweit ist das Ventil verschlossen, wenn sich der Ventilstempel in seiner zweiten Endposition befindet. Ist der Ventilstempel in seiner ersten Endposition, gibt der Ventilstempel die Ventilöffnung frei. Insoweit ist das Ventil geöffnet, wenn sich der Ventilstempel in seiner ersten Endposition befindet. Das Ventil ist allerdings vorzugsweise nicht nur dann geöffnet, wenn sich der Ventilstempel in seiner ersten Endposition befindet. Befindet sich der Ventilstempel zwischen seiner ersten Endposition und seiner zweiten Endposition ist das Ventil vorzugsweise teilweise geöffnet.

Sofern über die Anschlusseinrichtung kein Fluid an einen Anschluss abgegeben wird, sollte das Ventil verschlossen sein. Ansonsten könnte das Fluid unkontrolliert austreten. Bei der beschriebenen Vorrichtung trägt dazu bei, dass das Ventil eine Zylinderfeder aufweist. Unter einer Zylinderfeder ist eine Feder zu verstehen, deren Windungen auf einem Zylindermantel liegen. Eine Zylinderfeder kann auch als Schraubenfeder bezeichnet werden.

Die Zylinderfeder ist derart gehalten, dass die Zylinderfeder den Ventilstempel in dessen zweite Endposition vorspannt. Die Zylinderfeder spannt den Ventilstempel also in die Position vor, in der der Ventilstempel das Ventil verschließt. Sofern keine externe Kraft auf den Ventilstempel einwirkt, ist das Ventil also verschlossen. Dies kann auch als ein Grundzustand des Ventils bezeichnet werden. Dass das Ventil im Grundzustand verschlossen ist, trägt zur Sicherheit bei. Um das Ventil zu öffnen, kann der Ventilstempel mit dem Ventilantrieb entgegen der von der Zylinderfeder auf den Ventilstempel ausgeübten Kraft aus der zweiten Endposition bewegt werden. Der Ventilantrieb ist daher entsprechend eingerichtet und mit dem Ventilstempel gekoppelt. Der Ventilantrieb kann die von der Zylinderfeder auf den Ventilstempel ausgeübte Kraft überwinden.

Die Zylinderfeder ist einerseits an dem Ventilstempel gehalten. Insoweit kann die Zylinderfeder eine Kraft auf den Ventilstempel ausüben. Andererseits ist die Zylinderfeder an einer Begrenzung des Innenraums der Anschlusseinrichtung gehalten. Eine von der Zylinderfeder auf den Ventilstempel ausgeübte Kraft hängt daher von der Position des Ventilstempels relativ zur Begrenzung des Innenraums der Anschlusseinrichtung ab. Das Ventil weist vorzugsweise einen Ventilkörper auf, in welchem die Ventilöffnung gebildet ist. Der Innenraum der Anschlusseinrichtung ist vorzugsweise teilweise von dem Ventilkörper umschlossen. Der Ventilkörper bildet also vorzugsweise einen Teil der Begrenzung des Innenraums der Anschlusseinrichtung. Vorzugsweise ist die Zylinderfeder insoweit an einer Begrenzung des Innenraums der Anschlusseinrichtung gehalten, als dass die Zylinderfeder an dem Ventilkörper gehalten ist. Der Ventilkörper bewegt sich also bei üblicher Verwendung der Vorrichtung nicht relativ zur übrigen Begrenzung des Innenraums der Anschlusseinrichtung. Insoweit hängt eine von der Feder auf den Ventilstempel ausgeübte Kraft von der Position des Ventilstempels relativ zum Ventilkörper und insbesondere relativ zur Ventilöffnung ab.

An der Begrenzung des Innenraums der Anschlusseinrichtung ist die Zylinderfeder radial außerhalb der Ventilöffnung gehalten. Das ist insofern günstig, als dass weder die Zylinderfeder selbst, noch eine Halterung für die Zylinderfeder die Ventilöffnung verdecken.

Die Zylinderfeder ist vorzugsweise so ausgestaltet und angeordnet, dass die Zylinderfeder als eine Druckfeder wirkt. Die Zylinderfeder ist also gegenüber ihrem kraftlosen Grundzustand zusammengedrückt. Das gilt sowohl, wenn sich der Ventilstempel in seiner ersten Endposition befindet als auch wenn sich der Ventilstempel sich in seiner zweiten Endposition befindet. Die beiden Enden der Zylinderfeder werden also durch die Federkraft auseinander gedrückt. Befindet sich der Ventilstempel in ersten Endposition, ist die Zylinderfeder stärker zusammengedrückt als bei der ersten Endposition. Insoweit ist der Ventilstempel in seine zweite Endposition vorgespannt.

Der Ventilstempel ist vorzugsweise zumindest teilweise innerhalb der Zylinderfeder angeordnet. Dies ist insbesondere in Kombination damit günstig, dass die Zylinderfeder an der Begrenzung des Innenraums der Anschlusseinrichtung radial außerhalb der Ventilöffnung gehalten ist. Dazu ist zu beachten, dass einerseits wünschenswert ist, dass die Zylinderfeder sicher gehalten ist. Das erhöht die Zuverlässigkeit der Vorrichtung und reduziert Kosten für Wartung und Reparatur. Ein sicherer Halt der Zylinderfeder erfordert eine entsprechend dimensionierte Befestigungsmöglichkeit. Andererseits ist es wünschenswert, dass das Fluid möglichst ungestört durch das Ventil strömen kann. Dadurch kann das Fluid schnell in den Anschluss geleitet werden. Insbesondere die Befestigungsmöglichkeiten für die Zylinderfeder können die Strömung des Fluids beeinträchtigen. Insoweit können das Bedürfnis nach sicherem Halt der Zylinderfeder und nach störungsfreiem Strömen des Fluids einander im Allgemeinen entgegenstehen. Mit der beschriebenen Vorrichtung wird in dieser Hinsicht eine Lösung geboten, die beide Bedürfnisse besonders gut miteinander vereinbart. So kann das Fluid an einer ersten Seite der Zylinderfeder radial innerhalb der Zylinderfeder durch die Ventilöffnung strömen. Am ersten Ende der Zylinderfeder ist der Bereich radial außerhalb der Zylinderfeder für das Fluid durch die Begrenzung des Innenraums der Anschlusseinrichtung blockiert. Dieser Bereich kann dadurch derart stabil ausgebildet sein, dass die Zylinderfeder sicher gehalten wird. An einer zweiten Seite der Zylinderfeder kann das Fluid radial außerhalb der Zylinderfeder an dem Ventilstempel vorbei strömen. Am zweiten Ende der Zylinderfeder kann der Bereich radial innerhalb der Zylinderfeder für das Fluid durch den Ventilstempel blockiert sein. Der Ventilstempel kann dadurch derart stabil ausgebildet sein, dass die Zylinderfeder sicher gehalten wird. Auf beiden Seiten kann die Zylinderfeder also stabil gehalten sein. Der gesamte Bereich radial außerhalb bzw. radial innerhalb der Feder kann für die jeweilige Befestigungsmöglichkeit genutzt werden.

Für das Fluid ergibt sich dennoch ein vergleichsweise störungsfreier Strömungspfad durch das Ventil. An der ersten Seite kann das Fluid radial innerhalb der Zylinderfeder durch die Ventilöffnung strömen. Dafür steht der gesamte Bereich radial innerhalb der Zylinderfeder zur Verfügung. Eine Beeinträchtigung durch eine Befestigung der Zylinderfeder gibt es hier nicht. An der zweiten Seite der Zylinderfeder kann das Fluid radial außerhalb der Zylinderfeder an dem Ventilstempel vorbei strömen. Dafür steht der gesamte Bereich radial außerhalb der Zylinderfeder zur Verfügung. Eine Beeinträchtigung durch eine Befestigung der Zylinderfeder gibt es hier ebenfalls nicht.

Auf dem Weg aus dem Innenraum der Anschlusseinrichtung durch die Ventilöffnung kann das Fluid die Zylinderfeder zwischen deren zweitem Ende und deren erstem Ende durchströmen. So kann das Fluid zuerst radial außerhalb der Zylinderfeder und anschließend radial innerhalb der Zylinderfeder strömen. Das Fluid durchströmt also den Mantel der Zylinderfeder. Dadurch wird die Strömung des Fluids nur vergleichsweise wenig beeinträchtigt, weil der Mantel durch die Windungen der Zylinderfeder gebildet und insoweit nicht vollflächig geschlossen ist. Die Windungen sind voneinander beabstandet, damit die Zylinderfeder ihre Federwirkung erzeugen kann.

Die Begrenzung des Innenraums der Anschlusseinrichtung ist vorzugsweise rotationssymmetrisch um eine Hauptachse der Anschlusseinrichtung ausgebildet. Die Hauptachse fällt vorzugsweise mit der Ventilachse zusammen. Eine Achse der Zylinderfeder fällt vorzugsweise mit der Ventilachse zusammen.

Das Ventil weist einen Ventilstempel, eine Ventilöffnung und eine Zylinderfeder auf. Das ist so zu verstehen, dass das Ventil einen oder mehr Ventilstempel, eine oder mehr Ventilöffnungen und eine oder mehr Zylinderfedern haben kann. Es genügt, dass das Ventil genau einen Ventilstempel, genau eine Ventilöffnung und genau eine Zylinderfeder hat. Denkbar ist aber auch, dass das Ventil insoweit redundant ausgestaltet ist, dass beispielsweise zwei Ventilstempel vorgesehen sind, welche eine jeweilige Ventilöffnung verschließen können und durch eine jeweilige Zylinderfeder vorgespannt sind. Das Fluid kann in dem Fall durch eine erste der Ventilöffnungen und anschließend durch eine zweite der Ventilöffnungen strömen, um aus dem Innenraum der Anschlusseinrichtung zum Anschluss zu gelangen.

In einer bevorzugten Ausführungsform der Vorrichtung weist der Ventilstempel einen Ventilteller und einen daran angebundenen Ventilschaft auf, wobei der Ventilstempel in seiner zweiten Endposition die Ventilöffnung mit dem Ventilteller verschließt, und wobei der Ventilschaft innerhalb der Zylinderfeder angeordnet ist.

Durch den Ventilschaft kann die Zylinderfeder von der Ventilöffnung beabstandet an dem Ventilstempel angreifen. So ist genügend Platz für die Zylinderfeder vorhanden. Der Ventilteller ist vorzugsweise größer als die Ventilöffnung. Somit kann der Ventilteller die Ventilöffnung verschließen, wenn sich der Ventilstempel in seiner zweiten Endposition befindet. In dem Fall ist vorzugsweise zwischen einem Rand der Ventilöffnung und dem Ventilteller eine Dichtung angeordnet. Die kann an dem Rand der Ventilöffnung oder dem Ventilteller gehalten sein. Auch kann eine erste Dichtung an dem Rand der Ventilöffnung und eine zweite Dichtung an dem Ventilteller gehalten sein.

Der Ventilstempel ist vorzugsweise zumindest teilweise innerhalb der Zylinderfeder angeordnet. Das ist in der vorliegenden Ausführungsform insoweit der Fall, als dass der Ventilschaft innerhalb der Zylinderfeder angeordnet ist.

Die Zylinderfeder ist an dem Ventilstempel gehalten. Das kann in der vorliegenden Ausführungsform insoweit der Fall sein, als dass die Zylinderfeder unmittelbar an dem Ventilschaft des Ventilstempels gehalten ist. Bevorzugt ist allerdings eine Ausgestaltung, bei welcher die Zylinderfeder mittelbar an dem Ventilschaft des Ventilstempels gehalten ist. Zwischen der Zylinderfeder und dem Ventilschaft ist in dem Fall ein Zwischenelement ausgebildet.

In einer weiteren bevorzugten Ausführungsform der Vorrichtung weist der Ventilstempel einen um die Ventilachse umlaufenden Flansch auf, über welchen die Zylinderfeder an dem Ventilstempel gehalten ist.

Das Flansch ist ein Beispiel für ein Zwischenelement, über welches die Zylinderfeder mittelbar an dem Ventilschaft des Ventilstempels gehalten ist. Der Flansch kann sich radial so weit erstrecken, dass er nicht oder zumindest nicht vollständig innerhalb der Zylinderfeder angeordnet ist. Insbesondere insoweit kann der Ventilstempel auch teilweise außerhalb der Zylinderfeder angeordnet sein.

Der Ventilschaft ist radial innerhalb der Zylinderfeder angeordnet. Zudem ist der Ventilschaft an der Zylinderfeder gehalten. Die Zylinderfeder kann an einer radial au-ßen liegenden Seite des Ventilschafts gehalten. Eine von der Zylinderfeder erzeugte Kraft ist allerdings in axialer Richtung orientiert. Für diese Kombination hat sich ein umlaufender Flansch am Ventilstempel als besonders günstig herausgestellt, insbesondere wenn sich dieser radial so weit erstreckt, dass er nicht oder zumindest nicht vollständig innerhalb der Zylinderfeder angeordnet ist.

Der Flansch ist vorzugsweise entlang der Ventilachse von dem Ventilteller beabstandet. So verbleibt genügend Platz für die Zylinderfeder. Der Ventilteller ist vorzugsweise an einer ersten Seite des Ventilschafts angeordnet. Der Flansch ist vorzugsweise an einer zweiten Seite des Ventilschafts angeordnet. Der Ventilstempel ist vorzugsweise so angeordnet, dass eine Richtung von der ersten Seite des Ventils zur zweiten Seite des Ventils mit einer Richtung von der ersten Seite des Ventilstempels zur zweiten Seite des Ventilstempels zusammenfällt.

In einer weiteren bevorzugten Ausführungsform der Vorrichtung weist der Flansch des Ventilstempels radial außen liegend mehrere Ausnehmungen auf, mit welchen zwischen dem Flansch und der Begrenzung des Innenraums der Anschlusseinrichtung jeweils ein Durchgang gebildet ist.

Durch die Durchgänge kann das Fluid axial am Ventilstempel entlang von einer Seite des Ventilstempels zur anderen Seite des Ventilstempels strömen. Außerhalb der Ausnehmungen kann der Ventilstempel bis an die Begrenzung des Innenraums heranreichen. Vorzugsweise verbleibt dort nur ein kleiner Spalt, so dass der Ventilstempel zwar leicht beweglich, aber dennoch in seiner Bewegung geführt ist. Dies erhöht die Zuverlässigkeit. Dafür kann in Kauf genommen werden, dass der für das Fluid zur Verfügung stehende Strömungsquerschnitt auf die Durchgänge eingeschränkt wird.

In einer weiteren bevorzugten Ausführungsform der Vorrichtung ist ein Strömungspfad vom Innenraum der Anschlusseinrichtung durch die Ventilöffnung freigegeben, wenn sich der Ventilstempel außerhalb seiner zweiten Endposition befindet.

In einer weiteren bevorzugten Ausführungsform der Vorrichtung verläuft der Strömungspfad durch einen Mantel der Zylinderfeder.

In einer weiteren bevorzugten Ausführungsform der Vorrichtung sind das Ventil und der Ventilantrieb auf einer Hauptachse der Anschlusseinrichtung voneinander beabstandet angeordnet, wobei die Hauptachse der Anschlusseinrichtung mit der Ventilachse des Ventils zusammenfällt.

In dieser Ausführungsform stehen sich Ventilantrieb und Ventil insoweit gegenüber, als dass die Kopplung zwischen Ventilantrieb und Ventil über eine gerade Linie erfolgen kann.

In einer weiteren bevorzugten Ausführungsform der Vorrichtung sind das Ventil und der Ventilantrieb über eine entlang der Hauptachse ausgebildete einteilige oder mehrteilige Stange mechanisch miteinander gekoppelt.

Der Ventilstempel ist vorzugsweise über die Stange starr mit dem Ventilantrieb gekoppelt. Eine Bewegung des Ventilantriebs bewirkt folglich eine Bewegung des Ventilstempels. Der Ventilantrieb kann beispielsweise einen Zylinder mit einem Kolben aufweisen, wobei der Kolben beispielsweise pneumatisch innerhalb des Zylinders beweglich ist. Dies ist eine robuste und einfache Ausgestaltung.

Fluide liegen oft bei tiefen Temperaturen vor. Um dem besonders gut standhalten zu können, ist die Stange vorzugsweise mehrteilig ausgebildet. In dem Fall weist die Stange vorzugsweise mehrere Stangenabschnitte auf. Ein erster der Stangenabschnitte ist näher an dem Ventil angeordnet als ein zweiter der Stangenabschnitte. Der erste Stangenabschnitt hat eine höhere thermische Leitfähigkeit als der zweite der Stangenabschnitte. Der zweite Stangenabschnitt kann zu einer thermischen Isolierung zwischen dem kalten Fluid und der Außenseite der Anschlusseinrichtung beitragen. Für den ersten Stangenabschnitt kann ein robusteres Material verwendet werden, welches den tiefen Temperaturen des Fluids besonders gut standhalten kann.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei das Ventil einen Ventilstempel und eine Ventilöffnung aufweist, wobei der Ventilstempel entlang einer Ventilachse zwischen einer ersten Endposition und einer zweiten Endposition beweglich ist, wobei der Ventilstempel in seiner zweiten Endposition die Ventilöffnung verschließt, wobei das Ventil weiterhin eine Zylinderfeder aufweist, welche derart einerseits an dem Ventilstempel und andererseits radial außerhalb der Ventilöffnung an einer Begrenzung des Innenraums der Anschlusseinrichtung gehalten ist, dass die Zylinderfeder den Ventilstempel in dessen zweite Endposition vorspannt.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 6

Nachfolgend werden Ausführungsformen der Erfindung beschrieben. Die Ausführungsformen haben zwar die Struktur von Patentansprüchen, stellen aber keine Patentansprüche dar.
1. Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei das Ventil (206) einen Ventilstempel (216) und eine Ventilöffnung (219) aufweist, wobei der Ventilstempel (216) entlang einer Ventilachse (232) zwischen einer ersten Endposition (217) und einer zweiten Endposition (218) beweglich ist, wobei der Ventilstempel (216) in seiner zweiten Endposition (218) die Ventilöffnung (219) verschließt, wobei das Ventil (206) weiterhin eine Zylinderfeder (233) aufweist, welche derart einerseits an dem Ventilstempel (216) und andererseits radial außerhalb der Ventilöffnung (219) an einer Begrenzung (221) des Innenraums (205) der Anschlusseinrichtung (202) gehalten ist, dass die Zylinderfeder (233) den Ventilstempel (216) in dessen zweite Endposition (218) vorspannt.
2. Vorrichtung (2) nach Ausführungsform 1, wobei der Ventilstempel (216) einen Ventilteller (234) und einen daran angebundenen Ventilschaft (235) aufweist, wobei der Ventilstempel (216) in seiner zweiten Endposition (218) die Ventilöffnung (219) mit dem Ventilteller (234) verschließt, und wobei der Ventilschaft (235) innerhalb der Zylinderfeder (233) angeordnet ist.
3. Vorrichtung (2) nach einer der vorstehenden Ausführungsformen, wobei der Ventilstempel (216) einen um die Ventilachse (232) umlaufenden Flansch (236) aufweist, über welchen die Zylinderfeder (233) an dem Ventilstempel (216) gehalten ist.
4. Vorrichtung (2) nach Ausführungsform 3, wobei der Flansch (236) des Ventilstempels (216) radial außen liegend mehrere Ausnehmungen (238) aufweist, mit welchen zwischen dem Flansch (236) und der Begrenzung (221) des Innenraums (205) der Anschlusseinrichtung (202) jeweils ein Durchgang (239) gebildet ist.
5. Vorrichtung (2) nach einer der vorstehenden Ausführungsformen, wobei ein Strömungspfad (240) vom Innenraum (205) der Anschlusseinrichtung (202) durch die Ventilöffnung (219) freigegeben ist, wenn sich der Ventilstempel (216) außerhalb seiner zweiten Endposition (218) befindet.
6. Vorrichtung (2) nach einer der vorstehenden Ausführungsformen, wobei das Ventil (206) und der Ventilantrieb (207) auf einer Hauptachse (211) der Anschlusseinrichtung (202) voneinander beabstandet angeordnet sind, und wobei die Hauptachse (211) der Anschlusseinrichtung (202) mit der Ventilachse (232) des Ventils (206) zusammenfällt.
7. Vorrichtung (2) nach einer der vorstehenden Ausführungsformen, wobei das Ventil (206) und der Ventilantrieb (207) über eine entlang der Hauptachse (211) ausgebildete einteilige oder mehrteilige Stange (213) mechanisch miteinander gekoppelt sind.
8. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
9. Verfahren zum Betanken eines Fahrzeugs (4) mit einem Fluid mit einer Vorrichtung (2) nach einer der Ausführungsformen 1 bis 7, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
10. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei das Ventil (206) einen Ventilstempel (216) und eine Ventilöffnung (219) aufweist, wobei der Ventilstempel (216) entlang einer Ventilachse (232) zwischen einer ersten Endposition (217) und einer zweiten Endposition (218) beweglich ist, wobei der Ventilstempel (216) in seiner zweiten Endposition (218) die Ventilöffnung (219) verschließt, wobei das Ventil (206) weiterhin eine Zylinderfeder (233) aufweist, welche derart einerseits an dem Ventilstempel (216) und andererseits radial außerhalb der Ventilöffnung (219) an einer Begrenzung (221) des Innenraums (205) der Anschlusseinrichtung (202) gehalten ist, dass die Zylinderfeder (233) den Ventilstempel (216) in dessen zweite Endposition (218) vorspannt.

### Abschnitt 7 (10 2022 104 641.9)

Die zu lösenden Aufgaben werden gelöst mit der Vorrichtung, der Anordnung, dem Verfahren und der Anschlusseinrichtung gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist, wobei der Stutzen einen ersten Stutzenabschnitt, einen zweiten Stutzenabschnitt und eine um eine Achse des Stutzens umlaufende Dichtung aufweist, und wobei der erste Stutzenabschnitt und der zweite Stutzenabschnitt derart durch eine Schraubverbindung miteinander verbunden sind, dass die Dichtung von dem ersten Stutzenabschnitt und dem zweiten Stutzenabschnitt gehalten ist.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Der Stutzen weist einen ersten Stutzenabschnitt und einen zweiten Stutzenabschnitt auf. Der erste Stutzenabschnitt und der zweite Stutzenabschnitt sind vorzugsweise jeweils als ein Rohrstück ausgebildet. Der erste Stutzenabschnitt und der zweite Stutzenabschnitt sind vorzugsweise axial gegeneinander versetzt angeordnet. Das Fluid kann also die Anschlusseinrichtung verlassen, indem es zuerst durch den zweiten Stutzenabschnitt und anschließend durch den ersten Stutzenabschnitt strömt. Der erste Stutzenabschnitt und der zweite Stutzenabschnitt können einander überlappen, insbesondere axial. Das ist sogar insoweit bevorzugt, als dass in dem Fall der erste Stutzenabschnitt und der zweite Stutzenabschnitt stabil aneinander gehalten sein können, um gemeinsam den Stutzen zu bilden.

Der erste Stutzenabschnitt und der zweite Stutzenabschnitt stehen miteinander in Kontakt. Zwischen dem ersten Stutzenabschnitt und dem zweiten Stutzenabschnitt ist insoweit kein weiterer Stutzenabschnitt angeordnet. Der erste Stutzenabschnitt und der zweite Stutzenabschnitt sind vorzugsweise jeweils um eine Achse des Stutzens umlaufend ausgebildet. Die Achse des Stutzens fällt vorzugsweise mit einer Hauptachse der Anschlusseinrichtung und/oder mit einer Achse des Ventils zusammen.

Weiterhin weist der Stutzen eine um die Achse des Stutzens umlaufende Dichtung auf. Durch die Unterteilung des Stutzens in den ersten Stutzenabschnitt und den zweiten Stutzenabschnitt kann die Dichtung besonders günstig gehalten sein. Das ist möglich, weil der erste Stutzenabschnitt und der zweite Stutzenabschnitt derart durch eine Schraubverbindung miteinander verbunden sind, dass die Dichtung von dem ersten Stutzenabschnitt und dem zweiten Stutzenabschnitt gehalten ist. Insoweit kann die Dichtung gehalten sein, ohne dass ein gesondertes Befestigungselement vorgesehen sein müsste.

Die Dichtung kann formschlüssig von dem ersten Stutzenabschnitt und den zweiten Stutzenabschnitt gehalten sein. Alternativ oder zusätzlich kann die Dichtung kraftschlüssig von dem ersten Stutzenabschnitt und den zweiten Stutzenabschnitt gehalten sein. In letzterem Fall ist die Dichtung zwischen dem ersten Stutzenabschnitt und dem zweiten Stutzenabschnitt eingeklemmt.

Unter einer Schraubverbindung ist eine Verbindung zu verstehen, die durch zwei aufeinander abgestimmte Gewinde gebildet ist. Die Gewinde können an dem ersten Stutzenabschnitt, dem zweiten Stutzenabschnitt und/oder an einem oder mehreren gesonderten Schraubelement(en) ausgebildet sein. Bevorzugt ist der Fall, dass ein erstes Gewinde an dem ersten Stutzenabschnitt und ein zweites Gewinde an dem zweiten Stutzenabschnitt ausgebildet ist. In dem Fall ist kein gesondertes Schraubelement erforderlich.

Aufgrund der Dichtung kann die Anschlusseinrichtung dicht mit dem Anschluss verbunden werden. Wird das Fluid aus der Anschlusseinrichtung in den Anschluss eingeleitet, kann so verhindert werden, dass das Fluid zwischen der Anschlusseinrichtung und dem Anschluss in die Umgebung austritt.

Das erste Ende des Stutzens ist vorzugsweise an dem ersten Stutzenabschnitt ausgebildet. Das zweite Ende des Stutzens ist vorzugsweise an dem zweiten Stutzenabschnitt ausgebildet. In Kombination dieser beiden Fälle weist der Stutzen neben dem ersten Stutzenabschnitt und dem zweiten Stutzenabschnitt keine weiteren Stutzenabschnitte auf. Allerdings ist es in alternativen Ausgestaltungen möglich, das der Stutzen weitere Stutzenabschnitte aufweist. Insbesondere können auch der erste Stutzenabschnitt und/oder der zweite Stutzenabschnitt jeweils mehrteilig ausgebildet sein. Dies würde die Funktion des ersten Stutzenabschnitts und des zweiten Stutzenabschnitts nicht beeinträchtigen, dass über diese die Dichtung gehalten wird.

Ist das zweite Ende des Stutzens durch den zweiten Stutzenabschnitt gebildet, kann der zweite Stutzenabschnitt einstückig mit einer Begrenzung des Innenraums der Anschlusseinrichtung ausgebildet sein. Es ist insoweit nicht erforderlich, dass der zweite Stutzenabschnitt als gesondertes Bauteil ausgebildet ist. Allgemein ist es nicht erforderlich, dass der Stutzen beispielsweise durch eine Bauteilgrenze körperlich von der Begrenzung des Innenraums der Anschlusseinrichtung unterscheidbar ist.

Die Dichtung kann im Betrieb tiefen Temperaturen ausgesetzt sein. Dadurch kann die Dichtung spröde werden. Deshalb und auch aus anderen Gründen kann es erforderlich werden, die Dichtung zu ersetzen. Durch die beschriebene Ausgestaltung des Stutzens ist dies besonders leicht möglich. So kann der erste Stutzenabschnitt vom zweiten Stutzenabschnitt abgeschraubt werden, die alte Dichtung entnommen, eine neue Dichtung eingesetzt und der erste Stutzenabschnitt wieder an dem zweiten Stutzenabschnitt befestigt werden.

Der erste Stutzenabschnitt kann insoweit auch als eine Mutter aufgefasst werden, welche auf den zweiten Stutzenabschnitt geschraubt wird, um die Dichtung zu halten. Der erste Stutzenabschnitt kann die Dichtung vor Beschädigung schützen. Insoweit kann der erste Stutzenabschnitt auch als eine ringförmige Kappe ausgebildet sein.

Der Stutzen kommt im Betrieb mit dem Fluid in Kontakt. Entsprechend kann der Stutzen tiefen Temperaturen ausgesetzt sein. Der Stutzen ist daher vorzugsweise aus kälteresistentem Material gebildet. Der erste Stutzenabschnitt und der zweite Stutzenabschnitt sind vorzugsweise aus einem Metall gebildet, insbesondere aus Stahl. Die Dichtung ist vorzugsweise aus einem Kunststoff gebildet.

In einer bevorzugten Ausführungsform der Vorrichtung steht die Dichtung in Richtung auf die Achse des Stutzens über eine Innenseite des Stutzens hervor.

In dieser Ausführungsform ist die Vorrichtung für einen Anschluss geeignet, welcher zumindest teilweise innerhalb des Stutzens aufgenommen wird. Zwischen der Innenseite des Stutzens und der Außenseite des in den Stutzen aufgenommenen Teils des Anschlusses ergibt sich ein Ringspalt, welcher von der Dichtung abgedichtet werden kann. Die Dichtung kann insoweit als eine umlaufende Lippe aufgefasst werden.

In einer weiteren bevorzugten Ausführungsform der Vorrichtung ist die Schraubverbindung durch ein erstes Gewinde an einer Innenseite des ersten Stutzenabschnitts und durch ein zweites Gewinde an einer Außenseite des zweiten Stutzenabschnitts gebildet.

In dieser Ausführungsform ist kein gesondertes Schraubelement erforderlich, um die Schraubverbindung auszubilden. Stattdessen bilden der erste Stutzenabschnitt und der zweite Stutzenabschnitt selbst die miteinander verschraubten Bauteile. Der erste Stutzenabschnitt kann von dem zweiten Stutzenabschnitt losgeschraubt werden, indem der erste Stutzenabschnitt um seine Achse rotiert wird.

In der vorliegenden Ausführungsform ist der erste Stutzenabschnitt im Bereich der Schraubverbindung außerhalb des zweiten Stutzenabschnitts angeordnet. Insoweit kann der erste Stutzenabschnitt als eine ringförmige Kappe aufgefasst sein, welche über den zweiten Stutzenabschnitt gestülpt werden kann.

Denkbar ist aber auch eine alternative Ausgestaltung, bei welcher der erste Stutzenabschnitt im Bereich der Schraubverbindung innerhalb des zweiten Stutzenabschnitts angeordnet ist. Entsprechend ist alternativ bevorzugt, dass die Schraubverbindung durch ein erstes Gewinde an einer Außenseite des ersten Stutzenabschnitts und durch ein zweites Gewinde an einer Innenseite des zweiten Stutzenabschnitts gebildet ist.

In einer weiteren bevorzugten Ausführungsform der Vorrichtung ist die Schraubverbindung koaxial zur Achse des Stutzens ausgebildet.

In dieser Ausführungsform kann der erste Stutzenabschnitt um die Achse des Stutzens rotiert werden, um von dem zweiten Stutzenabschnitt gelöst zu werden. Die Achse des Stutzens fällt mit einer Achse des ersten Stutzens zusammen. Dies ist eine besonders einfach herzustellende Ausgestaltung.

In einer weiteren bevorzugten Ausführungsform der Vorrichtung überlappen der erste Stutzenabschnitt und der zweite Stutzenabschnitt zumindest dort, wo die Schraubverbindung ausgebildet ist.

In dieser Ausführungsform können die beiden Stutzenabschnitte besonders stabil aneinander gehalten sein.

In einer weiteren bevorzugten Ausführungsform der Vorrichtung ist der zweite Stutzenabschnitt zumindest teilweise doppelwandig ausgebildet.

Die doppelwandige Ausgestaltung trägt zur thermischen Isolation des Stutzens bei. Vorzugsweise herrscht in einem Spalt zwischen den beiden Wänden der Doppelwand ein Vakuum. Insoweit ist der zweite Stutzenabschnitt vakuumisoliert.

In einer weiteren bevorzugten Ausführungsform der Vorrichtung ist der zweite Stutzenabschnitt zumindest teilweise gemeinsam mit einer Begrenzung des Innenraums der Anschlusseinrichtung vakuumisoliert.

Die doppelwandige Ausgestaltung geht in dieser Ausführungsform vorzugsweise vom zweiten Stutzen ununterbrochen in ein Gehäuse der Anschlusseinrichtung über. Es ist insoweit nicht erforderlich, dass der Stutzen beispielsweise durch eine Bauteilgrenze von dem Gehäuse der Anschlusseinrichtung unterscheidbar ist.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei der Stutzen einen ersten Stutzenabschnitt, einen zweiten Stutzenabschnitt und eine um eine Achse des Stutzens umlaufende Dichtung aufweist, und wobei der erste Stutzenabschnitt und der zweite Stutzenabschnitt derart durch eine Schraubverbindung miteinander verbunden sind, dass die Dichtung von dem ersten Stutzenabschnitt und dem zweiten Stutzenabschnitt gehalten ist.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 7

Nachfolgend werden Ausführungsformen der Erfindung beschrieben. Die Ausführungsformen haben zwar die Struktur von Patentansprüchen, stellen aber keine Patentansprüche dar.
1. Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei der Stutzen (208) einen ersten Stutzenabschnitt (222), einen zweiten Stutzenabschnitt (223) und eine um eine Achse (224) des Stutzens (208) umlaufende Dichtung (225) aufweist, und wobei der erste Stutzenabschnitt (222) und der zweite Stutzenabschnitt (223) derart durch eine Schraubverbindung (226) miteinander verbunden sind, dass die Dichtung (225) von dem ersten Stutzenabschnitt (222) und dem zweiten Stutzenabschnitt (223) gehalten ist.
2. Vorrichtung (2) nach Ausführungsform 1, wobei die Dichtung (225) in Richtung auf die Achse (224) des Stutzens (208) über eine Innenseite (227) des Stutzens (208) hervorsteht.
3. Vorrichtung (2) nach einer der vorstehenden Ausführungsformen, wobei die Schraubverbindung (226) durch ein erstes Gewinde (229) an einer Innenseite (227) des ersten Stutzenabschnitts (222) und durch ein zweites Gewinde (230) an einer Außenseite (231) des zweiten Stutzenabschnitts (223) gebildet ist.
4. Vorrichtung (2) nach einer der vorstehenden Ausführungsformen, wobei die Schraubverbindung (226) koaxial zur Achse (224) des Stutzens (208) ausgebildet ist.
5. Vorrichtung (2) nach einer der vorstehenden Ausführungsformen, wobei der erste Stutzenabschnitt (222) und der zweite Stutzenabschnitt (223) zumindest dort überlappen, wo die Schraubverbindung (226) ausgebildet ist.
6. Vorrichtung (2) nach einer der vorstehenden Ausführungsformen, wobei der zweite Stutzenabschnitt (223) zumindest teilweise doppelwandig ausgebildet ist.
7. Vorrichtung (2) nach Ausführungsform 6, wobei der zweite Stutzenabschnitt (223) zumindest teilweise gemeinsam mit einer Begrenzung (221) des Innenraums (205) der Anschlusseinrichtung (202) vakuumisoliert ist.
8. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
9. Verfahren zum Betanken eines Fahrzeugs (4) mit einem Fluid mit einer Vorrichtung (2) nach einer der Ausführungsformen 1 bis 7, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
10. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei der Stutzen (208) einen ersten Stutzenabschnitt (222), einen zweiten Stutzenabschnitt (223) und eine um eine Achse (224) des Stutzens (208) umlaufende Dichtung (225) aufweist, und wobei der erste Stutzenabschnitt (222) und der zweite Stutzenabschnitt (223) derart durch eine Schraubverbindung (226) miteinander verbunden sind, dass die Dichtung (225) von dem ersten Stutzenabschnitt (222) und dem zweiten Stutzenabschnitt (223) gehalten ist.

### Abschnitt 8 (10 2022 104 640.0)

Die zu lösenden Aufgaben werden gelöst mit der Vorrichtung, der Anordnung, dem Verfahren und der Anschlusseinrichtung gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei das Ventil und der Ventilantrieb auf einer Hauptachse der Anschlusseinrichtung voneinander beabstandet angeordnet sind, wobei die Abgabeleitung und die Hauptachse der Anschlusseinrichtung derart einen Winkel im Bereich von 30 bis 60° einschließen, dass sich ein Abstand zwischen der Abgabeleitung und der Hauptachse der Anschlusseinrichtung bei Betrachtung in einer von dem Ventilantrieb zum Ventil weisenden Richtung verringert.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Das Ventil und der Ventilantrieb sind auf einer Hauptachse der Anschlusseinrichtung voneinander beabstandet angeordnet. Die Anschlusseinrichtung ist vorzugsweise zumindest teilweise rotationssymmetrisch um die Hauptachse ausgebildet. Beispielsweise kann die Anschlusseinrichtung eine Begrenzung eines Innenraums aufweisen, welche als eine um die Hauptachse umlaufende Wand ausgebildet ist. Der Anschluss kann vorzugsweise in einer Richtung parallel zur Hauptachse mit der Anschlusseinrichtung verbunden werden.

Die Abgabeleitung und die Hauptachse der Anschlusseinrichtung schließen einen Winkel im Bereich von 30 bis 60° ein, vorzugsweise 40 bis 50°. Besonders bevorzugt beträgt der Winkel 45°. Die Abgabeleitung ist also schräg an die Anschlusseinrichtung angebunden. Grundsätzlich kann die Abgabeleitung auf zwei Weisen einen solchen Winkel mit der Hauptachse der Anschlusseinrichtung einschließen. Für die beschriebene Vorrichtung wurde davon die Möglichkeit gewählt, bei der sich ein Abstand zwischen der Abgabeleitung und der Hauptachse der Anschlusseinrichtung bei Betrachtung in einer von dem Ventilantrieb zum Ventil weisenden Richtung verringert. Die Abgabeleitung und die Hauptachse der Anschlusseinrichtung schließen also auf der Seite des Ventilantriebs einen Winkel im Bereich von 30 bis 60° ein. Beträgt dieser Winkel beispielsweise 45°, schließen die Abgabeleitung und die Hauptachse der Anschlusseinrichtung auf der Seite des Stutzens den komplementären Winkel von 180° - 45° = 135° ein.

Eine derart schräge Anbindung der Abgabeleitung an die Anschlusseinrichtung hat sich als vorteilhaft herausgestellt, insbesondere in Kombination mit der Anordnung von Ventilantrieb und Ventil auf der Hauptachse der Anschlusseinrichtung. Durch diese Ausgestaltung kann einerseits das Ventil entlang einer geraden Linie mit dem Ventilantrieb gekoppelt sein. Das erleichtert die mechanische Kopplung, die im einfachsten Fall starr mit einer geraden Stange realisiert sein kann. Eine mechanische Kopplung entlang einer geraden Linie ist günstig und robust. Zudem ergeben sich bei einer solchen Kopplung die geringsten Anforderungen an den Ventilantrieb. Eine Bewegung des Ventilantriebs kann unmittelbar in eine Betätigung des Ventils umgesetzt werden. Eine Umlenkung, Umkehr oder Übersetzung ist nicht erforderlich. Insbesondere ist kein Getriebe oder dergleichen erforderlich. Diese Vorteile ergeben sich vor allem dann, wenn das Ventil entlang einer geraden Linie mit dem Ventilantrieb gekoppelt ist. Dies ist entsprechend bevorzugt. Allerdings ergeben sich die beschriebenen Vorteile zumindest in eingeschränktem Maße auch dann, wenn das Ventil nicht entlang einer geraden Linie mit dem Ventilantrieb gekoppelt ist.

Eine Kopplung von Ventilantrieb und Ventil entlang einer geraden Linie hat grundsätzlich den Nachteil, dass dadurch die Anbindung der Abgabeleitung an die Anschlusseinrichtung erschwert wird. Insbesondere ist es nicht ohne weiteres möglich, die Abgabeleitung entlang der Hauptachse der Anschlusseinrichtung zu führen, weil dort der Ventilantrieb angeordnet ist. Eine denkbare Alternative wäre, die Abgabeleitung senkrecht zur Hauptachse der Anschlusseinrichtung an die Anschlusseinrichtung anzubinden. Dies scheint sogar die optimale Lösung zu sein, da die Abgabeleitung in dem Fall sowohl vom Ventilantrieb als auch vom Ventil maximal beabstandet zur Anschlusseinrichtung geführt werden kann.

Allerdings hat sich herausgestellt, dass eine senkrechte Anbindung der Abgabeleitung an die Anschlusseinrichtung strömungstechnisch ungünstig ist. Die Ausgestaltung der beschriebenen Vorrichtung beruht also insbesondere auf der Erkenntnis, dass die Orientierung der Abgabeleitung relativ zur Anschlusseinrichtung nicht bloß anhand konstruktiver Kriterien zu wählen ist. Vielmehr wirkt sich diese Orientierung auch auf das Strömungsverhalten des Fluids aus. Ein zu großer Winkel zwischen Abgabeleitung und Hauptachse der Anschlusseinrichtung kann insbesondere eine abrupte Richtungsänderung der Strömung bewirken. Dies kann dazu führen, dass sich die Strömung verlangsamt. Das Einleiten des Fluids in den Anschluss verlängert sich dadurch. In vielen Anwendungsfällen ist es allerdings gewünscht, dass das Fluid möglichst schnell in den Anschluss eingeleitet wird. Wird beispielsweise ein Fahrzeug mit Wasserstoff betankt, sollte dies innerhalb weniger Minuten abgeschlossen sein. Zwar kann die Durchflussrate auch durch die Druckdifferenz zwischen Fluidquelle und Anschluss und/oder durch den Strömungsquerschnitt des Anschlusses vergrößert werden. Aus Sicherheitsgründen ist aber eine möglichst geringe Druckdifferenz zu bevorzugen, zumal beispielsweise flüssiger Wasserstoff ohnehin üblicherweise bei hohem Druck vorliegt. Der Strömungsquerschnitt des Anschlusses ist aus Platzgründen meist begrenzt, insbesondere im Falle eines Anschlusses an einem Fahrzeug. Mit der beschriebenen Vorrichtung kann eine vergleichsweise hohe Durchflussrate erreicht werden, ohne die Druckdifferenz zwischen Fluidquelle und Anschluss vergrößern zu müssen und/oder den Strömungsquerschnitt des Anschlusses vergrößern zu müssen.

Darüber hinaus erleichtert die beschriebene Ausrichtung der Abgabeleitung die Handhabung durch einen Benutzer. So hat sich herausgestellt, dass die wie beschrieben schräg in die Anschlusseinrichtung mündende Abgabeleitung besonders gut zu handhaben ist.

In einer bevorzugten Ausführungsform der Vorrichtung sind das Ventil und der Ventilantrieb über eine entlang der Hauptachse der Anschlusseinrichtung ausgebildete einteilige oder mehrteilige Stange mechanisch miteinander gekoppelt.

Fluide liegen oft bei tiefen Temperaturen vor. Um dem besonders gut standhalten zu können, ist die Stange vorzugsweise mehrteilig ausgebildet. In dem Fall weist die Stange vorzugsweise mehrere Stangenabschnitte auf. Ein erster der Stangenabschnitte ist näher an dem Ventil angeordnet als ein zweiter der Stangenabschnitte. Der erste Stangenabschnitt hat eine höhere thermische Leitfähigkeit als der zweite der Stangenabschnitte. Der zweite Stangenabschnitt kann zu einer thermischen Isolierung zwischen dem kalten Fluid und der Außenseite der Anschlusseinrichtung beitragen. Für den ersten Stangenabschnitt kann ein robusteres Material verwendet werden, welches den tiefen Temperaturen des Fluids besonders gut standhalten kann.

In einer weiteren bevorzugten Ausführungsform der Vorrichtung ist der Ventilantrieb pneumatisch.

In dieser Ausführungsform kann das Ventil über den Ventilantrieb mit Druckluft betätigt werden. Vorzugsweise ist die Anschlusseinrichtung derart eingerichtet, dass das Ventil geschlossen ist, wenn keine Druckluft am pneumatischen Antrieb anliegt. Durch Einleiten von Druckluft in den pneumatischen Antrieb kann das Ventil geöffnet werden. Die Druckluft kann dem pneumatischen Antrieb über eine Druckluftleitung zugeleitet werden.

In einer weiteren bevorzugten Ausführungsform der Vorrichtung weist der Ventilantrieb einen Zylinder und einen darin angeordneten Kolben auf, wobei der Kolben pneumatisch entlang der Hauptachse der Anschlusseinrichtung beweglich ist.

Innerhalb des Zylinders ist vorzugsweise eine erste Kammer ausgebildet, welche auf einer vom Ventil abgewandten Seite des Kolbens angeordnet ist und welche durch den Kolben begrenzt ist. Wird Druckluft in die erste Kammer eingeleitet, kann das Ventil geöffnet werden. Das Ventil kann geschlossen werden, indem die Druckluft aus der ersten Kammer herausgelassen wird. Das ist insbesondere dann möglich, wenn das Ventil einen entsprechend vorgespannten Ventilstempel aufweist. Alternativ oder zusätzlich kann in dem Zylinder eine zweite Kammer ausgebildet sein, welche auf einer dem Ventil zugewandten Seite des Kolbens angeordnet ist und welche durch den Kolben begrenzt ist. Wird Druckluft in die zweite Kammer eingeleitet, kann das Ventil aktiv geschlossen werden.

In einer weiteren bevorzugten Ausführungsform der Vorrichtung weist das Ventil einen Ventilstempel auf, welcher mittels des Ventilantriebs entlang der Hauptachse der Anschlusseinrichtung zwischen einer ersten Endposition und einer zweiten Endposition beweglich ist, und welcher in seiner zweiten Endposition eine Ventilöffnung des Ventils verschließt.

Ist das Ventil geschlossen, verschließt der Ventilstempel vorzugsweise die Ventilöffnung. Ist das Ventil geöffnet, gibt der Ventilstempel die Ventilöffnung vorzugsweise frei. In dem Fall kann das Fluid durch das Ventil strömen, indem das Fluid durch die Ventilöffnung strömt. Die Ventilöffnung kann insoweit auch als eine Öffnung des Innenraums der Anschlusseinrichtung aufgefasst werden. Die Ventilöffnung ist vorzugsweise an einer ersten Seite des Ventils angeordnet. Der Innenraum der Anschlusseinrichtung ist vorzugsweise an einer zweiten Seite des Ventils an das Ventil angebunden.

Der Ventilstempel ist entlang einer Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des Ventilstempels und/oder mit der Hauptachse der Anschlusseinrichtung zusammen. Die Ventilöffnung ist vorzugsweise senkrecht zur Ventilachse ausgebildet. Ein Mittelpunkt der Ventilöffnung liegt vorzugsweise auf der Ventilachse. Vorzugsweise ist der Ventilstempel nicht über die erste Endposition hinaus und/oder nicht über die zweite Endposition hinaus beweglich. Das kann durch einen oder mehrere entsprechende Anschläge erreicht werden. Der Ventilstempel verschließt in seiner zweiten Endposition die Ventilöffnung. Insoweit ist das Ventil verschlossen, wenn sich der Ventilstempel in seiner zweiten Endposition befindet. Ist der Ventilstempel in seiner ersten Endposition, gibt der Ventilstempel die Ventilöffnung frei. Insoweit ist das Ventil geöffnet, wenn sich der Ventilstempel in seiner ersten Endposition befindet. Das Ventil ist allerdings vorzugsweise nicht nur dann geöffnet, wenn sich der Ventilstempel in seiner ersten Endposition befindet. Befindet sich der Ventilstempel zwischen seiner ersten Endposition und seiner zweiten Endposition ist das Ventil vorzugsweise teilweise geöffnet.

In einer weiteren bevorzugten Ausführungsform der Vorrichtung weist die Abgabeleitung an ihrem zweiten Ende ein Rohr auf, welches mit einer Begrenzung des Innenraums der Anschlusseinrichtung verbunden oder einstückig ausgebildet ist.

Die Abgabeleitung ist über ihr zweites Ende mit der Anschlusseinrichtung verbunden. An dem zweiten Ende ist das Rohr ausgebildet. Dieses Rohr kann zwar einstückig mit der Anschlusseinrichtung ausgebildet sein, gehört aber dennoch zur Abgabeleitung. Das bedeutet, dass die Anschlusseinrichtung und die Abgabeleitung nicht zwingend durch eine Bauteilgrenze voneinander unterscheidbar sind. Ist beispielsweise ein Schlauch an das Rohr angebunden, können sowohl das Rohr als auch der Schlauch zur Abgabeleitung gehören.

In einer weiteren bevorzugten Ausführungsform der Vorrichtung sind die Abgabeleitung und die Anschlusseinrichtung zumindest teilweise gemeinsam vakuumisoliert.

Die Vakuumisolation dient der Sicherheit. Die gemeinsame Vakuumisolation erleichtert die Herstellung, Wartung und Benutzung, weil nur in einem Raum ein Vakuum erzeugt werden und aufrechterhalten werden muss.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei das Ventil und der Ventilantrieb auf einer Hauptachse der Anschlusseinrichtung voneinander beabstandet angeordnet sind, wobei die Abgabeleitung und die Hauptachse der Anschlusseinrichtung derart einen Winkel im Bereich von 30 bis 60° einschließen, dass sich ein Abstand zwischen der Abgabeleitung und der Hauptachse der Anschlusseinrichtung bei Betrachtung in einer von dem Ventilantrieb zum Ventil weisenden Richtung verringert.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 8

Nachfolgend werden Ausführungsformen der Erfindung beschrieben. Die Ausführungsformen haben zwar die Struktur von Patentansprüchen, stellen aber keine Patentansprüche dar.
1. Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei das Ventil (206) und der Ventilantrieb (207) auf einer Hauptachse (211) der Anschlusseinrichtung (202) voneinander beabstandet angeordnet sind, wobei die Abgabeleitung (201) und die Hauptachse (211) der Anschlusseinrichtung (202) derart einen Winkel (212) im Bereich von 30 bis 60° einschließen, dass sich ein Abstand zwischen der Abgabeleitung (201) und der Hauptachse (211) der Anschlusseinrichtung (202) bei Betrachtung in einer von dem Ventilantrieb (207) zum Ventil (206) weisenden Richtung verringert.
2. Vorrichtung (2) nach Ausführungsform 1, wobei das Ventil (206) und der Ventilantrieb (207) über eine entlang der Hauptachse (211) der Anschlusseinrichtung (202) ausgebildete einteilige oder mehrteilige Stange (213) mechanisch miteinander gekoppelt sind.
3. Vorrichtung (2) nach einer der vorstehenden Ausführungsformen, wobei der Ventilantrieb (207) pneumatisch ist.
4. Vorrichtung (2) nach Ausführungsform 3, wobei der Ventilantrieb (207) einen Zylinder (214) und einen darin angeordneten Kolben (215) aufweist, und wobei der Kolben (215) pneumatisch entlang der Hauptachse (211) der Anschlusseinrichtung (202) beweglich ist.
5. Vorrichtung (2) nach einer der vorstehenden Ausführungsformen, wobei das Ventil (206) einen Ventilstempel (216) aufweist, welcher mittels des Ventilantriebs (207) entlang der Hauptachse (211) der Anschlusseinrichtung (202) zwischen einer ersten Endposition (217) und einer zweiten Endposition (218) beweglich ist, und welcher in seiner zweiten Endposition (218) eine Ventilöffnung (219) des Ventils (206) verschließt.
6. Vorrichtung (2) nach einer der vorstehenden Ausführungsformen, wobei die Abgabeleitung (201) an ihrem zweiten Ende (204) ein Rohr (220) aufweist, welches mit einer Begrenzung (221) des Innenraums (205) der Anschlusseinrichtung (202) verbunden oder einstückig ausgebildet ist.
7. Vorrichtung (2) nach einer der vorstehenden Ausführungsformen, wobei die Abgabeleitung (201) und die Anschlusseinrichtung (202) zumindest teilweise gemeinsam vakuumisoliert sind.
8. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
9. Verfahren zum Betanken eines Fahrzeugs (4) mit einem Fluid mit einer Vorrichtung (2) nach einer der Ausführungsformen 1 bis 7, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
10. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei das Ventil (206) und der Ventilantrieb (207) auf einer Hauptachse (211) der Anschlusseinrichtung (202) voneinander beabstandet angeordnet sind, wobei die Abgabeleitung (201) und die Hauptachse (211) der Anschlusseinrichtung (202) derart einen Winkel (212) im Bereich von 30 bis 60° einschließen, dass sich ein Abstand zwischen der Abgabeleitung (201) und der Hauptachse (211) der Anschlusseinrichtung (202) bei Betrachtung in einer von dem Ventilantrieb (207) zum Ventil (206) weisenden Richtung verringert.

### Abschnitt 9 (10 2022 104 643.5)

Die zu lösenden Aufgaben werden gelöst mit der Vorrichtung, der Anordnung, dem Verfahren und der Anschlusseinrichtung gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist, wobei das Ventil einen Ventilstempel und eine Ventilöffnung aufweist, wobei der Ventilstempel entlang einer Ventilachse zwischen einer ersten Endposition und einer zweiten Endposition beweglich ist, wobei der Ventilstempel in seiner zweiten Endposition die Ventilöffnung verschließt, und wobei die zweite Endposition des Ventilstempels näher an dem Innenraum der Anschlusseinrichtung angeordnet ist als die erste Endposition des Ventilstempels.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Das Ventil weist einen Ventilstempel und eine Ventilöffnung auf. Ist das Ventil geschlossen, verschließt der Ventilstempel die Ventilöffnung. Ist das Ventil geöffnet, gibt der Ventilstempel die Ventilöffnung frei. In dem Fall kann das Fluid durch das Ventil strömen, indem das Fluid durch die Ventilöffnung strömt. Die Ventilöffnung kann insoweit auch als eine Öffnung des Innenraums der Anschlusseinrichtung aufgefasst werden. Die Ventilöffnung ist vorzugsweise an einer ersten Seite des Ventils angeordnet. Der Innenraum der Anschlusseinrichtung ist vorzugsweise an einer zweiten Seite des Ventils an das Ventil angebunden.

Der Ventilstempel ist entlang einer Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des Ventilstempels zusammen. Die Ventilöffnung ist vorzugsweise senkrecht zur Ventilachse ausgebildet. Ein Mittelpunkt der Ventilöffnung liegt vorzugsweise auf der Ventilachse. Vorzugsweise ist der Ventilstempel nicht über die erste Endposition hinaus und/oder nicht über die zweite Endposition hinaus beweglich. Das kann durch einen oder mehrere entsprechende Anschläge erreicht werden. Der Ventilstempel verschließt in seiner zweiten Endposition die Ventilöffnung. Insoweit ist das Ventil verschlossen, wenn sich der Ventilstempel in seiner zweiten Endposition befindet. Ist der Ventilstempel in seiner ersten Endposition, gibt der Ventilstempel die Ventilöffnung frei. Insoweit ist das Ventil geöffnet, wenn sich der Ventilstempel in seiner ersten Endposition befindet. Das Ventil ist allerdings vorzugsweise nicht nur dann geöffnet, wenn sich der Ventilstempel in seiner ersten Endposition befindet. Befindet sich der Ventilstempel zwischen seiner ersten Endposition und seiner zweiten Endposition ist das Ventil vorzugsweise teilweise geöffnet.

Die zweite Endposition des Ventilstempels ist näher an dem Innenraum der Anschlusseinrichtung angeordnet als die erste Endposition des Ventilstempels. Das Ventil kann also geöffnet werden, indem der Ventilstempel gegenüber der verschlossenen Stellung weiter aus dem Innenraum der Anschlusseinrichtung heraus bewegt wird. Eine Dichtfläche zwischen dem Ventilstempel und der Ventilöffnung ist vorzugsweise außen an dem Ventilkörper ausgebildet. Das Ventil kann insoweit als nach außen öffnend aufgefasst werden.

Im Allgemeinen wäre die gegenteilige Ausgestaltung zu bevorzugen, bei welcher das Ventil nach innen öffnet, bei welcher also die erste Endposition des Ventilstempels weiter innerhalb eines Innenraums der Anschlusseinrichtung angeordnet ist als die zweite Endposition des Ventilstempels. Der üblicherweise im Innenraum der Anschlusseinrichtung herrschende Druck würde bei einer solchen Ausgestaltung dafür sorgen, dass das Ventil grundsätzlich verschlossen ist und nur bei Vorliegen einer externen Kraft geöffnet ist. Das ist aus Sicherheitsgründen sinnvoll, weil sich das Ventil so im Störungsfall von selbst aufgrund des im Innenraum der Anschlusseinrichtung herrschenden Drucks schließen würde. Überraschenderweise hat sich aber herausgestellt, dass trotzdem die beschriebene Ausgestaltung insgesamt zu bevorzugen ist.

Das liegt insbesondere daran, dass der Ventilstempel der beschriebenen Vorrichtung nicht nur dazu verwendet werden kann, die Ventilöffnung zu verschließen. Der Ventilstempel kann auch dazu verwendet werden, ein Ventil des Anschlusses zu betätigen. Das ist dadurch begünstigt, dass das Ventil der Anschlusseinrichtung wie beschrieben nach außen öffnet. Der Ventilstempel des Ventils der Anschlusseinrichtung kann als ein Stößel aufgefasst werden, welcher auf das Ventil des Anschlusses einwirken kann. Der Ventilstempel des Ventils der Anschlusseinrichtung kann unmittelbar oder mittelbar auf das Ventil des Anschlusses einwirken. Im letzteren Fall kann die Vorrichtung beispielsweise ein Verlängerungselement aufweisen, welches starr mit dem Ventilstempel des Ventils der Anschlusseinrichtung verbunden ist und welches dazu eingerichtet ist, auf das Ventil des Anschlusses einzuwirken.

Die Betätigung des Ventils des Anschlusses über den Ventilstempel des Ventils der Anschlusseinrichtung ist nicht nur deshalb günstig, weil kein gesondertes Betätigungselement verwendet werden muss. Vielmehr trägt es zur Sicherheit bei, wenn das Ventil des Anschlusses gemeinsam mit dem Ventil der Anschlusseinrichtung geöffnet wird. Würden die beiden Ventile zu unterschiedlichen Zeiten geöffnet, könnte Fluid austreten.

Wird das Ventil des Anschlusses über den Ventilantrieb der Anschlusseinrichtung betätigt, ist kein gesonderter Ventilantrieb am Anschluss erforderlich. Beispielsweise ein Fahrzeug mit einem Wasserstofftank benötigt daher keinen eigenen Ventilantrieb.

Der Anschluss weist vorzugsweise ein Ventil mit einem Ventilstempel auf, welcher entlang einer Ventilachse zwischen einer ersten Endposition und einer zweiten Endposition beweglich ist, und welcher in seiner ersten Endposition die Ventilöffnung verschließt. Die Ventilachse des Ventils des Anschlusses fällt vorzugsweise mit der Ventilachse des Ventils der Anschlusseinrichtung zusammen. Das Ventil des Anschlusses öffnet vorzugsweise nach innen. Die zweite Endposition des Ventilstempels des Ventils des Anschlusses ist also vorzugsweise weiter innerhalb eines Innenraums des Anschlusses angeordnet als die erste Endposition des Ventilstempels des Ventils des Anschlusses.

Bevor das Fluid in den Anschluss eingeleitet wird, sind beide Ventile vorzugsweise verschlossen. Der Ventilstempel des Ventils der Anschlusseinrichtung befindet sich in dem Fall in seiner zweiten Endposition und der Ventilstempel des Ventils des Anschlusses befindet sich in seiner ersten Endposition. Um das Fluid in den Anschluss einzuleiten, wird die Anschlusseinrichtung mit dem Anschluss verbunden. Beide Ventile können gleichzeitig geöffnet werden, indem der Ventilantrieb der Anschlusseinrichtung den Ventilstempel des Ventils der Anschlusseinrichtung aus seiner zweiten Endposition in seine erste Endposition bewegt. Da dieses Ventil nach außen öffnet, kann durch den Ventilstempel des Ventils der Anschlusseinrichtung der Ventilstempel des Ventils des Anschlusses aus seiner ersten Endposition in seine zweite Endposition bewegt werden. Das Ventil des Anschlusses wird dadurch geöffnet.

Dass das Ventil der Anschlusseinrichtung wie beschrieben nach außen öffnet, ist insoweit vorteilhaft. Dafür kann in Kauf genommen werden, dass das Ventil aufgrund des im Innenraum der Anschlusseinrichtung üblicherweise herrschenden Drucks geöffnet ist, sofern keine externe Kraft am Ventilstempel angreift. Das gilt insbesondere deshalb, weil der Ventilstempel mit vergleichsweise geringem Aufwand in seine zweite Endposition vorgespannt werden kann.

In einer bevorzugten Ausführungsform der Vorrichtung weist die Anschlusseinrichtung weiterhin eine Feder auf, über welche der Ventilstempel in seine zweite Endposition vorgespannt ist.

Die Feder spannt den Ventilstempel also in die Position vor, in der der Ventilstempel das Ventil verschließt. Obwohl das Ventil nach außen öffnet, ist es bei dieser Ausgestaltung verschlossen, sofern keine externe Kraft auf den Ventilstempel einwirkt. Das gilt auch, wenn im Innenraum der Anschlusseinrichtung ein höherer Druck herrscht als in der Umgebung der Anschlusseinrichtung, sofern dieser Druck auf den Ventilstempel eine geringere Kraft ausübt als die Feder. Die Feder ist vorzugsweise entsprechend dimensioniert.

Aufgrund der Feder kann die zweite Endposition auch als ein Grundzustand des Ventils bezeichnet werden. Dass das Ventil im Grundzustand verschlossen ist, trägt zur Sicherheit bei. Um das Ventil zu öffnen, kann der Ventilstempel mit dem Ventilantrieb entgegen der von der Feder auf den Ventilstempel ausgeübten Kraft aus der zweiten Endposition bewegt werden. Der Ventilantrieb ist daher entsprechend eingerichtet und mit dem Ventilstempel gekoppelt. Der Ventilantrieb kann die von der Feder auf den Ventilstempel ausgeübte Kraft überwinden.

Die Feder ist vorzugsweise eine Zylinderfeder. Unter einer Zylinderfeder ist eine Feder zu verstehen, deren Windungen auf einem Zylindermantel liegen. Eine Zylinderfeder kann auch als Schraubenfeder bezeichnet werden. Die beschriebenen Vorteile lassen sich aber auch mit verschiedenen anderen Arten von Federn erreichen. Dafür genügt es, dass die Feder die beschriebene Eignung hat, den Ventilstempel in seine zweite Endposition vorzuspannen.

Die Feder ist vorzugsweise einerseits an dem Ventilstempel gehalten. Insoweit kann die Feder eine Kraft auf den Ventilstempel ausüben. Andererseits ist die Feder vorzugsweise an einer Begrenzung des Innenraums der Anschlusseinrichtung gehalten. Eine von der Feder auf den Ventilstempel ausgeübte Kraft hängt daher von der Position des Ventilstempels relativ zur Begrenzung des Innenraums der Anschlusseinrichtung ab. Das Ventil weist vorzugsweise einen Ventilkörper auf, in welchem die Ventilöffnung gebildet ist. Der Innenraum der Anschlusseinrichtung ist vorzugsweise teilweise von dem Ventilkörper umschlossen. Der Ventilkörper bildet also vorzugsweise einen Teil der Begrenzung des Innenraums der Anschlusseinrichtung. Vorzugsweise ist die Feder insoweit an einer Begrenzung des Innenraums der Anschlusseinrichtung gehalten, als dass die Feder an dem Ventilkörper gehalten ist. Der Ventilkörper bewegt sich also bei üblicher Verwendung der Vorrichtung nicht relativ zur übrigen Begrenzung des Innenraums der Anschlusseinrichtung. Insoweit hängt eine von der Feder auf den Ventilstempel ausgeübte Kraft von der Position des Ventilstempels relativ zum Ventilkörper und insbesondere relativ zur Ventilöffnung ab. Diese Ausgestaltung ist besonders bevorzugt, wenn die Feder eine Zylinderfeder ist.

An der Begrenzung des Innenraums der Anschlusseinrichtung ist die Feder vorzugsweise radial außerhalb der Ventilöffnung gehalten. Das ist insofern günstig, als dass weder die Feder selbst, noch eine Halterung für die Feder die Ventilöffnung verdecken. Diese Ausgestaltung ist besonders bevorzugt, wenn die Feder eine Zylinderfeder ist.

Die Feder ist vorzugsweise so ausgestaltet und angeordnet, dass die Feder als eine Druckfeder wirkt. Diese Ausgestaltung ist besonders bevorzugt, wenn die Feder eine Zylinderfeder ist. Die Feder ist also gegenüber ihrem kraftlosen Grundzustand zusammengedrückt. Das gilt sowohl, wenn sich der Ventilstempel in seiner ersten Endposition befindet als auch wenn sich der Ventilstempel sich in seiner zweiten Endposition befindet. Die beiden Enden der Feder werden also durch die Federkraft auseinander gedrückt. Befindet sich der Ventilstempel in ersten Endposition, ist die Feder stärker zusammengedrückt als bei der ersten Endposition. Insoweit ist der Ventilstempel in seine zweite Endposition vorgespannt.

Der Ventilstempel ist vorzugsweise zumindest teilweise innerhalb der Feder angeordnet. Dies ist insbesondere in Kombination damit günstig, dass die Feder an der Begrenzung des Innenraums der Anschlusseinrichtung radial außerhalb der Ventilöffnung gehalten ist. Dazu ist zu beachten, dass einerseits wünschenswert ist, dass die Feder sicher gehalten ist. Das erhöht die Zuverlässigkeit der Vorrichtung und reduziert Kosten für Wartung und Reparatur. Ein sicherer Halt der Feder erfordert eine entsprechend dimensionierte Befestigungsmöglichkeit. Andererseits ist es wünschenswert, dass das Fluid möglichst ungestört durch das Ventil strömen kann. Dadurch kann das Fluid schnell in den Anschluss geleitet werden. Insbesondere die Befestigungsmöglichkeiten für die Feder können die Strömung des Fluids beeinträchtigen. Insoweit können das Bedürfnis nach sicherem Halt der Feder und nach störungsfreiem Strömen des Fluids einander im Allgemeinen entgegenstehen. Mit der beschriebenen Vorrichtung wird in dieser Hinsicht eine Lösung geboten, die beide Bedürfnisse besonders gut miteinander vereinbart. So kann das Fluid an einer ersten Seite der Feder radial innerhalb der Feder durch die Ventilöffnung strömen. Am ersten Ende der Feder ist der Bereich radial außerhalb der Feder für das Fluid durch die Begrenzung des Innenraums der Anschlusseinrichtung blockiert. Dieser Bereich kann dadurch derart stabil ausgebildet sein, dass die Feder sicher gehalten wird. An einer zweiten Seite der Feder kann das Fluid radial außerhalb der Feder an dem Ventilstempel vorbei strömen. Am zweiten Ende der Feder kann der Bereich radial innerhalb der Feder für das Fluid durch den Ventilstempel blockiert sein. Der Ventilstempel kann dadurch derart stabil ausgebildet sein, dass die Feder sicher gehalten wird. Auf beiden Seiten kann die Feder also stabil gehalten sein. Der gesamte Bereich radial außerhalb bzw. radial innerhalb der Feder kann für die jeweilige Befestigungsmöglichkeit genutzt werden.

Für das Fluid ergibt sich dennoch ein vergleichsweise störungsfreier Strömungspfad durch das Ventil. An der ersten Seite kann das Fluid radial innerhalb der Feder durch die Ventilöffnung strömen. Dafür steht der gesamte Bereich radial innerhalb der Feder zur Verfügung. Eine Beeinträchtigung durch eine Befestigung der Feder gibt es hier nicht. An der zweiten Seite der Feder kann das Fluid radial außerhalb der Feder an dem Ventilstempel vorbei strömen. Dafür steht der gesamte Bereich radial außerhalb der Feder zur Verfügung. Eine Beeinträchtigung durch eine Befestigung der Feder gibt es hier ebenfalls nicht.

Auf dem Weg aus dem Innenraum der Anschlusseinrichtung durch die Ventilöffnung kann das Fluid die Feder zwischen deren zweitem Ende und deren erstem Ende durchströmen. So kann das Fluid zuerst radial außerhalb der Feder und anschließend radial innerhalb der Feder strömen. Ist die Feder eine Zylinderfeder, kann das Fluid den Mantel der Zylinderfeder durchströmen. Dadurch wird die Strömung des Fluids nur vergleichsweise wenig beeinträchtigt, weil der Mantel durch die Windungen der Zylinderfeder gebildet und insoweit nicht vollflächig geschlossen ist. Die Windungen sind voneinander beabstandet, damit die Feder ihre Federwirkung erzeugen kann. Ist die Feder keine Zylinderfeder, kann das Fluid dennoch durch die Feder hindurchtreten.

Die Begrenzung des Innenraums der Anschlusseinrichtung ist vorzugsweise rotationssymmetrisch um eine Hauptachse der Anschlusseinrichtung ausgebildet. Die Hauptachse fällt vorzugsweise mit der Ventilachse zusammen. Eine Achse der Feder fällt vorzugsweise mit der Ventilachse zusammen.

Das Ventil weist einen Ventilstempel, eine Ventilöffnung und eine Feder auf. Das ist so zu verstehen, dass das Ventil einen oder mehr Ventilstempel, eine oder mehr Ventilöffnungen und eine oder mehr Feder haben kann. Es genügt, dass das Ventil genau einen Ventilstempel, genau eine Ventilöffnung und genau eine Feder hat. Denkbar ist aber auch, dass das Ventil insoweit redundant ausgestaltet ist, dass beispielsweise zwei Ventilstempel vorgesehen sind, welche eine jeweilige Ventilöffnung verschließen können und durch eine jeweilige Feder vorgespannt sind. Das Fluid kann in dem Fall durch eine erste der Ventilöffnungen und anschließend durch eine zweite der Ventilöffnungen strömen, um aus dem Innenraum der Anschlusseinrichtung zum Anschluss zu gelangen.

In einer weiteren bevorzugten Ausführungsform der Vorrichtung weist das Ventil einen Ventilkörper auf, durch welche der Stutzen an seinem zweiten Ende begrenzt ist, wobei der Ventilstempel teilweise innerhalb des Ventilkörpers angeordnet ist und zumindest in seiner ersten Endposition in den Stutzen hineinragt.

Der Stutzen ist an seinem ersten Ende offen und an seinem zweiten Ende durch den Ventilkörper begrenzt. Der Anschluss kann teilweise innerhalb des Stutzens aufgenommen werden. Insoweit kann der Ventilstempel in der vorliegenden Ausführungsform ein Ventil des Anschlusses betätigen, indem der Ventilstempel des Ventils der Anschlusseinrichtung jedenfalls in seiner ersten Endposition - in welcher das Ventil der Anschlusseinrichtung geöffnet ist - in den Stutzen hineinragt. In seiner zweiten Endposition befindet sich der Ventilschaft vorzugsweise am zweiten Endes des Stutzens. Auch in seiner zweiten Endposition kann der Ventilstempel in den Stutzen hineinragen, insbesondere insoweit, als dass beispielsweise ein Ventilteller des Ventilstempels an dem Ventilkörper anliegt. Der Ventilstempel ragt in dem Fall aufgrund der Ausdehnung des Ventiltellers in den Stutzen hinein.

In einer weiteren bevorzugten Ausführungsform der Vorrichtung sind das Ventil und der Ventilantrieb auf einer Hauptachse der Anschlusseinrichtung voneinander beabstandet angeordnet, wobei die Hauptachse der Anschlusseinrichtung mit der Ventilachse des Ventils zusammenfällt.

In dieser Ausführungsform stehen sich Ventilantrieb und Ventil insoweit gegenüber, als dass die Kopplung zwischen Ventilantrieb und Ventil über eine gerade Linie erfolgen kann.

In einer weiteren bevorzugten Ausführungsform der Vorrichtung sind das Ventil und der Ventilantrieb über eine entlang der Hauptachse ausgebildete einteilige oder mehrteilige Stange mechanisch miteinander gekoppelt.

Der Ventilstempel ist vorzugsweise über die Stange starr mit dem Ventilantrieb gekoppelt. Eine Bewegung des Ventilantriebs bewirkt folglich eine Bewegung des Ventilstempels. Der Ventilantrieb kann beispielsweise einen Zylinder mit einem Kolben aufweisen, wobei der Kolben beispielsweise pneumatisch innerhalb des Zylinders beweglich ist. Dies ist eine robuste und einfache Ausgestaltung.

Fluide liegen oft bei tiefen Temperaturen vor. Um dem besonders gut standhalten zu können, ist die Stange vorzugsweise mehrteilig ausgebildet. In dem Fall weist die Stange vorzugsweise mehrere Stangenabschnitte auf. Ein erster der Stangenabschnitte ist näher an dem Ventil angeordnet als ein zweiter der Stangenabschnitte. Der erste Stangenabschnitt hat eine höhere thermische Leitfähigkeit als der zweite der Stangenabschnitte. Der zweite Stangenabschnitt kann zu einer thermischen Isolierung zwischen dem kalten Fluid und der Außenseite der Anschlusseinrichtung beitragen. Für den ersten Stangenabschnitt kann ein robusteres Material verwendet werden, welches den tiefen Temperaturen des Fluids besonders gut standhalten kann.

In einer bevorzugten Ausführungsform der Vorrichtung weist der Ventilstempel einen Ventilteller und einen daran angebundenen Ventilschaft auf, wobei der Ventilstempel in seiner zweiten Endposition die Ventilöffnung mit dem Ventilteller verschließt, und wobei der Ventilschaft entlang der Ventilachse ausgebildet ist.

Durch den Ventilschaft kann die Feder von der Ventilöffnung beabstandet an dem Ventilstempel angreifen. So ist genügend Platz für die Feder vorhanden. Der Ventilteller ist vorzugsweise größer als die Ventilöffnung. Somit kann der Ventilteller die Ventilöffnung verschließen, wenn sich der Ventilstempel in seiner zweiten Endposition befindet. In dem Fall ist vorzugsweise zwischen einem Rand der Ventilöffnung und dem Ventilteller eine Dichtung angeordnet. Die kann an dem Rand der Ventilöffnung oder dem Ventilteller gehalten sein. Auch kann eine erste Dichtung an dem Rand der Ventilöffnung und eine zweite Richtung an dem Ventilteller gehalten sein.

Der Ventilstempel ist vorzugsweise zumindest teilweise innerhalb der Feder angeordnet. In der vorliegenden Ausführungsform ist dazu bevorzugt dass der Ventilschaft innerhalb der Feder angeordnet ist. Das gilt besonders, wenn die Feder eine Zylinderfeder ist.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei das Ventil einen Ventilstempel und eine Ventilöffnung aufweist, wobei der Ventilstempel entlang einer Ventilachse zwischen einer ersten Endposition und einer zweiten Endposition beweglich ist, wobei der Ventilstempel in seiner zweiten Endposition die Ventilöffnung verschließt, und wobei die zweite Endposition des Ventilstempels näher an dem Innenraum der Anschlusseinrichtung angeordnet ist als die erste Endposition des Ventilstempels.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 9

Nachfolgend werden Ausführungsformen der Erfindung beschrieben. Die Ausführungsformen haben zwar die Struktur von Patentansprüchen, stellen aber keine Patentansprüche dar.
1. Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei das Ventil (206) einen Ventilstempel (216) und eine Ventilöffnung (219) aufweist, wobei der Ventilstempel (216) entlang einer Ventilachse (232) zwischen einer ersten Endposition (217) und einer zweiten Endposition (218) beweglich ist, wobei der Ventilstempel (216) in seiner zweiten Endposition (218) die Ventilöffnung (219) verschließt, und wobei die zweite Endposition (218) des Ventilstempels (216) näher an dem Innenraum (205) der Anschlusseinrichtung (202) angeordnet ist als die erste Endposition (217) des Ventilstempels (216).
2. Vorrichtung (2) nach Ausführungsform 1, wobei die Anschlusseinrichtung (202) weiterhin eine Feder (233) aufweist, über welche der Ventilstempel (216) in seine zweite Endposition (218) vorgespannt ist.
3. Vorrichtung (2) nach einer der vorstehenden Ausführungsformen, wobei das Ventil (206) einen Ventilkörper (259) aufweist, durch welche der Stutzen (208) an seinem zweiten Ende (210) begrenzt ist, wobei der Ventilstempel (216) teilweise innerhalb des Ventilkörpers (259) angeordnet ist und zumindest in seiner ersten Endposition (218) in den Stutzen (208) hineinragt.
4. Vorrichtung (2) nach einer der vorstehenden Ausführungsformen, wobei der Ventilstempel (216) einen Ventilteller (234) und einen daran angebundenen Ventilschaft (235) aufweist, wobei der Ventilstempel (216) in seiner zweiten Endposition (218) die Ventilöffnung (219) mit dem Ventilteller (234) verschließt, und wobei der Ventilschaft (235) entlang der Ventilachse (232) ausgebildet ist.
5. Vorrichtung (2) nach einer der vorstehenden Ausführungsformen, wobei das Ventil (206) und der Ventilantrieb (207) auf einer Hauptachse (211) der Anschlusseinrichtung (202) voneinander beabstandet angeordnet sind, und wobei die Ventilachse (232) mit der Hauptachse (211) der Anschlusseinrichtung (202) zusammenfällt.
6. Vorrichtung (2) nach einer der vorstehenden Ausführungsformen, wobei das Ventil (206) und der Ventilantrieb (207) über eine entlang einer Hauptachse (211) der Anschlusseinrichtung (202) ausgebildete einteilige oder mehrteilige Stange (213) mechanisch miteinander gekoppelt sind.
7. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
8. Verfahren zum Betanken eines Fahrzeugs (4) mit einem Fluid mit einer Vorrichtung (2) nach einer der Ausführungsformen 1 bis 6, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
9. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei das Ventil (206) einen Ventilstempel (216) und eine Ventilöffnung (219) aufweist, wobei der Ventilstempel (216) entlang einer Ventilachse (232) zwischen einer ersten Endposition (217) und einer zweiten Endposition (218) beweglich ist, wobei der Ventilstempel (216) in seiner zweiten Endposition (218) die Ventilöffnung (219) verschließt, und wobei die zweite Endposition (218) des Ventilstempels (216) näher an dem Innenraum (205) der Anschlusseinrichtung (202) angeordnet ist als die erste Endposition (217) des Ventilstempels (216).

### Abschnitt 10 (10 2022 104 642.7)

Die zu lösenden Aufgaben werden gelöst mit der Vorrichtung, der Anordnung, dem Verfahren und der Anschlusseinrichtung gemäß den in diesem Abschnitt beschriebenen unabhängigen Ausführungsformen. Weitere vorteilhafte Ausgestaltungen sind in den abhängigen Ausführungsformen angegeben. Die in den Ausführungsformen und in der Beschreibung dargestellten Merkmale sind in beliebiger, technologisch sinnvoller Weise miteinander kombinierbar.

Erfindungsgemäß wird eine Vorrichtung zum Einleiten eines Fluids in einen Anschluss vorgestellt. Die Vorrichtung umfasst:
- eine Fluidquelle,
- eine Abgabeleitung, und
- eine zumindest teilweise vakuumisolierte Anschlusseinrichtung mit einem Stutzen zum Anschließen der Abgabeleitung an den Anschluss,
wobei die Abgabeleitung mit einem ersten Ende an der Fluidquelle und mit einem zweiten Ende an einen Innenraum der Anschlusseinrichtung angebunden ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei der Innenraum der Anschlusseinrichtung in einem Gehäuse der Anschlusseinrichtung angeordnet ist, und wobei das Gehäuse ein Ausgleichselement zum Reduzieren thermischer Spannungen aufweist.

Die beschriebene Vorrichtung ist dazu geeignet, ein Fluid in einen Anschluss einzuleiten. Die Vorrichtung kann beispielsweise genutzt werden, um ein Fahrzeug mit einem Fluid zu betanken. In dem Fall weist das Fahrzeug den Anschluss auf, welcher mit einem Fluidtank des Fahrzeugs verbunden ist. Die Vorrichtung kann in dem Fall als Teil einer Tankstelle aufgefasst werden. Die beschriebene Vorrichtung ist allerdings nicht auf diese Anwendung beschränkt. Vielmehr kann die beschriebene Vorrichtung in allen Anwendungen eingesetzt werden, bei denen eine Leitung mit einem Anschluss so verbunden werden soll, dass ein Fluid aus der Leitung in den Anschluss eingeleitet wird. Soweit hierin auf das Betanken eines Fahrzeugs Bezug genommen wird, ist dies daher lediglich beispielhaft zu verstehen.

Das Fluid kann flüssig und/oder gasförmig sein. Das Fluid kann eine flüssige und eine gasförmige Phase haben. Denkbar ist auch, dass das Fluid in einem überkritischen Zustand vorliegt, in welchem nicht zwischen flüssig und gasförmig unterschieden werden kann. Vorzugsweise ist das Fluid ein Flüssiggas. Unter einem Flüssiggas ist eine Substanz zu verstehen, die in ihrem flüssigen Zustand vorliegt, obwohl sie bei Normbedingungen gasförmig wäre. Ein Flüssiggas liegt folglich bei entsprechenden Bedingungen vor, die von den Normbedingungen abweichen, insbesondere bei einer entsprechend tiefen Temperatur und/oder bei einem entsprechend hohen Druck vor. Ist die Vorrichtung zum Einleiten eines Flüssiggases in einen Anschluss ausgebildet, ergeben sich daher entsprechende Anforderungen an die Vorrichtung und ihre Elemente, insbesondere hinsichtlich der verwendeten Materialien sowie hinsichtlich Isolation und Dichtigkeit.

Die beschriebene Vorrichtung kann mit jedem Fluid verwendet werden. Besonders geeignet ist die beschriebene Vorrichtung für ein Fluid, welches als Brennstoff verwendbar ist, insbesondere als Brenngas für ein Fahrzeug. Als Fluid kommen beispielsweise flüssiges Erdgas (LNG - Liquified Natural Gas) oder Autogas (LPG - Liquified Petroleum Gas) in Betracht.

Das Fluid ist vorzugsweise Wasserstoff. Der Wasserstoff kann flüssig und/oder gasförmig sein. Auch kann der Wasserstoff überkritisch sein. Zum Betanken von Fahrzeugen wird verflüssigter Wasserstoff üblicherweise bei einer Temperatur von weniger als -253°C und einem Druck von weniger als 16,5 bar verwendet. Die beschriebene Vorrichtung ist daher vorzugsweise für eine solche Temperatur und einen solchen Druck geeignet.

Der Anschluss kann beispielsweise mit einem Tank verbunden sein. Darunter fällt auch eine Ausgestaltung, bei welcher der Anschluss in einer Berandung des Tanks integriert ist und insoweit auch als Teil des Tanks aufgefasst werden könnte. Der Anschluss kann im einfachsten Fall eine Öffnung in einer Berandung eines Tanks sein. Bevorzugt ist jedoch, dass der Anschluss ein Ventil umfasst, welches den Tank verschließt, wenn dieser nicht über den Anschluss mit Fluid befüllt wird. Zudem kann der Anschluss über eine Leitung mit dem Tank verbunden sein. Der Anschluss kann allerdings auch an eine Leitung angebunden sein, welche das Fluid unmittelbar einem Verbraucher zuführt. Das ist insbesondere in Industrieanlagen denkbar.

Die Vorrichtung weist eine Fluidquelle auf. Dabei handelt es sich vorzugsweise um einen Fluid-Vorratstank, beispielsweise einen Wasserstoff-Vorratstank einer Tankstelle. Die Fluidquelle kann aber auch beispielsweise eine Pipeline sein, mit welcher das Fluid kontinuierlich gespeist werden kann. Allgemein genügt es, dass das Fluid an der Fluidquelle so bereitgestellt wird, dass es aus dieser entnommen werden kann.

Weiterhin weist die Vorrichtung eine Abgabeleitung auf. Über die Abgabeleitung kann die Fluidquelle mit dem Anschluss verbunden werden. Ist die Vorrichtung zum Betanken eines Fahrzeugs mit Fluid eingerichtet, insbesondere als Teil einer Tankstelle, kann die Abgabeleitung auch als eine Betankungsleitung bezeichnet werden.

Weiterhin weist die Vorrichtung eine Anschlusseinrichtung mit einem Stutzen zum Anschließen der Abgabeleitung an den Anschluss auf. Ist die Vorrichtung zum Betanken eines Fahrzeugs mit Fluid eingerichtet, insbesondere als Teil einer Tankstelle, kann die Anschlusseinrichtung auch als eine Zapfpistole bezeichnet werden. Ein Benutzer kann die Anschlusseinrichtung in dem Fall an den Anschluss seines Fahrzeugs anschließen.

Die Anschlusseinrichtung weist einen Stutzen auf, mit welchem die Anschlusseinrichtung an den Anschluss angebunden werden kann. Unter einem Stutzen ist ein Rohrstück zu verstehen, welches dazu eingerichtet ist, mit dem Anschluss zusammenzuwirken. Wird das Fluid mit der beschriebenen Vorrichtung in den Anschluss eingeleitet, strömt das Fluid durch den Stutzen.

Die Anschlusseinrichtung ist zumindest teilweise vakuumisoliert. Insoweit kann die Anschlusseinrichtung mit einem kalten Fluid verwendet werden. Ein Benutzer kann durch die Vakuumisolation vor Verletzungen geschützt werden. Zudem können durch die Vakuumisolation ein Energieverlust durch Wärmeeintrag aus der Umgebung reduziert werden. Die Vakuumisolation kann mit weiteren Arten der Isolation kombiniert sein, um den Schutz und/oder die energetische Effizienz zu verbessern. Vakuumisoliert sind vorzugsweise die Bereiche der Anschlusseinrichtung, die mit dem Fluid in Kontakt gelangen. Die Vakuumisolation kann beispielsweise dadurch realisiert sein, dass die Anschlusseinrichtung einen Innenraum aufweist, der durch eine doppelwandige Begrenzung begrenzt ist.

Die Abgabeleitung ist mit einem ersten Ende an der Fluidquelle und mit einem zweiten Ende an einen Innenraum der Anschlusseinrichtung angebunden. Ist die Vorrichtung zum Betanken eines Fahrzeugs mit Fluid eingerichtet, insbesondere als Teil einer Tankstelle, kann die Abgabeleitung einen Abschnitt umfassen, welcher eine Zapfsäule mit der Anschlusseinrichtung verbindet. Weiterhin kann die Abgabeleitung einen Abschnitt umfassen, welcher innerhalb der Zapfsäule verläuft sowie einen Abschnitt, welcher die Zapfsäule mit einem Fluid-Vorratstank als Fluidquelle verbindet. An eine Fluidquelle können die jeweiligen Abgabeleitungen mehrerer wie beschrieben ausgebildeter Vorrichtungen angebunden sein. Das ist insbesondere bei einer Tankstelle mit mehreren Zapfsäulen der Fall.

Die Anschlusseinrichtung weist einen Innenraum auf. Wird das Fluid mit der beschriebenen Vorrichtung in den Anschluss eingeleitet, strömt es aus der Abgabeleitung in den Innenraum der Anschlusseinrichtung hinein, durch den Innenraum der Anschlusseinrichtung hindurch und durch den Stutzen hindurch sowie in den daran angebundenen Anschluss hinein. Der Innenraum der Anschlusseinrichtung kann insofern auch als eine Leitung aufgefasst werden.

Die Anschlusseinrichtung umfasst ein Ventil und einen mit dem Ventil gekoppelten Ventilantrieb. Das Ventil dient dazu, die Anschlusseinrichtung zu verschließen, sofern von dieser kein Fluid abgegeben wird. Das Ventil kann mit dem Ventilantrieb geöffnet und geschlossen werden.

Der Stutzen der Anschlusseinrichtung ist an einem ersten Ende offen und an einem zweiten Ende über das Ventil mit dem Innenraum der Anschlusseinrichtung verbunden. Ist das Ventil geschlossen, kann das Fluid nicht über den Stutzen aus dem Innenraum der Anschlusseinrichtung austreten, vorzugsweise auch nicht über eine andere Öffnung. Ist das Ventil geöffnet, kann das Fluid in den Anschluss eingeleitet werden. Dabei strömt das Fluid aus dem Innenraum der Anschlusseinrichtung durch das geöffnete Ventil in den Stutzen hinein.

Das Ventil weist vorzugsweise einen Ventilstempel und eine Ventilöffnung auf. Ist das Ventil geschlossen, verschließt der Ventilstempel vorzugsweise die Ventilöffnung. Ist das Ventil geöffnet, gibt der Ventilstempel die Ventilöffnung vorzugsweise frei. In dem Fall kann das Fluid durch das Ventil strömen, indem das Fluid durch die Ventilöffnung strömt. Die Ventilöffnung kann insoweit auch als eine Öffnung des Innenraums der Anschlusseinrichtung aufgefasst werden. Die Ventilöffnung ist vorzugsweise an einer ersten Seite des Ventils angeordnet. Der Innenraum der Anschlusseinrichtung ist vorzugsweise an einer zweiten Seite des Ventils an das Ventil angebunden.

Der Ventilstempel ist vorzugsweise entlang einer Ventilachse zwischen einer ersten Endposition und einer zweiten Endposition beweglich. Die Ventilachse ist insbesondere dadurch definiert, dass sich der Ventilstempel entlang der Ventilachse bewegen kann. Die Ventilachse fällt vorzugsweise mit einer Achse des Ventilstempels und/oder mit der Hauptachse der Anschlusseinrichtung zusammen. Die Ventilöffnung ist vorzugsweise senkrecht zur Ventilachse ausgebildet. Ein Mittelpunkt der Ventilöffnung liegt vorzugsweise auf der Ventilachse. Vorzugsweise ist der Ventilstempel nicht über die erste Endposition hinaus und/oder nicht über die zweite Endposition hinaus beweglich. Das kann durch einen oder mehrere entsprechende Anschläge erreicht werden. Der Ventilstempel verschließt vorzugsweise in seiner zweiten Endposition die Ventilöffnung. Insoweit ist das Ventil verschlossen, wenn sich der Ventilstempel in seiner zweiten Endposition befindet. Ist der Ventilstempel in seiner ersten Endposition, gibt der Ventilstempel die Ventilöffnung vorzugsweise frei. Insoweit ist das Ventil geöffnet, wenn sich der Ventilstempel in seiner ersten Endposition befindet. Das Ventil ist allerdings vorzugsweise nicht nur dann geöffnet, wenn sich der Ventilstempel in seiner ersten Endposition befindet. Befindet sich der Ventilstempel zwischen seiner ersten Endposition und seiner zweiten Endposition, ist das Ventil vorzugsweise teilweise geöffnet.

Das Ventil und der Ventilantrieb sind auf einer Hauptachse der Anschlusseinrichtung voneinander beabstandet angeordnet. Die Anschlusseinrichtung ist vorzugsweise zumindest teilweise rotationssymmetrisch um die Hauptachse ausgebildet. Beispielsweise kann die Anschlusseinrichtung eine Begrenzung eines Innenraums aufweisen, welche als eine um die Hauptachse umlaufende Wand ausgebildet ist. Der Anschluss kann vorzugsweise in einer Richtung parallel zur Hauptachse mit der Anschlusseinrichtung verbunden werden.

Der Innenraum der Anschlusseinrichtung ist in einem Gehäuse der Anschlusseinrichtung angeordnet. Das Gehäuse ist vorzugsweise durch eine um die Hauptachse der Anschlusseinrichtung umlaufende Wand gebildet, welche insbesondere doppelwandig ausgebildet sein kann. Eine solche umlaufende Wand ist Teil der Begrenzung des Innenraums. Axial kann die umlaufende Wand einen oder mehrere Abschnitte aufweisen.

Die Anschlusseinrichtung ist vorzugsweise insoweit zumindest teilweise vakuumisoliert, als dass das Gehäuse zumindest teilweise vakuumisoliert ist. Vorzugsweise ist das Gehäuse vollständig vakuumisoliert. Das Gehäuse kann insoweit zumindest teilweise vakuumisoliert sein, als dass das Gehäuse eine Doppelwand aufweist, wobei in einem Zwischenraum zwischen den beiden Teilen der Doppelwand ein Vakuum herrscht.

Das Gehäuse ist vorzugsweise aus einem Metall gebildet, beispielsweise aus einem Stahl wie Edelstahl. Damit kann das Gehäuse auch tiefen Fluid-Temperaturen standhalten. Allgemein unterliegt das Material des Gehäuses thermischer Längenänderung. Zu einer solchen kann es insbesondere dann kommen, wenn ein Fluid mit einer tiefen Temperatur verwendet wird, beispielsweise flüssiger Wasserstoff. Dabei können thermische Spannungen in dem Gehäuse entstehen. Um diese zu reduzieren, weist das Gehäuse ein Ausgleichselement zum Reduzieren thermischer Spannungen auf.

Das Ausgleichselement ist dazu eingerichtet, thermische Spannungen in dem Gehäuse zu reduzieren. Das kann dadurch erfolgen, dass das Ausgleichselement eine thermische Längenänderung aufnimmt. Das Ausgleichselement ist vorzugsweise dazu eingerichtet, eine thermische Längenänderung des Gehäuses entlang der Hauptachse zu kompensieren. Eine derartige Kompensation ist insbesondere in Bezug auf die Kopplung zwischen Ventilantrieb und Ventil sinnvoll. So kann das Ausgleichselement dazu beitragen, dass sich der Ventilantrieb und das Ventil auch bei einer Temperaturänderung nicht relativ zueinander verschieben. So kann das Ventil auch bei wechselnden Temperaturen vom Ventilantrieb zuverlässig geöffnet und geschlossen werden. Darüber hinaus kann die Kopplung zwischen Ventilantrieb und Ventil, die beispielsweise als eine Stange ausgebildet sein kann, dazu verwendet werden, ein Ventil des Anschlusses zu betätigen. Auch dies kann aufgrund des Ausgleichselements besonders zuverlässig erfolgen.

In einer bevorzugten Ausführungsform der Vorrichtung umfasst das Ausgleichselement einen Balg.

Unter einem Balg ist ein gewelltes Teil des Gehäuses zu verstehen. Der Balg kann auch als ein Wellenelement bezeichnet werden. Der Balg ist vorzugsweise aus einem Metall gebildet, insbesondere aus Stahl, beispielsweise aus Edelstahl. Durch die gewellte Ausgestaltung kann das Gehäuse in diesem Abschnitt thermische Längenänderungen besonders gut aufnehmen.

In einer weiteren bevorzugten Ausführungsform der Vorrichtung fällt eine Achse des Balgs mit der Hauptachse der Anschlusseinrichtung zusammen.

Der Balg kann insbesondere um die Hauptachse der Anschlusseinrichtung umlaufend ausgebildet sein. Vorzugsweise ist der Balg rotationssymmetrisch zur Hauptachse der Anschlusseinrichtung.

In einer weiteren bevorzugten Ausführungsform der Vorrichtung weist das Gehäuse einen ersten Gehäuseabschnitt und einen zweiten Gehäuseabschnitt auf, welche einander in einem Überlappungsbereich überlappen, und wobei der Balg in dem Überlappungsbereich am zweiten Gehäuseabschnitt ausgebildet ist.

Das Gehäuse weist in dieser Ausführungsform zwei Gehäuseabschnitte auf. Der erste Gehäuseabschnitt ist vorzugsweise näher an dem Stutzen angeordnet als der zweite Gehäuseabschnitt. Die beiden Gehäuseabschnitte überlappen einander in dem Überlappungsbereich. Der erste Gehäuseabschnitt erstreckt sich vorzugsweise über den Überlappungsbereich hinaus in Richtung auf den Stutzen. Der zweite Gehäuseabschnitt erstreckt sich vorzugsweise über den Überlappungsbereich hinaus in Richtung auf den Ventilantrieb. Im Überlappungsbereich ist der zweite Gehäuseabschnitt vorzugsweise radial außerhalb des ersten Gehäuseabschnitts angeordnet. Der erste Gehäuseabschnitt und der zweite Gehäuseabschnitt sind im Überlappungsbereich vorzugsweise koaxial zueinander ausgebildet.

Der erste Gehäuseabschnitt und der zweite Gehäuseabschnitt sind vorzugsweise in dem Überlappungsbereich zwischen dem Balg und einem dem Stutzen zugewandten ersten Ende des zweiten Gehäuseabschnitts miteinander verbunden, insbesondere über eine um die Hauptachse der Anschlusseinrichtung umlaufende Verbindung wie beispielsweise eine Schweißnaht. Die Verbindung ist vorzugsweise vollständig um die Hauptachse der Anschlusseinrichtung umlaufend ausgebildet. Die Verbindung ist vorzugsweise axial von dem Balg beabstandet. Die Verbindung ist vorzugsweise axial von dem ersten Ende des zweiten Gehäuseabschnitts beabstandet.

Kommt es zu einer thermischen Längenänderung des Gehäuses, können sich der erste Gehäuseabschnitt und der zweite Gehäuseabschnitt unter Verformung des Balgs relativ zueinander verschieben. Dadurch können thermische Spannungen reduziert werden. Durch die überlappende Anordnung der beiden Gehäuseabschnitte ist das Gehäuse dennoch stabil. Insbesondere kann der zweite Gehäuseabschnitt von dem ersten Gehäuseabschnitt geführt werden, wenn sich aufgrund einer thermischen Ausdehnung der erste Gehäuseabschnitt und der zweite Gehäuseabschnitt relativ zueinander unter Verformung des Balgs verschieben.

In einer weiteren bevorzugten Ausführungsform der Vorrichtung ist das Ausgleichselement zwischen dem Ventilantrieb und einer Mündung der Abgabeleitung in den Innenraum der Anschlusseinrichtung angeordnet.

Diese Anordnung ist deshalb günstig, weil das Ausgleichselement so vergleichsweise weit entfernt von kaltem Fluid gehalten ist. Das reduziert die Anforderungen an das Ausgleichselement. Zudem hat sich herausgestellt, dass es sinnvoll ist, andere Elemente zwischen der Mündung der Abgabeleitung in den Innenraum der Anschlusseinrichtung und dem Stutzen anzuordnen. Dazu zählen insbesondere Elemente, um die Anschlusseinrichtung sicher mit dem Anschluss zu verbinden. Ist das Ausgleichselement zwischen der Mündung der Abgabeleitung in den Innenraum der Anschlusseinrichtung und dem Ventilantrieb angeordnet, bleibt zwischen zwischen der Mündung der Abgabeleitung in den Innenraum der Anschlusseinrichtung und dem Stutzen mehr Platz für diese anderen Elemente.

In einer weiteren bevorzugten Ausführungsform der Vorrichtung ist der Innenraum der Anschlusseinrichtung durch eine um die Hauptachse der Anschlusseinrichtung umlaufende Begrenzung begrenzt, wobei ein Zwischenraum zwischen der Begrenzung und dem Gehäuse vakuumisoliert ist.

Die Vakuumisolation trägt zur Sicherheit bei.

Als ein weiterer Aspekt der Erfindung wird eine Anordnung vorgestellt, welche eine wie beschrieben ausgestaltete Vorrichtung sowie den Anschluss und einen daran angebundenen Fluidtank aufweist, wobei die Anschlusseinrichtung der Vorrichtung an den Anschluss angebunden ist.

Die beschriebenen Vorteile und Merkmale der Vorrichtung sind auf die Anordnung anwendbar und übertragbar, und umgekehrt.

Der Fluidtank ist vorzugsweise ein Fluidtank für ein Fahrzeug, insbesondere ein Wasserstofftank für ein Fahrzeug. Vorzugsweise umfasst die Anordnung auch ein Fahrzeug, in welchem der Fluidtank angeordnet ist. Das Fahrzeug kann insbesondere ein Kraftfahrzeug oder ein Lastkraftwagen sein. Es kann sich aber auch beispielsweise um ein Schiff handeln.

Als ein weiterer Aspekt der Erfindung wird ein Verfahren zum Betanken eines Fahrzeugs mit einem Fluid mit einer wie beschrieben ausgestalteten Vorrichtung vorgestellt, wobei das Fahrzeug den Anschluss und einen daran angebundenen Fluidtank aufweist, und wobei das Verfahren die folgenden Schritte umfasst, welche in der angegebenen Reihenfolge durchgeführt werden:
a) über die Anschlusseinrichtung Anschließen der Abgabeleitung an den Anschluss des Fahrzeugs sowie Öffnen des Ventils der Anschlusseinrichtung,
b) Befüllen des Fluidtanks des Fahrzeugs über die Abgabeleitung und die Anschlusseinrichtung mit Fluid aus der Fluidquelle,
c) Schließen des Ventils der Anschlusseinrichtung sowie Trennen der Abgabeleitung von dem Anschluss des Fahrzeugs.

Die beschriebenen Vorteile und Merkmale der Vorrichtung und der Anordnung sind auf das Verfahren anwendbar und übertragbar, und umgekehrt. Die Vorrichtung und die Anordnung sind vorzugsweise zum Betrieb gemäß dem Verfahren bestimmt und eingerichtet. Das Fluid ist vorzugsweise Wasserstoff.

Schritt a) beinhaltet die beiden Teilschritte des Anschließens der Abgabeleitung über die Anschlusseinrichtung an den Anschluss des Fahrzeugs sowie des Öffnens des Ventils der Anschlusseinrichtung. Die beiden Teilschritte können gleichzeitig oder nacheinander durchgeführt werden.

Schritt c) beinhaltet die beiden Teilschritte des Schließens des Ventils der Anschlusseinrichtung sowie des Trennens der Abgabeleitung von dem Anschluss des Fahrzeugs. Die beiden Teilschritte können gleichzeitig oder nacheinander durchgeführt werden.

Als ein weiterer Aspekt der Erfindung wird eine Anschlusseinrichtung mit einem Stutzen zum Anschließen einer Leitung an einen Anschluss vorgestellt, wobei ein Innenraum der Anschlusseinrichtung an die Leitung anbindbar ist, wobei die Anschlusseinrichtung ein Ventil und einen mit dem Ventil gekoppelten Ventilantrieb umfasst, wobei der Stutzen an einem ersten Ende offen ist und an einem zweiten Ende über das Ventil mit dem Innenraum der Anschlusseinrichtung verbunden ist,
wobei der Innenraum der Anschlusseinrichtung in einem Gehäuse der Anschlusseinrichtung angeordnet ist, und wobei das Gehäuse ein Ausgleichselement zum Reduzieren thermischer Spannungen aufweist.

Die beschriebenen Vorteile und Merkmale der Vorrichtung, der Anordnung und des Verfahrens sind auf die Anschlusseinrichtung anwendbar und übertragbar, und umgekehrt. Die Anschlusseinrichtung ist vorzugsweise wie die Anschlusseinrichtung der beschriebenen Vorrichtung ausgebildet.

Die Vorrichtung, die Anordnung und das Verfahren wurden insbesondere anhand des Beispiels beschrieben, dass ein Fahrzeug mit flüssigem Wasserstoff betankt wird. Die Erfindung ist aber weder auf die Verwendung von Wasserstoff oder Fluid allgemein, noch auf das Betanken eines Fahrzeugs oder das Befüllen eines Tanks allgemein eingeschränkt. Tatsächlich lässt sich die beschriebene Anschlusseinrichtung immer dann verwenden, wenn zwei Leitungen miteinander verbunden werden sollen. Beispielsweise kann eine Industrieanlage eine Pipeline aufweisen, in welcher eine flüssige oder gasförmige Substanz transportiert wird. Soll die Substanz aus dieser Pipeline einem Produktionsprozess zugeführt werden, kann die Substanz über die Leitung aus der Pipeline in einen Anschluss einer Produktionsmaschine eingeleitet werden, in welchem die Substanz für den Prozess verwendet wird. In diesem Fall ist weder stromauf noch stromab der Anschlusseinrichtung und des Anschlusses ein Tank erforderlich. Vielmehr kann die Substanz kontinuierlich bereitgestellt und nach Bedarf dem Prozess zugeleitet werden. Möglich ist auch die Verwendung von Zwischenstationen. Beispielsweise kann eine Substanz über die beschriebene Anschlusseinrichtung aus einem Vorrats-Tank in einen Zwischenspeicher und von dort auf andere Weise in einen Tank eines Fahrzeugs gefüllt werden.

Allgemein kann zwischen ortsfesten und ortsbeweglichen Tanks unterschieden werden. Ein Beispiel für einen ortsfesten Tank ist ein Vorrats-Tank einer Tankstelle. Ein Beispiel für einen ortsbeweglichen Tank ist ein Tank eines Fahrzeugs. Mit der beschriebenen Anschlusseinrichtung können ortsfeste und/oder ortsbewegliche Tanks in beliebiger Kombination miteinander verbunden werden.

Auch ist die Erfindung nicht auf eine bestimmte Strömungsrichtung eines Mediums durch die Anschlusseinrichtung und den Anschluss beschränkt. Sind die Anschlusseinrichtung und der Anschluss miteinander verbunden, kann die so gebildete Kupplung in beiden Richtungen durchströmt werden.

### Ausführungsformen Abschnitt 10

Nachfolgend werden Ausführungsformen der Erfindung beschrieben. Die Ausführungsformen haben zwar die Struktur von Patentansprüchen, stellen aber keine Patentansprüche dar.
1. Vorrichtung (2) zum Einleiten eines Fluids in einen Anschluss (100), umfassend
   - eine Fluidquelle (200),
   - eine Abgabeleitung (201), und
   - eine zumindest teilweise vakuumisolierte Anschlusseinrichtung (202) mit einem Stutzen (208) zum Anschließen der Abgabeleitung (201) an den Anschluss (100),
   wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei der Innenraum (205) der Anschlusseinrichtung (202) in einem Gehäuse (250) der Anschlusseinrichtung (202) angeordnet ist, und wobei das Gehäuse (250) ein Ausgleichselement (251) zum Reduzieren thermischer Spannungen aufweist.
2. Vorrichtung (2) nach Ausführungsform 1, wobei das Ausgleichselement (251) einen Balg (252) umfasst.
3. Vorrichtung (2) nach Ausführungsform 2, wobei eine Achse (253) des Balgs (252) mit der Hauptachse (211) der Anschlusseinrichtung (202) zusammenfällt.
4. Vorrichtung (2) nach einer der vorstehenden Ausführungsformen, wobei das Gehäuse (250) einen ersten Gehäuseabschnitt (254) und einen zweiten Gehäuseabschnitt (255) aufweist, welche einander in einem Überlappungsbereich (256) überlappen, und wobei der Balg (252) in dem Überlappungsbereich (256) am zweiten Gehäuseabschnitt (255) ausgebildet ist.
5. Vorrichtung (2) nach einer der vorstehenden Ausführungsformen, wobei das Ausgleichselement (251) zwischen dem Ventilantrieb (207) und einer Mündung (257) der Abgabeleitung (201) in den Innenraum (205) der Anschlusseinrichtung (202) angeordnet ist.
6. Vorrichtung (2) nach einer der vorstehenden Ausführungsformen, wobei der Innenraum (205) der Anschlusseinrichtung (202) durch eine um die Hauptachse (211) der Anschlusseinrichtung (202) umlaufende Begrenzung (221) begrenzt ist, und wobei ein Zwischenraum (258) zwischen der Begrenzung (221) und dem Gehäuse (250) vakuumisoliert ist.
7. Anordnung (3) umfassend eine Vorrichtung (2) nach einer der vorstehenden Ausführungsformen sowie den Anschluss (100) und einen daran angebundenen Fluidtank (1), wobei die Anschlusseinrichtung (202) der Vorrichtung (2) an den Anschluss (100) angebunden ist.
8. Verfahren zum Betanken eines Fahrzeugs (4) mit einem Fluid mit einer Vorrichtung (2) nach einer der Ausführungsformen 1 bis 6, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
   a) über die Anschlusseinrichtung (202) Anschließen der Abgabeleitung (201) an den Anschluss (100) des Fahrzeugs (4) sowie Öffnen des Ventils (206) der Anschlusseinrichtung (202),
   b) Befüllen des Fluidtanks (1) des Fahrzeugs (4) über die Abgabeleitung (201) und die Anschlusseinrichtung (202) mit Fluid aus der Fluidquelle (200),
   c) Schließen des Ventils (206) der Anschlusseinrichtung (202) sowie Trennen der Abgabeleitung (201) von dem Anschluss (100) des Fahrzeugs (4).
9. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
   wobei der Innenraum (205) der Anschlusseinrichtung (202) in einem Gehäuse (250) der Anschlusseinrichtung (202) angeordnet ist, und wobei das Gehäuse (250) ein Ausgleichselement (251) zum Reduzieren thermischer Spannungen der Anschlusseinrichtung (202) aufweist.

### Figurenbeschreibung zu allen Abschnitten

Die Erfindung wird nachfolgend anhand der Figuren näher erläutert. Die Figuren und die nachfolgende Figurenbeschreibung gelten für alle zehn vorstehenden Abschnitte gleichermaßen. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: eine schematische Darstellung einer erfindungsgemäßen Anordnung,
- Fig. 2:: eine perspektivische Darstellung der erfindungsgemäßen Anschlusseinrichtung aus Fig. 1,
- Fig. 3:: eine seitliche Schnittdarstellung der erfindungsgemäßen Anschlusseinrichtung aus den Fig. 1 und 2,
- Fig. 4:: eine seitliche Schnittdarstellung der erfindungsgemäßen Anschlusseinrichtung aus den Fig. 1 bis 3 mit dem Anschluss aus Fig. 1,
- Fig. 5:: eine seitliche Schnittdarstellung eines Teils der erfindungsgemäßen Anschlusseinrichtung aus den Fig. 1 bis 4,
- Fig. 6a und 6b:: ein frontale und eine seitliche Schnittdarstellung eines Teils der Anschlusseinrichtung aus den Fig. 1 bis 5,
- Fig. 7:: eine seitliche Schnittdarstellung eines Anschlusses, an welchen die erfindungsgemäße Anschlusseinrichtung aus den Fig. 1 bis 5 angeschlossen werden kann,
- Fig. 8a und 8b:: eine seitliche Schnittdarstellung eines Teils des Anschlusses aus Fig. 7 in zwei verschiedenen Stellungen,
- Fig. 9:: eine Frontalansicht eines Ventilstempels des Ventils des Anschlusses aus Fig. 7,
- Fig. 10:: ein Set umfassend den Anschluss aus Fig. 7 sowie ein Schraubwerkzeug,
- Fig. 11a und 11b:: eine Frontalansicht und eine seitliche Schnittdarstellung des Schraubwerkzeugs aus Fig. 10.

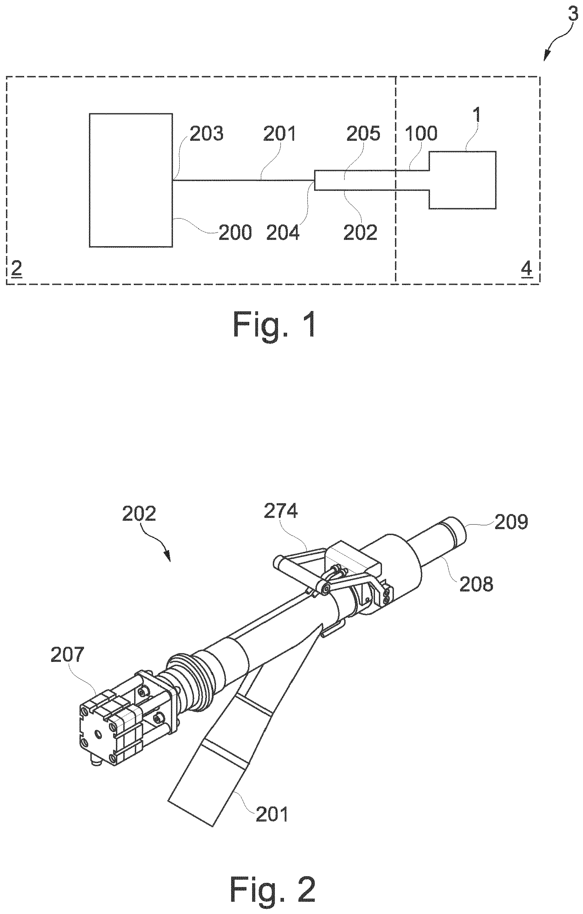

Fig. 1 zeigt eine Anordnung 3 mit einer Vorrichtung 2 zum Einleiten eines Fluids in einen Anschluss 100. Der Anschluss 100 ist mit einem Fluidtank 1 eines Fahrzeugs 4 verbunden, welches ebenfalls Teil der gezeigten Anordnung 3 ist. Die Vorrichtung 2 hat eine Fluidquelle 200, eine Abgabeleitung 201 und eine zumindest teilweise vakuumisolierte Anschlusseinrichtung 202 zum Anschließen der Abgabeleitung 201 an den Anschluss 100. Die Abgabeleitung 201 ist mit einem ersten Ende 203 an der Fluidquelle 200 und mit einem zweiten Ende 204 an einen Innenraum 205 der Anschlusseinrichtung 202 angebunden.

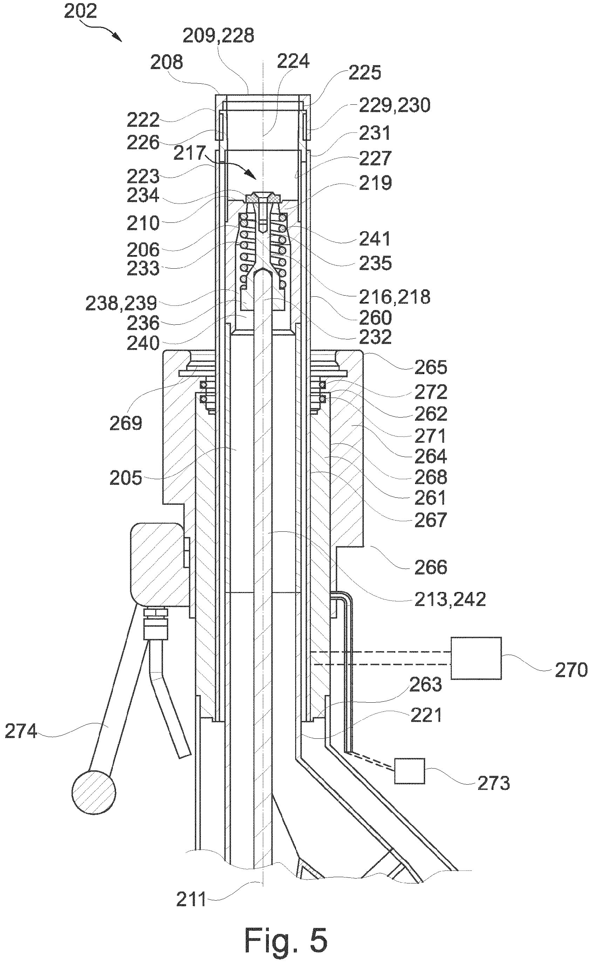

Die Vorrichtung 2 kann zum Betanken des Fahrzeugs 4 mit einem Fluid verwendet werden. Das Verfahren umfasst die folgenden Schritte, welche in der angegebenen Reihenfolge durchgeführt werden:
a) über die Anschlusseinrichtung 202 Anschließen der Abgabeleitung 201 an den Anschluss 100 des Fahrzeugs 4 sowie Öffnen eines (insbesondere in Fig. 5 gezeigten) Ventils 206 der Anschlusseinrichtung 202,
b) Befüllen des Fluidtanks 1 des Fahrzeugs 4 über die Abgabeleitung 201 und die Anschlusseinrichtung 202 mit Fluid aus der Fluidquelle 200,
c) Schließen des Ventils 206 der Anschlusseinrichtung 202 sowie Trennen der Abgabeleitung 201 von dem Anschluss 100 des Fahrzeugs 4.

Fig. 2 zeigt die Anschlusseinrichtung 202 der Vorrichtung 2 aus Fig. 1 in einer perspektivischen Darstellung. Gezeigt ist ebenfalls ein Teil der Abgabeleitung 201. Zu erkennen ist, dass die Anschlusseinrichtung 202 einen Stutzen 208 aufweist, welcher mit dem Anschluss 100 verbunden werden kann. Dazu ist der Stutzen 208 an einem ersten Ende 209 offen. Weiterhin ist ein Ventilantrieb 207 zu erkennen, mit welchem das Ventil 206 betätigt werden kann. Zudem ist ein Verrastelement 274 gezeigt, mit welchem die Anschlusseinrichtung 202 an dem Anschluss 100 verrastet werden kann.

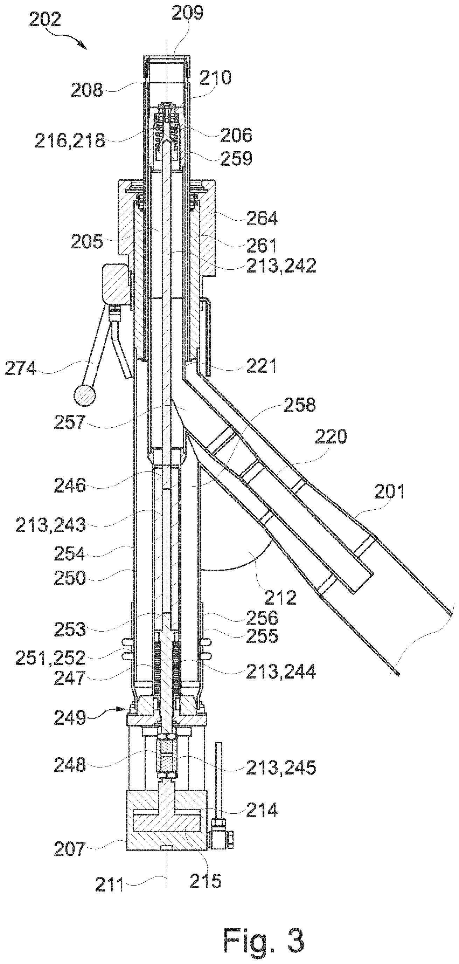

Fig. 3 zeigt die Anschlusseinrichtung 202 aus den Fig. 1 und 2 in einer seitlichen Schnittdarstellung. Auch hier ist ein Teil der Abgabeleitung 201 zu erkennen. Die Anschlusseinrichtung 202 umfasst das Ventil 206 und den mit dem Ventil 206 gekoppelten pneumatischen Ventilantrieb 207. Weiterhin ist der Stutzen 208 der Anschlusseinrichtung 202 gezeigt. Der Stutzen 208 ist an einem ersten Ende 209 offen und an einem zweiten Ende 210 über das Ventil 206 mit dem Innenraum 205 der Anschlusseinrichtung 202 verbunden. Weiterhin weist die Anschlusseinrichtung 202 eine erste Hülse 261 und eine zweite Hülse 264 auf, welche in Bezug auf Fig. 5 näher beschrieben werden. Das Verrastelement 274 ist ebenfalls in Fig. 3 eingezeichnet.

Das Ventil 206 und der Ventilantrieb 207 sind auf einer Hauptachse 211 der Anschlusseinrichtung 202 voneinander beabstandet angeordnet. Die Abgabeleitung 201 und die Hauptachse 211 der Anschlusseinrichtung 202 schließen derart einen Winkel 212 im Bereich von 30 bis 60° ein, dass sich ein Abstand zwischen der Abgabeleitung 201 und der Hauptachse 211 der Anschlusseinrichtung 202 bei Betrachtung in einer von dem Ventilantrieb 207 zum Ventil 206 weisenden Richtung verringert. Die Abgabeleitung 201 weist an ihrem zweiten Ende 204 ein Rohr 220 auf, welches mit einer Begrenzung 221 des Innenraums 205 der Anschlusseinrichtung 202 einstückig ausgebildet ist. Ein Zwischenraum 258 zwischen der Begrenzung 221 und einem Gehäuse 250 der Anschlusseinrichtung 202 ist vakuumisoliert.

Der Ventilantrieb 207 weist einen Zylinder 214 und einen darin angeordneten Kolben 215 auf. Der Kolben 215 ist pneumatisch entlang der Hauptachse 211 der Anschlusseinrichtung 202 beweglich.

Der Innenraum 205 der Anschlusseinrichtung 202 ist in einem Gehäuse 250 der Anschlusseinrichtung 202 angeordnet, wobei das Gehäuse 250 ein Ausgleichselement 251 zum Reduzieren thermischer Spannungen aufweist. Das Ausgleichselement 251 umfasst einen Balg 252. Eine Achse 253 des Balgs 252 fällt mit der Hauptachse 211 der Anschlusseinrichtung 202 zusammen. Das Ausgleichselement 251 ist zwischen dem Ventilantrieb 207 und einer Mündung 257 der Abgabeleitung 201 in den Innenraum 205 der Anschlusseinrichtung 202 angeordnet.

Das Gehäuse 250 weist einen ersten Gehäuseabschnitt 254 und einen zweiten Gehäuseabschnitt 255 auf, welche einander in einem Überlappungsbereich 256 überlappen. Der Balg 252 ist in dem Überlappungsbereich 256 an dem zweiten Gehäuseabschnitt 255 ausgebildet.

Das Ventil 206 weist einen Ventilkörper 259, einen Ventilstempel 216 und eine Ventilöffnung 219 auf. Der Ventilstempel 216 ist entlang einer mit der Hauptachse 211 der Anschlusseinrichtung 202 zusammenfallenden Ventilachse 232 zwischen einer (hier nicht gezeigten) ersten Endposition 217 und einer (hier gezeigten) zweiten Endposition 218 beweglich.

Das Ventil 206 und der Ventilantrieb 207 sind über eine entlang der Hauptachse 211 ausgebildete mehrteilige Stange 213 mechanisch miteinander gekoppelt. Die Stange 213 weist mehrere Stangenabschnitte 242,243,244,245 auf. Ein erster der Stangenabschnitte 242 ist näher an dem Ventil 206 angeordnet als ein zweiter der Stangenabschnitte 243. Der erste Stangenabschnitt 242 ist unmittelbar an das Ventil 206 angebunden und steht unmittelbar mit dem Ventilstempel 216 in Kontakt. Der erste Stangenabschnitt 242 hat eine höhere thermische Leitfähigkeit als der zweite Stangenabschnitt 243. Der zweite Stangenabschnitt 243 ist hohl. Der erste Stangenabschnitt 242 und der zweite Stangenabschnitt 243 sind mittels einer Steckverbindung 246 miteinander verbunden.

Die Stange 213 weist zwischen dem Ventilantrieb 207 und dem zweiten Stangenabschnitt 243 weiterhin einen dritten Stangenabschnitt 244 auf, welcher einen Balg 247 zur Abdichtung aufweist.

Die Stange 213 weist zwischen dem Ventilantrieb 207 und dem zweiten Stangenabschnitt 243 weiterhin einen vierten Stangenabschnitt 245 auf, welcher ein Justierelement 248 zum Justieren einer Länge der Stange 213 aufweist.

Der Ventilantrieb 207 ist durch eine Schraubverbindung 249 an dem Gehäuse 250 der Anschlusseinrichtung 202 gehalten. Die Stange 213 und das Ventil 206 sind aus dem Gehäuse 250 entnehmbar, wenn die Schraubverbindung 249 gelöst ist.

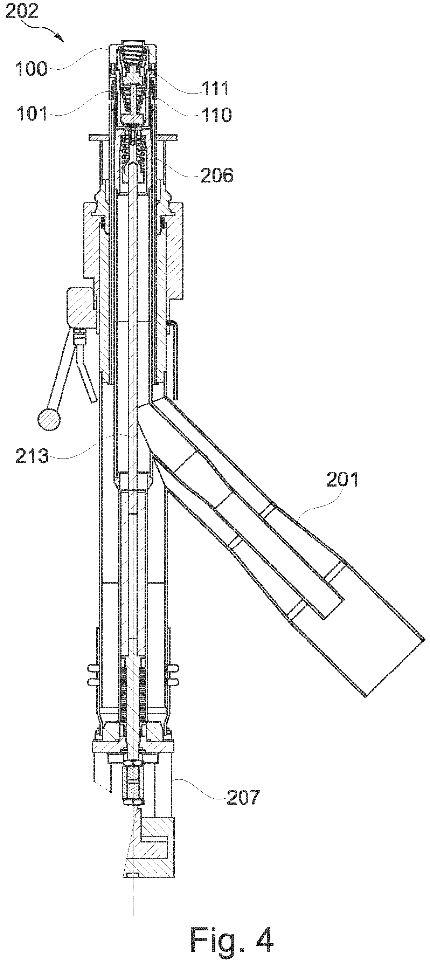

Fig. 4 zeigt eine seitliche Schnittdarstellung der Anschlusseinrichtung 202 aus den Fig. 1 bis 3 mit dem Anschluss 100 aus Fig. 1. Eingezeichnet sind insbesondere die Abgabeleitung 201, das Ventil 206, der Ventilantrieb 207 und die Stange 213 zwischen dem Ventil 206 und dem Ventilantrieb 207. Aufseiten des Fluidtanks 1 ist zudem ein Ventil 101 eingezeichnet, welches einen ersten Ventilstempel 110 und einen zweiten Ventilstempel 111 aufweist.

Fig. 5 zeigt die Anschlusseinrichtung 202 der Vorrichtung 2 aus Fig. 1 bis 4 in einer detaillierteren perspektivischen Darstellung. Zu erkennen ist insbesondere das Ventil 206. Das Ventil 206 weist den Ventilstempel 216 und die Ventilöffnung 219 auf. Der Ventilstempel 216 verschließt in seiner zweiten Endposition 218 die Ventilöffnung 219. Das Ventil 206 weist weiterhin eine Zylinderfeder 233 auf, welche derart einerseits an dem Ventilstempel 216 und andererseits radial außerhalb der Ventilöffnung 219 an einer Begrenzung 221 des Innenraums 205 der Anschlusseinrichtung 202 gehalten ist, dass die Zylinderfeder 233 den Ventilstempel 216 in dessen zweite Endposition 218 vorspannt.

Der Ventilstempel 216 weist einen Ventilteller 234 und einen daran angebundenen Ventilschaft 235 auf. Der Ventilstempel 216 verschließt in seiner (hier gezeigten) zweiten Endposition 218 die Ventilöffnung 219 mit dem Ventilteller 234. Ein Strömungspfad 240 vom Innenraum 205 der Anschlusseinrichtung 202 durch die Ventilöffnung 219 ist freigegeben, wenn sich der Ventilstempel 216 außerhalb seiner zweiten Endposition 218 befindet. Der Strömungspfad 240 verläuft durch einen Mantel 241 der Zylinderfeder 233. Der Ventilschaft 235 ist innerhalb der Zylinderfeder 233 angeordnet.

Der Ventilstempel 216 weist einen um die Ventilachse 232 umlaufenden Flansch 236 auf, über welchen die Zylinderfeder 233 an dem Ventilstempel 216 gehalten ist. Der Flansch 236 des Ventilstempels 216 weist radial außen liegend mehrere Ausnehmungen 238 auf, mit welchen zwischen dem Flansch 236 und der Begrenzung 221 des Innenraums 205 der Anschlusseinrichtung 202 jeweils ein Durchgang 239 gebildet ist.

Die gezeigte zweite Endposition 218 des Ventilstempels 216 ist näher an dem Innenraum 205 der Anschlusseinrichtung 202 angeordnet als die erste Endposition 217 des Ventilstempels 216. Der Ventilstempel 216 ist teilweise innerhalb des Ventilkörpers 259 angeordnet und ragt zumindest in seiner ersten Endposition 217 in den Stutzen 208 hinein.

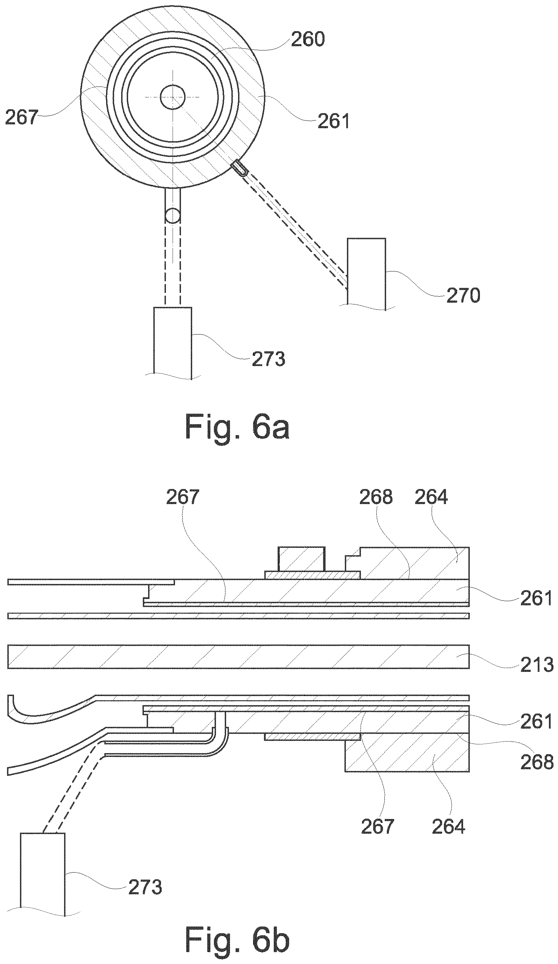

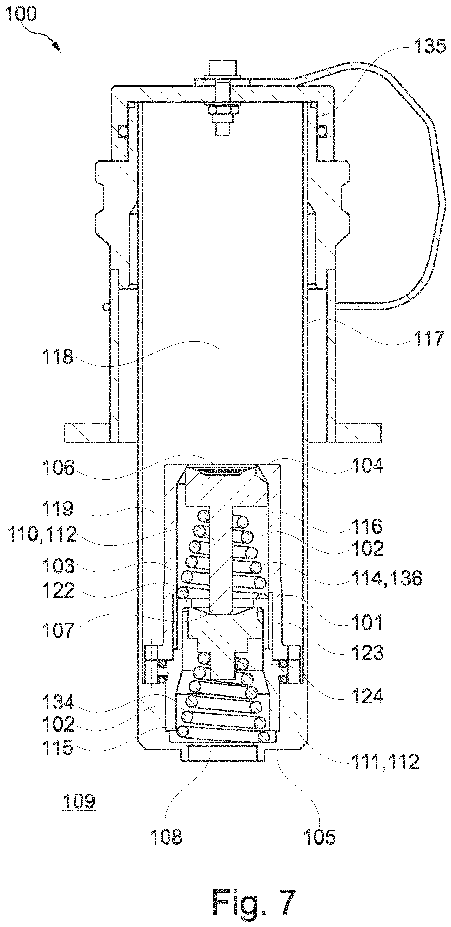

Die Anschlusseinrichtung 202 weist eine um eine Hauptachse 211 der Anschlusseinrichtung 202 umlaufende Außenwand 260 auf. Weiterhin weist die Anschlusseinrichtung 202 eine erste Hülse 261 und eine zweite Hülse 264 auf, welche jeweils um die Außenwand 260 umlaufend ausgebildet sind und welche jeweils an einer jeweiligen dem Stutzen 208 zugewandten ersten Seite 262,265 mit der Außenwand 260 eine um die Hauptachse 211 umlaufende Aufnahme 269 für ein (in Fig. 7 gezeigtes) Anschlussende 135 des Anschlusses 100 begrenzen. Die zweite Hülse 264 ist zur Fixierung des Anschlusses 100 an der Anschlusseinrichtung 202 eingerichtet. Die zweite Hülse 264 ist zumindest teilweise radial außerhalb der ersten Hülse 211 angeordnet. Die Hülsen 261,264 sind detaillierter in den Fig. 6a und 6b gezeigt.

Zwischen der Außenwand 260 und der ersten Hülse 261 ist ein erster Ringspalt 267 ausgebildet, welcher mit der Aufnahme 269 für das Anschlussende 135 des Anschlusses 100 und mit einer Spüleinrichtung 270 der Vorrichtung 2 verbunden ist. Die erste Hülse 261 ist derart lokal mit der Außenwand 260 verbunden, dass der erste Ringspalt 267 zu einer zweiten Seite 263 der ersten Hülse 261 hin verschlossen ist.

Zwischen der ersten Hülse 261 und der zweiten Hülse 264 ist ein zweiter Ringspalt 268 ausgebildet, welcher mit der Aufnahme 269 für das Anschlussende 135 des Anschlusses 100 und mit einer Messeinrichtung 273 zur Detektion des Fluids verbunden ist. Die zweite Hülse 264 ist derart lokal mit der ersten Hülse 261 verbunden, dass der zweite Ringspalt 267 zu einer zweiten Seite 266 der zweiten Hülse 264 hin verschlossen ist.

Die Anschlusseinrichtung 202 weist weiterhin eine erste Dichtung 271 auf, welche um die Hauptachse 211 der Anschlusseinrichtung 202 umlaufend ausgebildet ist und welche zwischen der Aufnahme 269 und der ersten Hülse 261 angeordnet ist.

Die Anschlusseinrichtung 202 weist weiterhin eine zweite Dichtung 272 auf, welche um die Hauptachse 211 der Anschlusseinrichtung 202 umlaufend ausgebildet ist und welche zwischen der Aufnahme 269 für das Anschlussende 135 des Anschlusses 100 und der zweiten Hülse 264 angeordnet ist.

Der Stutzen 208 ist an seinem zweiten Ende 210 durch den Ventilkörper 259 des Ventils 206 begrenzt. Der Stutzen 208 weist einen ersten Stutzenabschnitt 222, einen zweiten Stutzenabschnitt 223 und eine um eine Achse 224 des Stutzens 208 umlaufende Dichtung 225 auf. Das erste Ende 209 des Stutzens 208 ist an dem ersten Stutzenabschnitt 222 ausgebildet und ein zweite Ende 210 des Stutzens 208 ist an dem zweiten Stutzenabschnitt 223 ausgebildet. Der erste Stutzenabschnitt 222 ist als eine ringförmige Kappe 228 ausgebildet. Der erste Stutzenabschnitt 222 und der zweite Stutzenabschnitt 223 sind derart durch eine Schraubverbindung 226 miteinander verbunden, dass die Dichtung 225 von dem ersten Stutzenabschnitt 222 und dem zweiten Stutzenabschnitt 223 gehalten ist. Die Schraubverbindung 226 ist koaxial zur Achse 224 des Stutzens 208 ausgebildet. Der erste Stutzenabschnitt 222 und der zweite Stutzenabschnitt 223 überlappen zumindest dort, wo die Schraubverbindung 226 ausgebildet ist. Die Schraubverbindung 226 ist durch ein erstes Gewinde 229 an einer Innenseite 227 des ersten Stutzenabschnitts 222 und durch ein zweites Gewinde 230 an einer Außenseite 231 des zweiten Stutzenabschnitts 223 gebildet. Die Dichtung 225 steht in Richtung auf die Achse 224 des Stutzens 208 über eine Innenseite 227 des Stutzens 208 hervor.

Der zweite Stutzenabschnitt 223 ist zumindest teilweise doppelwandig ausgebildet. Der zweite Stutzenabschnitt 223 ist zumindest teilweise gemeinsam mit der Begrenzung 221 des Innenraums 205 der Anschlusseinrichtung 202 vakuumisoliert.

Fig. 6a und 6b zeigen eine frontale und eine seitliche Schnittdarstellung eines Teils der Anschlusseinrichtung 202 aus den Fig. 1 bis 5. Zu erkennen sind die Stange 213, die Außenwand 260, die erste Hülse 261, die zweite Hülse 264, der erste Ringspalt 267, der zweite Ringspalt 268, die Spüleinrichtung 270 und die Messeinrichtung 273.

Fig. 7 zeigt einen Anschluss 100 für einen Fluidtank 1, an welchen die Anschlusseinrichtung 202 aus den Fig. 1 bis 5 angeschlossen werden kann. Der Anschluss 100 umfasst ein Ventil 101 mit:
- einem Ventilraum 102, welcher umlaufend durch eine Mantelwand 103 begrenzt ist, welcher an einer ersten Stirnseite 104 eine erste Ventilöffnung 106 aufweist und welcher an einer zweiten Stirnseite 105 über eine Anschlussöffnung 108 mit einem Innenraum 109 des Fluidtanks 1 verbunden ist,
- einen ersten Ventilstempel 110, welcher innerhalb des Ventilraums 102 angeordnet ist, welcher entlang einer Ventilachse 118 zwischen einer (hier gezeigten) ersten Endposition 112 und einer zweiten Endposition 113 beweglich ist, und welcher in seiner ersten Endposition 112 die erste Ventilöffnung 106 verschließt,
- eine erste Kegelfeder 114, welche den ersten Ventilstempel 110 in dessen erste Endposition 112 vorspannt und welche einen Querschnitt hat, der sich in einer Richtung von der ersten Stirnseite 104 zur zweiten Stirnseite 105 des Ventilraums 102 vergrößert.

Die Mantelwand 103 ist koaxial zum ersten Ventilstempel 110 ausgebildet. Ein Strömungspfad 116 durch die erste Ventilöffnung 106 in den Innenraum 109 des Fluidtanks 1 ist freigegeben, wenn sich der erste Ventilstempel 110 außerhalb seiner ersten Endposition 112 befindet. Der Strömungspfad 116 verläuft durch einen Mantel 136 der ersten Kegelfeder 114.

Das Ventil 101 weist einen ersten Ventilkörper 123 und einen zweiten Ventilkörper 124 auf, welche jeweils um die Ventilachse 118 umlaufend ausgebildet sind. Der Anschluss weist weiterhin eine Aufnahme 134 auf, in welcher der zweite Ventilkörper 124 im montierten Zustand gehalten ist.

Der Anschluss 100 weist weiterhin eine um das Ventil 101 umlaufende Wand 117 auf, welche von dem Ventil 101 zumindest in einem Abschnitt entlang der Ventilachse 118 durch einen Ringspalt 119 beabstandet ist.

Der Ventilraum 102 ist zwischen der ersten Stirnseite 104 und der zweiten Stirnseite 105 durch eine Zwischenwand 122 unterteilt. Die Zwischenwand 122 weist eine zweite Ventilöffnung 107 auf. Der erste Ventilstempel 110 und die erste Kegelfeder 114 sind zwischen der Zwischenwand 122 und der ersten Stirnseite 104 des Ventilraums 102 angeordnet sind. Das Ventil 101 weist weiterhin auf:
- einen zweiten Ventilstempel 111, welcher innerhalb des Ventilraums 102 zwischen der zweiten Stirnseite 105 des Ventilraums 102 und der Zwischenwand 122 angeordnet ist, welcher zwischen einer (hier gezeigten) ersten Endposition 112 und einer zweiten Endposition 113 beweglich ist, und welcher in seiner ersten Endposition 112 die zweite Ventilöffnung 107 verschließt,
- eine zweite Kegelfeder 115, welche innerhalb des Ventilraums 102 zwischen der zweiten Stirnseite 105 des Ventilraums 102 und der Zwischenwand 122 angeordnet ist, welche den zweiten Ventilstempel 111 in dessen erste Endposition 112 vorspannt und welche einen Querschnitt hat, der sich in einer Richtung von der ersten Stirnseite 104 zur zweiten Stirnseite 105 des Ventilraums 102 vergrößert.

Die erste Kegelfeder 114 ist radial außerhalb der zweiten Ventilöffnung 107 an der Mantelwand 103 und an der Zwischenwand 122 gehalten. Die zweite Kegelfeder 115 ist radial außerhalb der Anschlussöffnung 108 an der Mantelwand 103 und an der zweiten Stirnseite 105 des Ventilraums 102 gehalten.

Mit dem gezeigten Anschluss 100 kann ein Verfahren zum Betanken eines Fahrzeugs 4 durchgeführt werden, welches die folgenden Schritte umfasst, die in der angegebenen Reihenfolge durchgeführt werden:
a) Anschließen der Abgabeleitung 201 an den Anschluss 100 sowie Öffnen des Ventils 101,
b) Befüllen des Innenraums 109 des Fluidtanks 1 über den Anschluss 100 mit Fluid aus der Abgabeleitung 201,
c) Schließen des Ventils 101 und Abnehmen der Abgabeleitung 201 von dem Anschluss 100.

Die hier beschriebenen Schritte a) bis c) können jeweils zeitgleich mit dem entsprechenden der Schritte a) bis c) des Verfahrens durchgeführt werden, welches im Zusammenhang mit Fig. 1 beschrieben wurde.

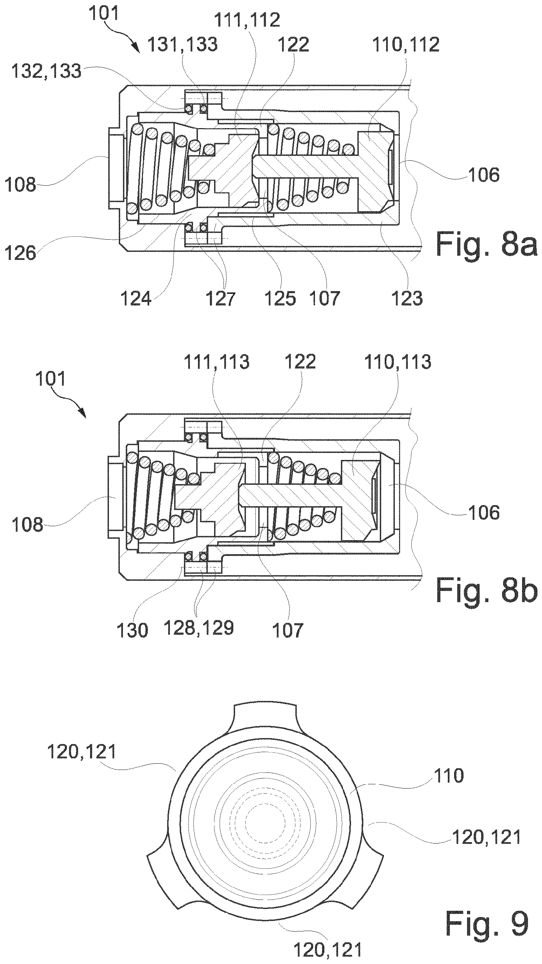

Die Fig. 8a und 8b zeigen das Ventil 101 in zwei verschiedenen Stellungen. Gezeigt sind jeweils der erste Ventilstempel 110 und der zweite Ventilstempel 111 in ihrer ersten Endposition 112 (Fig. 8a) und in ihrer zweiten Endposition 113. Eingezeichnet sind jeweils die erste Ventilöffnung 106, die zweite Ventilöffnung 107 und die Anschlussöffnung 108.

Das Ventil 101 weist einen den Ventilkörper 123 auf, welcher um die Ventilachse 118 umlaufend ausgebildet ist und welcher in einem montierten Zustand durch eine erste Schraubverbindung 125 gehalten ist, welche koaxial zur Ventilachse 118 ausgebildet ist. Weiterhin weist das Ventil 101 den zweiten Ventilkörper 124 auf, welcher um die Ventilachse 118 umlaufend ausgebildet ist, an welchem der erste Ventilkörper 123 in dem montierten Zustand über die erste Schraubverbindung 125 gehalten ist und welcher über eine zweite Schraubverbindung 126 gehalten ist.

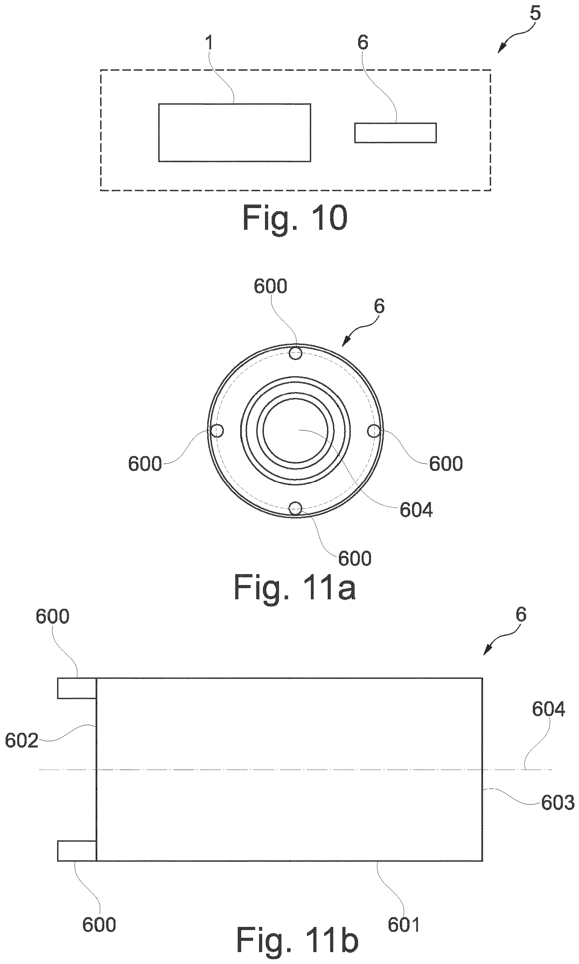

Der erste Ventilkörper 123 weist einen um die Ventilachse 118 umlaufenden Flansch 127 auf, in welchem mehrere Eingriffe 128 für ein jeweiliges Eingriffselement 600 eines (in den Fig. 10, 11a und 11b gezeigten) Schraubwerkzeugs 6 vorgesehen sind, so dass die erste Schraubverbindung 125 ausgebildet und gelöst werden kann, indem das Schraubwerkzeug 6 um die Ventilachse 118 rotiert wird, während die Eingriffselemente 600 des Schraubwerkzeugs 6 in die entsprechenden Eingriffe 128 des ersten Ventilkörpers 123 eingreifen. Die Eingriffe 128 des ersten Ventilkörpers 123 sind jeweils als ein Durchgangsloch 129 mit einer parallel zur Ventilachse 118 ausgerichteten Achse 130 ausgebildet.

Der zweite Ventilkörper 124 weist mehrere Eingriffe 128 für ein jeweiliges der Eingriffselemente 600 des Schraubwerkzeugs 6 auf, so dass die zweite Schraubverbindung 126 ausgebildet und gelöst werden kann, indem das Schraubwerkzeug 6 um die Ventilachse 118 rotiert wird, während die Eingriffselemente 600 des Schraubwerkzeugs 6 in die entsprechenden Eingriffe 128 des zweiten Ventilkörpers 124 eingreifen. Die Eingriffe 128 des zweiten Ventilkörpers 123 sind jeweils als ein Durchgangsloch 129 mit einer parallel zur Ventilachse 118 ausgerichteten Achse 130 ausgebildet. Der zweite Ventilkörper 124 weist einen um die Ventilachse 118 umlaufenden Flansch 127 auf, in welchem die Eingriffe 128 des zweiten Ventilkörpers 124 ausgebildet sind.

An einer ersten Seite 131 und an einer zweiten Seite 132 des Flansches 127 des zweiten Ventilkörpers 124 ist jeweils eine um die Ventilachse 118 umlaufende Dichtung 133 angeordnet.

Fig. 9 zeigt den ersten Ventilstempel 110 in einer Frontalansicht. Zu erkennen ist, dass der erste Ventilstempel 110 radial außen liegend mehrere Ausnehmungen 120 aufweist, mit welchen zwischen dem ersten Ventilstempel 110 und der Mantelwand 103jeweils ein Durchgang 121 gebildet ist.

Fig. 10 zeigt ein Set 5 umfassend den Fluidtank 1 aus Fig. 7 sowie das Schraubwerkzeug 6.

Fig. 11a und 11b zeigen eine Frontalansicht und eine seitliche Schnittdarstellung des Schraubwerkzeugs 6 aus Fig. 10. Das Schraubwerkzeug 6 weist einen hohlen Zylinderkörper 601 auf, welcher an einer ersten Stirnseite 602 die Eingriffselemente 600 aufweist. Die Eingriffselemente 600 sind Vorsprünge, welche in einer Richtung parallel zu einer Achse 604 des Zylinderkörpers 601 über die erste Stirnseite 602 des Zylinderkörpers 601 hinausstehen. Eingezeichnet ist weiterhin eine zweite Stirnseite 603 des Zylinderkörpers 601. Die Eingriffe 128 des ersten Ventilkörpers 123 und des zweiten Ventilkörpers 124 sind für das Schraubwerkzeug 6 über den Ringspalt 119 zugänglich.

### Bezugszeichenliste

- 1: Fluidtank
- 2: Vorrichtung
- 3: Anordnung
- 4: Fahrzeug
- 5: Set
- 6: Schraubwerkzeug
- 100: Anschluss
- 101: Ventil
- 102: Ventilraum
- 103: Mantelwand
- 104: erste Stirnseite
- 105: zweite Stirnseite
- 106: erste Ventilöffnung
- 107: zweite Ventilöffnung
- 108: Anschlussöffnung
- 109: Innenraum
- 110: erster Ventilstempel
- 111: zweiter Ventilstempel
- 112: erste Endposition
- 113: zweite Endposition
- 114: erste Kegelfeder
- 115: zweite Kegelfeder
- 116: Strömungspfad
- 117: Wand
- 118: Ventilachse
- 119: Ringspalt
- 120: Ausnehmung
- 121: Durchgang
- 122: Zwischenwand
- 123: erster Ventilkörper
- 124: zweiter Ventilkörper
- 125: erste Schraubverbindung
- 126: zweite Schraubverbindung
- 127: Flansch
- 128: Eingriff
- 129: Durchgangsloch
- 130: Achse
- 131: erste Seite
- 132: zweite Seite
- 133: Dichtung
- 134: Aufnahme
- 135: Anschlussende
- 136: Mantel
- 200: Fluidquelle
- 201: Abgabeleitung
- 202: Anschlusseinrichtung
- 203: erstes Ende
- 204: zweites Ende
- 205: Innenraum
- 206: Ventil
- 207: Ventilantrieb
- 208: Stutzen
- 209: erstes Ende
- 210: zweites Ende
- 211: Hauptachse
- 212: Winkel
- 213: Stange
- 214: Zylinder
- 215: Kolben
- 216: Ventilstempel
- 217: erste Endposition
- 218: zweite Endposition
- 219: Ventilöffnung
- 220: Rohr
- 221: Begrenzung
- 222: erster Stutzenabschnitt
- 223: zweiter Stutzenabschnitt
- 224: Achse
- 225: Dichtung
- 226: Schraubverbindung
- 227: Innenseite
- 228: ringförmige Kappe
- 229: erstes Gewinde
- 230: zweites Gewinde
- 231: Außenseite
- 232: Ventilachse
- 233: Zylinderfeder
- 234: Ventilteller
- 235: Ventilschaft
- 236: Flansch
- 238: Ausnehmung
- 239: Durchgang
- 240: Strömungspfad
- 241: Mantel
- 242: erster Stangenabschnitt
- 243: zweiter Stangenabschnitt
- 244: dritter Stangenabschnitt
- 245: vierter Stangenabschnitt
- 246: Steckverbindung
- 247: Balg
- 248: Justierelement
- 249: Schraubverbindung
- 250: Gehäuse
- 251: Ausgleichselement
- 252: Balg
- 253: Achse
- 254: erster Gehäuseabschnitt
- 255: zweiter Gehäuseabschnitt
- 256: Überlappungsbereich
- 257: Mündung
- 258: Zwischenraum
- 259: Ventilkörper
- 260: Außenwand
- 261: erste Hülse
- 262: erste Seite
- 263: zweite Seite
- 264: zweite Hülse
- 265: erste Seite
- 266: zweite Seite
- 267: erster Ringspalt
- 268: zweiter Ringspalt
- 269: Aufnahme
- 270: Spüleinrichtung
- 271: erste Dichtung
- 272: zweite Dichtung
- 273: Messeinrichtung
- 274: Verrastelement
- 600: Eingriffselement
- 601: Zylinderkörper
- 602: erste Stirnseite
- 603: zweite Stirnseite
- 604: Achse

## Patentansprüche

1. Vorrichtung (2) zum Einleiten eines Fluids in einen Anschluss (100), umfassend
- eine Fluidquelle (200),
- eine Abgabeleitung (201), und
- eine zumindest teilweise vakuumisolierte Anschlusseinrichtung (202) mit einem Stutzen (208) zum Anschließen der Abgabeleitung (201) an den Anschluss (100),
wobei die Abgabeleitung (201) mit einem ersten Ende (203) an der Fluidquelle (200) und mit einem zweiten Ende (204) an einen Innenraum (205) der Anschlusseinrichtung (202) angebunden ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
wobei das Ventil (206) und der Ventilantrieb (207) auf einer Hauptachse (211) der Anschlusseinrichtung (202) voneinander beabstandet angeordnet sind und über eine entlang der Hauptachse (211) ausgebildete Stange (213) mechanisch miteinander gekoppelt sind, wobei die Stange (213) mehrere Stangenabschnitte (242,243,244,245) aufweist, wobei ein erster der Stangenabschnitte (242) näher an dem Ventil (206) angeordnet ist als ein zweiter der Stangenabschnitte (243), und wobei der erste Stangenabschnitt (242) eine höhere thermische Leitfähigkeit hat als der zweite der Stangenabschnitt (243).

2. Vorrichtung (2) nach Anspruch 1, wobei der erste Stangenabschnitt (242) und der zweite Stangenabschnitt (243) mittels einer Steckverbindung (246) miteinander verbunden sind.

3. Vorrichtung (2) nach einem der vorstehenden Ansprüche, wobei der zweite Stangenabschnitt (243) hohl ist.

4. Vorrichtung (2) nach einem der vorstehenden Ansprüche, wobei der erste Stangenabschnitt (242) unmittelbar an das Ventil (206) angebunden ist.

5. Vorrichtung (2) nach einem der vorstehenden Ansprüche, wobei die Stange (213) zwischen dem Ventilantrieb (207) und dem zweiten Stangenabschnitt (243) weiterhin einen dritten Stangenabschnitt (244) aufweist, welcher einen Balg (247) zur Abdichtung aufweist.

6. Vorrichtung (2) nach einem der vorstehenden Ansprüche, wobei die Stange (213) zwischen dem Ventilantrieb (207) und dem zweiten Stangenabschnitt (243) weiterhin einen vierten Stangenabschnitt (245) aufweist, welcher ein Justierelement (248) zum Justieren einer Länge der Stange (213) aufweist.

7. Vorrichtung (2) nach einem der vorstehenden Ansprüche, wobei der Ventilantrieb (207) durch eine Schraubverbindung (249) an einem Gehäuse (250) der Anschlusseinrichtung (202) gehalten ist, und wobei die Stange (213) und das Ventil (206) aus dem Gehäuse (250) entnehmbar ist, wenn die Schraubverbindung (249) gelöst ist.

8. Anordnung (3) umfassend eine Vorrichtung (2) nach einem der vorstehenden Ansprüche sowie den Anschluss (100) und einen daran angebundenen Fluidtank (1), wobei die Anschlusseinrichtung (202) der Vorrichtung (2) an den Anschluss (100) angebunden ist.

9. Verfahren zum Betanken eines Fahrzeugs (4) mit einem Fluid mit einer Vorrichtung (2) nach einem der Ansprüche 1 bis 7, wobei das Fahrzeug (4) den Anschluss (100) und einen daran angebundenen Fluidtank (1) aufweist, und wobei das Verfahren die folgenden Schritte umfasst, welche in der angegebenen Reihenfolge durchgeführt werden:
a) über die Anschlusseinrichtung (202) Anschließen der Abgabeleitung (201) an den Anschluss (100) des Fahrzeugs (4) sowie Öffnen des Ventils (206) der Anschlusseinrichtung (202),
b) Befüllen des Fluidtanks (1) des Fahrzeugs (4) über die Abgabeleitung (201) und die Anschlusseinrichtung (202) mit Fluid aus der Fluidquelle (200),
c) Schließen des Ventils (206) der Anschlusseinrichtung (202) sowie Trennen der Abgabeleitung (201) von dem Anschluss (100) des Fahrzeugs (4).

10. Anschlusseinrichtung (202) mit einem Stutzen (208) zum Anschließen einer Leitung (201) an einen Anschluss (100), wobei ein Innenraum (205) der Anschlusseinrichtung (202) an die Leitung anbindbar ist, wobei die Anschlusseinrichtung (202) ein Ventil (206) und einen mit dem Ventil (206) gekoppelten Ventilantrieb (207) umfasst, wobei der Stutzen (208) an einem ersten Ende (209) offen ist und an einem zweiten Ende (210) über das Ventil (206) mit dem Innenraum (205) der Anschlusseinrichtung (202) verbunden ist,
wobei das Ventil (206) und der Ventilantrieb (207) auf einer Hauptachse (211) der Anschlusseinrichtung (202) voneinander beabstandet angeordnet sind und über eine entlang der Hauptachse (211) ausgebildete Stange (213) mechanisch miteinander gekoppelt sind, wobei die Stange (213) mehrere Stangenabschnitte (242,243,244,245) aufweist, wobei ein erster der Stangenabschnitte (242) näher an dem Ventil (206) angeordnet ist als ein zweiter der Stangenabschnitte (243), und wobei der erste Stangenabschnitt (242) eine höhere thermische Leitfähigkeit hat als der zweite der Stangenabschnitt (243).
